# EUROPEAN PATENT APPLICATION

(11) **EP 4 628 244 A1**
(43) Date of publication of application: **08.10.2025**
(21) Application number: 24770811.8
(22) Date of filing: 08.03.2024
(51) Int. Cl.: B23K 26/21, B23K 26/244, F02B 29/04

(54) **METAL MEMBER JOINING METHOD AND METAL MEMBER**

(30) Priority: 15.03.2023 JP 2023040922; 27.10.2023 JP 2023184581; 27.10.2023 JP 2023184407; 15.12.2023 JP 2023212442
(71) Applicant: AISIN CORPORATION, Kariya-shi, Aichi 448-8650 (JP)
(72) Inventor: SASAKI, Yu, Kariya-shi, Aichi 448-8650 (JP); OTSUKA, Kosuke, Kariya-shi, Aichi 448-8650 (JP); USHIDA, Hideharu, Kariya-shi, Aichi 448-8650 (JP); NAKAJIMA, Takuya, Kariya-shi, Aichi 448-8650 (JP)
(74) Representative: Kramer Barske Schmidtchen Patentanwälte PartG mbB
(86) International application number: PCT/JP2024/009185
(87) International publication number: WO 2024/190705

(57) **Abstract**

A joining method for a metal member 100 includes step S1 of bringing an end of a side surface 22a of a second metal member 2 on a radiation direction side into contact such that part of a first surface 12a of a first metal member 1 is exposed, and step S3 of joining the first metal member 1 and the second metal member 2 by welding together by radiating an energy beam L toward an end surface portion 221a of the second metal member 2.

## Description

### TECHNICAL FIELD

The present invention relates to a metal member joining method and a metal member.

### BACKGROUND ART

Conventionally, metal member joining methods are known. The metal member joining method is disclosed in, for example, Japanese Unexamined Patent Application Publication No. 2010-94702 (JP 2010-94702 A).

JP 2010-94702 A discloses a metal plate joining method in which a lower metal plate (first metal member) and an upper metal plate (second metal member) are welded using a laser (energy beam). In this metal plate joining method, both the upper metal plate and the lower metal plate are held by a jig with the upper metal plate laid over the lower metal plate. In this metal plate joining method, the laser is radiated onto the upper metal plate to melt the upper metal plate, and the laser is radiated onto the lower metal plate through the molten upper metal plate to melt the lower metal plate. In this metal plate joining method, the laser penetrates both the molten upper and lower metal plates. Therefore, in the metal plate joining method, metal vapor generated when the lower metal plate is melted is released into a space below the lower metal plate by the laser penetrating both the upper metal plate and the lower metal plate.

### Related Art Documents

### Patent Documents

Patent Document 1: Japanese Unexamined Patent Application Publication No. 2010-94702 (JP 2010-94702 A)

### SUMMARY OF THE INVENTION

### Problem to be Solved by the Invention

In the metal plate joining method described in JP 2010-94702 A, however, until the laser penetrates both the upper metal plate and the lower metal plate, the metal vapor generated when the lower metal plate is melted cannot be released into the space below the lower metal plate and can hardly be released into a space above the upper metal plate due to the molten upper metal plate. In this case, the metal vapor generated when the lower metal plate is melted enters the molten metal of the molten upper metal plate. For this reason, the metal plate joining method described in JP 2010-94702 A has a problem in that, due to the entered metal vapor, air holes (blowholes) are formed in a joint portion formed by solidification of the molten metal of each of the molten upper and lower metal plates.

The present invention has been made to solve the above problem, and one object of the present invention is to provide a metal member joining method and a metal member in which formation of blowholes in a joint portion formed by solidification of molten metal of metal members can be suppressed by suppressing entry of metal vapor into the molten metal.

### Means for Solving the Problem

In order to achieve the above object, a metal member joining method according to a first aspect of the present invention is a metal member joining method for welding a first metal member and a second metal member using an energy beam. The metal member joining method includes: a step of bringing an end on a radiation direction side for a side surface of the second metal member along a radiation direction of the energy beam into contact with a first surface of the first metal member along a direction orthogonal to the radiation direction such that part of the first surface is exposed; and a step of joining the first metal member and the second metal member by welding together by radiating the energy beam toward an end surface portion on a side surface side in a second surface that extends along a direction orthogonal to the radiation direction and is continuous with an end opposite to the radiation direction side for the side surface of the second metal member. The description "along a direction orthogonal to the radiation direction of the energy beam" includes the direction orthogonal to the radiation direction and a range of the radiation direction of the energy beam in which the first metal member and the second metal member can be welded, except the direction orthogonal to the radiation direction.

As described above, the metal member joining method according to the first aspect of the present invention includes the step of joining the first metal member and the second metal member by welding together by radiating the energy beam toward the end surface portion of the second metal member. Therefore, the metal vapor of the first metal member and the second metal member generated by the energy beam radiated toward the end surface portion of the second metal member can be discharged to a space that exposes the first surface of the first metal member. Thus, the metal vapor generated from the first metal member and the second metal member can easily be discharged to an external space outside the metal member, thereby suppressing the entry of the metal vapor into the molten metal of the second metal member. As a result, the entry of the metal vapor into the molten metal of the second metal member included in the metal member can be suppressed, thereby suppressing the formation of blowholes in the joint portion formed by the solidification of the molten metal of the first metal member and the second metal member included in the metal member.

A metal member according to a second aspect of the present invention includes: a first metal member including a surface along one direction and having a shape with a predetermined thickness in another direction orthogonal to the one direction; a second metal member including a slit passing through the second metal member in the other direction and a pair of side surfaces facing each other in a direction orthogonal to both the other direction and a direction in which the slit extends; and a welded portion disposed so as to fill a space within the slit enclosed by the surface of the first metal member and the pair of side surfaces, and formed by melting and solidifying the first metal member and the second metal member.

As described above, the metal member according to the second aspect of the present invention includes the welded portion disposed so as to fill the space within the slit enclosed by the surface of the first metal member and the pair of side surfaces, and formed by melting and solidifying the first metal member and the second metal member. Therefore, when the welded portion is welded, the welded portion is formed by directly radiating the energy beam to an exposed portion of the first surface of the first metal member without intermediation of the second metal member. Thus, the metal vapor generated by radiating the energy beam to the first surface of the first metal member can be discharged to a space that is not filled with the molten metal of the second metal member melted by the energy beam. Accordingly, the metal vapor generated from the first metal member can easily be discharged to the external space outside the metal member, thereby suppressing the entry of the metal vapor generated from the first metal member into the molten metal of the second metal member. Since the side surface and the second surface of the second metal member are in contact with the external space outside the metal member, the metal vapor generated by radiating the energy beam to the end surface portion of the second metal member is directly discharged to the external space. Therefore, it is possible to provide the metal member obtained by joining with the metal member joining method in which the entry of the metal vapor into the molten metal of the second metal member included in the metal member can be suppressed, thereby suppressing the formation of blowholes in the joint portion formed by the solidification of the molten metal of the first metal member and the second metal member included in the metal member.

### Effects of the Invention

According to the present invention, as described above, the formation of the blowholes in the joint portion formed by the solidification of the molten metal of the metal members can be suppressed by suppressing the entry of the metal vapor into the molten metal.

### BRIEF DESCRIPTION OF THE DRAWINGS

[FIG. 1] FIG. 1 is a perspective view showing a metal member obtained by joining a first metal member and a second metal member by a metal member joining method according to a first embodiment.
[FIG. 2] FIG. 2 is a perspective view showing the first metal member before joining in the metal member obtained by joining the first metal member and the second metal member by the metal member joining method according to the first embodiment.
[FIG. 3] FIG. 3 is a perspective view showing the second metal member before joining in the metal member obtained by joining the first metal member and the second metal member by the metal member joining method according to the first embodiment.
[FIG. 4] FIG. 4 is a sectional view taken along line IV-IV in FIG. 1.
[FIG. 5] FIG. 5 is a flowchart showing the metal member joining method according to the first embodiment.
[FIG. 6] FIG. 6 is a perspective view showing a state in which the first metal member and the second metal member are held in the metal member joining method according to the first embodiment.
[FIG. 7] FIG. 7 is a perspective view showing a state in which laser welding is started in the metal member joining method according to the first embodiment.
[FIG. 8] FIG. 8 is a sectional view taken along line VIII-VIII in FIG. 7.
[FIG. 9] FIG. 9 is a perspective view showing a state in which the laser welding is completed in the metal member joining method according to the first embodiment.
[FIG. 10] FIG. 10 is a perspective view showing an application example in which the metal member joining method according to the first embodiment is applied to joining of a valve body and a plate.
[FIG. 11] FIG. 11 is a sectional view taken along line XI-XI in FIG. 10.
[FIG. 12] FIG. 12 is a perspective view showing a state in which the joining of the valve body and the plate is completed by the metal member joining method according to the first embodiment.
[FIG. 13] FIG. 13 is a sectional view taken along line XIII-XIII in FIG. 12.
[FIG. 14] FIG. 14 is a flowchart showing a manifold joining method in the application example of the metal member joining method according to the first embodiment.
[FIG. 15] FIG. 15 is a perspective view showing a metal member obtained by joining a first metal member and a second metal member by a metal member joining method according to a second embodiment.
[FIG. 16] FIG. 16 is a sectional view showing part of the first metal member and the second metal member before joining by the metal member joining method according to the second embodiment.
[FIG. 17] FIG. 17 is a sectional view showing the first metal member and the second metal member before joining at a portion different from that in FIG. 16.
[FIG. 18] FIG. 18 is a sectional view taken along line XVIII-XVIII in FIG. 15.
[FIG. 19] FIG. 19 is a flowchart showing the metal member joining method according to the second embodiment.
   [FIG. 20] FIG. 20 is a perspective view showing a state in which the second metal member is fitted to the first metal member in the metal member joining method according to the second embodiment.
   [FIG. 21] FIG. 21 is a perspective view showing a state in which the first metal member and the second metal member are held in the metal member joining method according to the second embodiment.
   [FIG. 22] FIG. 22 is a perspective view showing a state in which laser welding is started in the metal member joining method according to the second embodiment.
   [FIG. 23] FIG. 23 is a perspective view showing an application example in which the metal member joining method according to the second embodiment is applied to joining of a valve body and a plate.
   [FIG. 24] FIG. 24 is a sectional view taken along line XXIV-XXIV in FIG. 23.
[FIG. 25] FIG. 25 is a perspective view showing a state in which the joining of the valve body and the plate is completed by the metal member joining method according to the second embodiment.
[FIG. 26] FIG. 26 is a sectional view taken along line XXVI-XXVI in FIG. 25.
[FIG. 27] FIG. 27 is a flowchart showing a manifold joining method in the application example of the metal member joining method according to the second embodiment.
[FIG. 28] FIG. 28 is a perspective view showing a metal member obtained by joining a first metal member and a second metal member by a metal member joining method according to a third embodiment.
[FIG. 29] FIG. 29 is a sectional view showing part of the first metal member and the second metal member before joining by the metal member joining method according to the third embodiment.
[FIG. 30] FIG. 30 is a sectional view showing the first metal member and the second metal member before joining at a portion different from that in FIG. 29.
[FIG. 31] FIG. 31 is a sectional view taken along line XXXI-XXXI in FIG. 28.
[FIG. 32] FIG. 32 is a flowchart showing the metal member joining method according to the third embodiment.
[FIG. 33] FIG. 33 is a perspective view showing a state in which the first metal member and the second metal member are held after the second metal member is fitted to the first metal member in the metal member joining method according to the third embodiment.
[FIG. 34] FIG. 34 is a perspective view showing a state in which laser welding is started in the metal member joining method according to the third embodiment.
[FIG. 35] FIG. 35 is a perspective view showing a metal member obtained by joining a first metal member and a second metal member by a metal member joining method according to a fourth embodiment.
[FIG. 36] FIG. 36 is a perspective view showing the first metal member before joining by the metal member joining method according to the fourth embodiment.
[FIG. 37] FIG. 37 is a perspective view showing the second metal member before joining by the metal member joining method according to the fourth embodiment.
[FIG. 38] FIG. 38 is a sectional view taken along line XXXVIII-XXXVIII in FIG. 35.
[FIG. 39] FIG. 39 is a sectional view taken along line XXXIX-XXXIX in FIG. 38 immediately before a start position is reached.
[FIG. 40] FIG. 40 is a sectional view taken along line XXXIX-XXXIX in FIG. 38 when the start position is reached.
[FIG. 41] FIG. 41 is a flowchart showing the metal member joining method according to the fourth embodiment.
[FIG. 42] FIG. 42 is a perspective view showing a state in which the second metal member is fitted to the first metal member in the metal member joining method according to the fourth embodiment.
[FIG. 43] FIG. 43 is a perspective view showing a state in which the first metal member and the second metal member are held in the metal member joining method according to the fourth embodiment.
[FIG. 44] FIG. 44 is a perspective view showing a state in which laser welding is started in the metal member joining method according to the fourth embodiment.
[FIG. 45] FIG. 45 is a perspective view showing a state in which the laser welding has reached a weld overlap region in the metal member joining method according to the fourth embodiment.
[FIG. 46] FIG. 46 is a perspective view showing an application example in which the metal member joining method according to the fourth embodiment is applied to joining of a valve body and a plate.
[FIG. 47] FIG. 47 is a sectional view taken along line XLVII-XLVII in FIG. 46.
[FIG. 48] FIG. 48 is a perspective view showing a state in which the joining of the valve body and the plate is completed by the metal member joining method according to the fourth embodiment.
[FIG. 49] FIG. 49 is a sectional view taken along line XLIX-XLIX in FIG. 48.
[FIG. 50] FIG. 50 is a flowchart showing a manifold joining method in the application example of the metal member joining method according to the fourth embodiment.
[FIG. 51] FIG. 51 is a perspective view showing a metal member obtained by joining a first metal member and a second metal member by a metal member joining method according to a fifth embodiment.
[FIG. 52] FIG. 52 is a perspective view showing the first metal member before joining by the metal member joining method according to the fifth embodiment.
[FIG. 53] FIG. 53 is a sectional view of a state in which the second metal member is fitted to the first metal member in the metal member joining method according to the fifth embodiment.
[FIG. 54] FIG. 54 is a perspective view showing the second metal member before joining by the metal member joining method according to the fifth embodiment.
[FIG. 55] FIG. 55 is a sectional view taken along line LV-LV in FIG. 51.
[FIG. 56] FIG. 56 is a flowchart showing the metal member joining method according to the fifth embodiment.
[FIG. 57] FIG. 57 is a perspective view showing a state in which the second metal member is fitted to the first metal member in the metal member joining method according to the fifth embodiment.
[FIG. 58] FIG. 58 is a perspective view showing a state in which the first metal member and the second metal member are held in the metal member joining method according to the fifth embodiment.
[FIG. 59] FIG. 59 is a perspective view showing a state in which laser welding is started in the metal member joining method according to the fifth embodiment.
[FIG. 60] FIG. 60 is a perspective view showing a metal member obtained by joining a first metal member and a second metal member by a first metal member joining method according to a sixth embodiment.
[FIG. 61] FIG. 61 is a perspective view showing the first metal member before joining in the metal member obtained by joining the first metal member and the second metal member by the first metal member joining method according to the sixth embodiment.
[FIG. 62] FIG. 62 is a perspective view showing the second metal member before joining in the metal member obtained by joining the first metal member and the second metal member by the first metal member joining method according to the sixth embodiment.
[FIG. 63] FIG. 63 is a sectional view taken along line LXIII-LXIII in FIG. 60.
[FIG. 64] FIG. 64 is a flowchart showing the first metal member joining method according to the sixth embodiment.
[FIG. 65] FIG. 65 is a perspective view showing a state in which the first metal member and the second metal member are held in the first metal member joining method according to the sixth embodiment.
[FIG. 66] FIG. 66 is a perspective view showing a state in which laser welding is started in the first metal member joining method according to the sixth embodiment.
[FIG. 67] FIG. 67 is a sectional view taken along line LXVII-LXVII in FIG. 66.
[FIG. 68] FIG. 68 is a perspective view showing a state in which the laser welding is completed in the first metal member joining method according to the sixth embodiment.
[FIG. 69] FIG. 69 is a diagram showing a manifold body of a refrigerant manifold manufactured by the first joining method according to the sixth embodiment and functional devices connected to the manifold body.
[FIG. 70] FIG. 70 is a plan view showing a plate member and the manifold body of the refrigerant manifold manufactured by the first joining method according to the sixth embodiment.
[FIG. 71] FIG. 71 is a plan view showing the plate member and the manifold body joined together in the refrigerant manifold manufactured by the first joining method according to the sixth embodiment.
[FIG. 72] FIG. 72 is a sectional view taken along line LXXII-LXXIII in FIG. 71.
[FIG. 73] FIG. 73 is a perspective view showing a first metal member and a second metal member to be joined by a second metal member joining method according to the sixth embodiment.
[FIG. 74] FIG. 74 is a plan view showing a plate member and a manifold body of a refrigerant manifold manufactured by the second joining method according to the sixth embodiment.
[FIG. 75] FIG. 75 is a plan view showing the plate member and the manifold body joined together in the refrigerant manifold manufactured by the second joining method according to the sixth embodiment.
[FIG. 76] FIG. 76 is a sectional view taken along line LXXVI-LXXVI in FIG. 75.
[FIG. 77] FIG. 77 is a perspective view showing an application example in which a metal member joining method according to a reference example is applied to joining of a valve body and a plate.
[FIG. 78] FIG. 78 is a sectional view taken along line LXXVIII-LXXVIII in FIG. 77.
[FIG. 79] FIG. 79 is a perspective view showing a state in which the joining of the valve body and the plate is completed by the metal member joining method according to the reference example.
[FIG. 80] FIG. 80 is a sectional view taken along line LXXX-LXXX in FIG. 79.
[FIG. 81] FIG. 81 is a flowchart showing a manifold joining method in the application example of the metal member joining method according to the reference example.
[FIG. 82] FIG. 82 is a perspective view showing a state in which laser welding is started in a metal member joining method according to a first modification of the first embodiment.
[FIG. 83] FIG. 83 is a perspective view showing a state in which laser welding is started in a metal member joining method according to a second modification of the first embodiment.
[FIG. 84] FIG. 84 is a perspective view showing a state in which laser welding is started in a metal member joining method according to a third modification of the first embodiment.
[FIG. 85] FIG. 85 is a perspective view showing a metal member obtained by joining a first metal member and a second metal member by a metal member joining method according to a fourth modification of the second embodiment.
[FIG. 86] FIG. 86 is a perspective view showing a first metal member of a metal member according to a fifth modification of the fourth embodiment.
[FIG. 87] FIG. 87 is a sectional view taken along line LXXXVII-LXXXVII in FIG. 86.
[FIG. 88] FIG. 88 is a perspective view showing a first metal member of a metal member according to a sixth modification of the fourth embodiment.
[FIG. 89] FIG. 89 is a sectional view taken along line LXXXIX-LXXXIX in FIG. 88.
[FIG. 90] FIG. 90 is a perspective view showing a first metal member and a second metal member of a metal member according to a seventh modification of the fourth embodiment.
[FIG. 91] FIG. 91 is a sectional view taken along line XCI-XCI in FIG. 90.
[FIG. 92] FIG. 92 is a perspective view showing a first metal member of a metal member according to an eighth modification of the fifth embodiment.
[FIG. 93] FIG. 93 is a plan view showing a manifold body of a refrigerant manifold according to a ninth modification of the sixth embodiment.
[FIG. 94] FIG. 94 is a plan view showing a manifold body of a refrigerant manifold according to a tenth modification of the sixth embodiment.

### MODES FOR CARRYING OUT THE INVENTION

Hereinafter, embodiments of the present invention will be described with reference to the drawings.

### [First Embodiment]

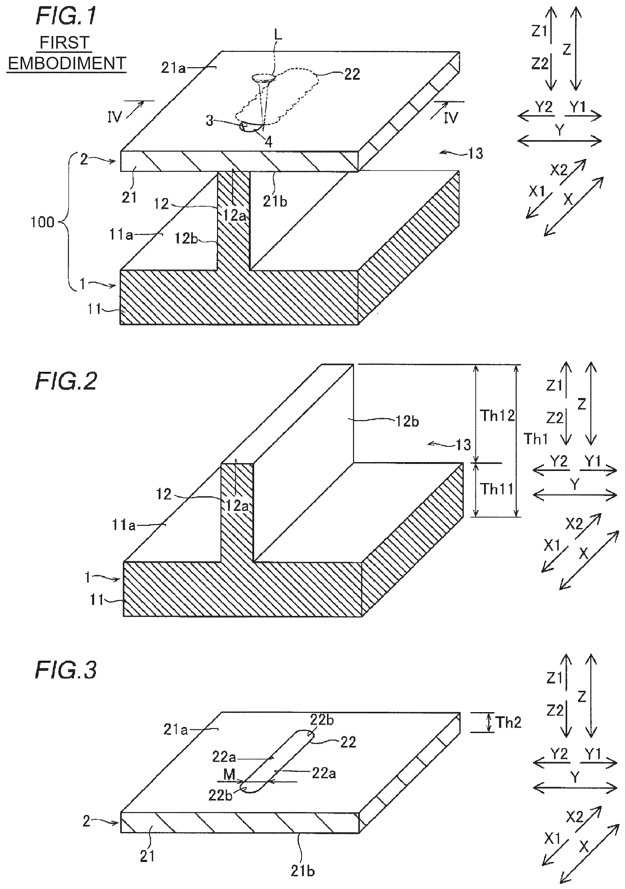

The configuration of a joining method for a metal member 100 according to a first embodiment will be described with reference to FIGS. 1 to 9.

As shown in FIG. 1, the joining method for the metal member 100 is a laser welding method in which a first metal member 1 and a second metal member 2 are laid on top of each other and welded with a laser L (shown by a long dashed double-short dashed line in FIG. 1) to process them into the metal member 100. The metal member 100 formed by the laser welding includes the first metal member 1, the second metal member 2, a welded portion 3, and a non-welded portion 4. The configurations of the first metal member 1, the second metal member 2, the welded portion 3, and the non-welded portion 4 will be described below.

A direction in which the first metal member 1 and the second metal member 2 are arranged is defined as a Z direction, the Z direction toward the second metal member 2 is defined as a Z1 direction, and the Z direction toward the first metal member 1 is defined as a Z2 direction. A direction in which a slit 22 of the second metal member 2 described later extends is defined as an X direction, one direction of the X direction is defined as an X1 direction, and the other direction of the X direction is defined as an X2 direction. A direction orthogonal to both the X direction and the Z direction is defined as a Y direction, one direction of the Y direction is defined as a Y1 direction, and the other direction of the Y direction is defined as a Y2 direction. The Z2 direction is an example of a "radiation direction" in the claims.

### (First Metal Member)

The first metal member 1 is a molded product made of metal such as aluminum or iron. As shown in FIG. 2, the first metal member 1 is a member having a thickness Th1 larger than a thickness Th2 (see FIG. 3) of the second metal member 2 in the Z direction. For ease of description, FIG. 2 shows a state before the first metal member 1 and the second metal member 2 are welded.

Specifically, the first metal member 1 includes a bottom 11, a protrusion 12, and a recess 13. The bottom 11 and the protrusion 12 are formed integrally. The recess 13 is an example of a "second channel recess" in the claims.

The bottom 11 is a portion of the first metal member 1 on the Z2 direction side of the protrusion 12. The bottom 11 is a plate-shaped portion having a thickness Th11 in the Z direction and extending along the X direction and the Y direction. The bottom 11 has a bottom surface 11a on the Z1 direction side. The bottom surface 11a is a surface of the bottom 11 other than the protrusion 12.

The protrusion 12 is a portion of the first metal member 1 on the Z1 direction side of the bottom 11. The protrusion 12 is a portion protruding from the bottom surface 11a of the bottom 11 in the Z1 direction. That is, the protrusion 12 has a thickness Th12 in the Z direction. The protrusion 12 has a tip surface 12a at the end on the Z1 direction side. The tip surface 12a is a flat surface extending along the X direction and the Y direction. The tip surface 12a is a portion that comes into contact with the second metal member 2 in the Z direction. The protrusion 12 has side surfaces 12b in a direction orthogonal to the Z direction. The side surface 12b extends along the X direction and the Z direction. The tip surface 12a is an example of a "first surface" in the claims. The thickness Th12 is an example of a "predetermined thickness" in the claims.

The recess 13 is a portion recessed in the Z2 direction from the tip surface 12a. The recess 13 adjoins the protrusion 12 in a direction orthogonal to the Z2 direction. That is, the recess 13 is formed by the bottom surface 11a of the bottom 11 and the side surface 12b of the protrusion 12. A plurality of recesses 13 is provided in the first metal member 1.

### (Second Metal Member)

As shown in FIG. 3, the second metal member 2 is a molded product made of metal such as aluminum or iron. The second metal member 2 is a plate-shaped member having the thickness Th2 smaller than the thickness Th1 (see FIG. 2) of the first metal member 1 in the Z direction. For ease of description, FIG. 3 shows a state before the first metal member 1 and the second metal member 2 are welded.

Specifically, the second metal member 2 includes a plate-shaped portion 21 and the slit 22.

The plate-shaped portion 21 is a portion of the second metal member 2 other than the slit 22. The plate-shaped portion 21 is a portion in a plate shape having the thickness Th2 in the Z direction and extending along the X direction and the Y direction. The plate-shaped portion 21 has a front surface 21a on the Z1 direction side. The front surface 21a is a flat surface extending along the X direction and the Y direction. The plate-shaped portion 21 has a back surface 21b on the Z2 direction side. The back surface 21b is a flat surface extending along the X direction and the Y direction. A portion of the back surface 21b near the slit 22 is a portion that comes into contact with the tip surface 12a of the protrusion 12 of the first metal member 1. The front surface 21a is an example of a "second surface" in the claims.

The slit 22 is an elongated hole passing through the second metal member 2 from the front surface 21a in the Z2 direction and extending in the X direction (or the Y direction). The slit 22 has a pair of side surfaces 22a and a pair of end surfaces 22b. The pair of side surfaces 22a faces each other in the Y direction. Each of the pair of side surfaces 22a is a flat surface extending in the Y direction and the Z direction. The pair of end surfaces 22b is a surface on one side (X1 direction side) and a surface on the other side (X2 direction side) in the direction in which the slit 22 extends. The pair of side surfaces 22a and the pair of end surfaces 22b are continuous with the front surface 21a at the ends of the pair of side surfaces 22a and the pair of end surfaces 22b on the Z1 direction side. The pair of side surfaces 22a and the pair of end surfaces 22b are continuous with the back surface 21b at the ends of the pair of side surfaces 22a and the pair of end surfaces 22b on the Z2 direction side.

### (Welded Portion)

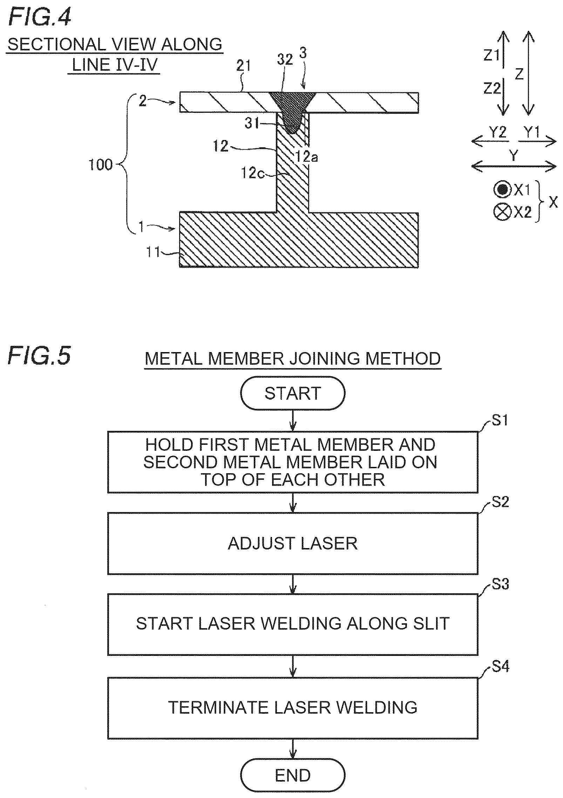

As shown in FIG. 4, the welded portion 3 is formed by melting and solidifying the first metal member 1 and the second metal member 2. That is, the welded portion 3 is formed by melting the vicinity of the tip surface 12a of the first metal member 1 and the vicinity of the pair of side surfaces 22a of the second metal member 2 with the laser L (see FIG. 1) and then solidifying them. The welded portion 3 is a joint (weld) portion between the first metal member 1 and the second metal member 2.

The welded portion 3 includes a first portion 31 and a second portion 32. The first portion 31 is a portion of the welded portion 3 that is provided in the first metal member 1. The first portion 31 has a tapered shape in which the width decreases toward the Z2 direction side. The second portion 32 is a portion of the welded portion 3 that is provided in the second metal member 2. The second portion 32 has a divergent shape in which the width increases toward the Z1 direction side. The first portion 31 and the second portion 32 are provided integrally. In the Y direction, the maximum width of the second portion 32 is larger than the maximum width of the first portion 31. In the Y direction, the maximum width of the first portion 31 is substantially the same as the minimum width of the second portion 32.

As shown in FIG. 1, the above welded portion 3 is disposed so as to fill the space within the slit 22 enclosed by the tip surface 12a of the first metal member 1 and the pair of side surfaces 22a and the pair of end surfaces 22b of the second metal member 2.

### (Non-welded Portion)

The non-welded portion 4 is a portion of the space within the slit 22 that is not filled with the welded portion 3. That is, the non-welded portion 4 is a space portion where the first metal member 1 and the second metal member 2 are not melted and solidified. The non-welded portion 4 is a portion where the first metal member 1 and the second metal member 2 are not joined (welded). The non-welded portion 4 is provided between the welded portion 3 and the end surface 22b on the X1 direction side out of the pair of end surfaces 22b. The non-welded portion 4 is a space that communicates with the space outside the metal member 100. The number of non-welded portions 4 need not be one, but a plurality of non-welded portions 4 may be provided in the space within the slit 22.

### (Metal Member Joining Method)

Hereinafter, the joining method for the metal member 100 according to the first embodiment will be described with reference to FIGS. 5 to 9. The joining method for the metal member 100 is a joining method that can suppress, when the first metal member 1 and the second metal member 2 are joined, entry of metal vapor generated by radiating the laser L to the first metal member 1 into a portion (molten metal) where the first metal member 1 and the second metal member 2 are melted by the laser L.

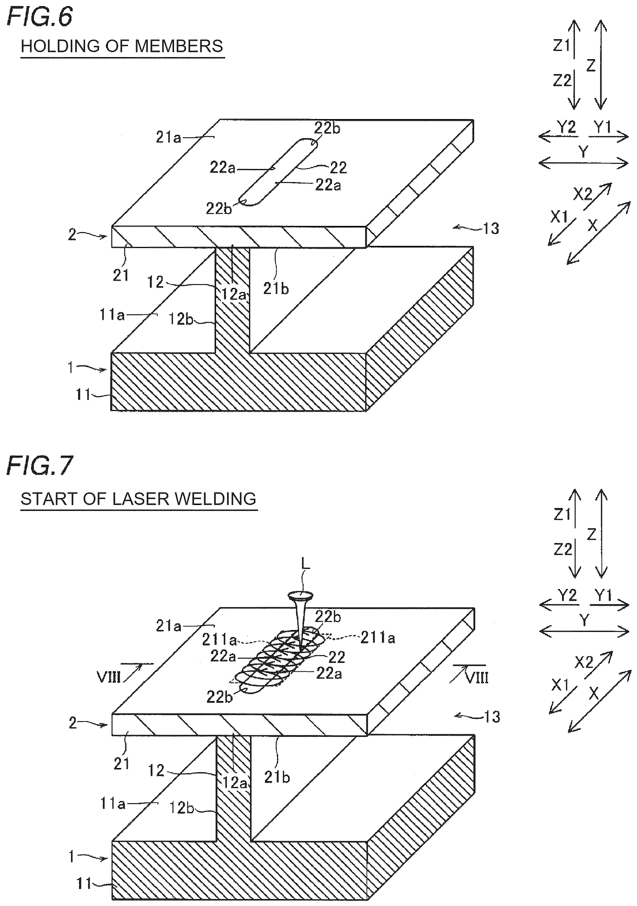

In step S1, the first metal member 1 and the second metal member 2 are held while being laid on top of each other (see FIG. 6). Step S1 is a step in which an end En1 on the Z2 direction side for the side surface 22a of the second metal member 2 along the Z2 direction is brought into contact with the tip surface 12a of the first metal member 1 along the X direction and the Y direction such that part of the tip surface 12a is exposed. The part of the tip surface 12a of the first metal member 1 is exposed through the slit 22. That is, the exposed portion is a central portion of the tip surface 12a in the Y direction. The part of the tip surface 12a of the first metal member 1 is in contact with the space outside the metal member 100 via the slit 22 in the Z1 direction, the X1 direction, and the X2 direction. Step S1 is an example of a "step of contact" in the claims.

In step S2, the laser L is adjusted. That is, in step S2, the laser L is adjusted to a spot diameter (e.g., about 0.1 mm) smaller than a distance M (e.g., about 1 mm or less) between the pair of side surfaces 22a facing each other, and the focal position, the inclination of the laser L, the output of the laser L, the processing direction, etc. are adjusted.

In step S3, welding using the laser L is started along the slit 22. That is, step S3 is a step in which the first metal member 1 and the second metal member 2 are joined by welding together by radiating the laser L toward the exposed portion of the tip surface 12a of the first metal member 1 and an end surface portion 211a of the second metal member 2. Step S3 is an example of a "step of joining by welding" in the claims.

The end surface portion 211a is a surface near the exposed tip surface 12a in the front surface 21a of the second metal member 2. The end surface portion 211a is a surface near the side surface 22a of the second metal member 2 in the front surface 21a that is continuous with an end En2 of the side surface 22a on the Z1 direction side. The end surface portion 211a of the second metal member 2 is provided at each of the portion continuous with the side surface 22a of the slit 22 on the Y1 direction side and the portion continuous with the side surface 22a of the slit 22 on the Y2 direction side.

Specifically, step S3 is a step in which the adjusted laser L is radiated toward the exposed portion of the tip surface 12a of the first metal member 1 and the end surface portion 211a of the second metal member 2 while moving the held first metal member 1 and the held second metal member 2 in the X1 direction (X2 direction, Y1 direction, or Y2 direction) relative to the laser L radiated in the Z2 direction (radiation direction) (see FIG. 7).

The laser welding is performed by a wobbling process in which the processing (welding) is performed by linearly moving the held first metal member 1 and the held second metal member 2 in the X1 direction (X2 direction, Y1 direction, or Y2 direction) relative to the laser L while rotating (turning) the laser L in a circular orbit about a rotation axis parallel to the Z direction when viewed from the Z1 direction side (see FIG. 7). The diameter of the circular orbit along which the laser L rotates is adjusted to be larger (e.g., about 3 mm) than the distance M between the pair of side surfaces 22a facing each other. The area of the end surface portion 211a is set in accordance with the diameter of the rotation of the laser L. The diameter of the circular orbit along which the laser L rotates is preferably twice the distance M or more.

Thus, the laser L having the spot diameter smaller than the distance M between the pair of side surfaces 22a can melt the exposed portion of the tip surface 12a of the first metal member 1 while melting the end surface portion 211a of the second metal member 2. When the end surface portion 211a is set relatively wide, it is possible to compensate for the molten metal that decreases by the volume of the slit 22. Therefore, the thickness of the welded portion 3 in the Z direction can be ensured. Accordingly, the mechanical strength of the welded portion 3 can be ensured.

As described above, step S3 is a step of radiating the laser L toward the exposed portion of the tip surface 12a of the first metal member 1 and the end surface portion 211a of the second metal member 2.

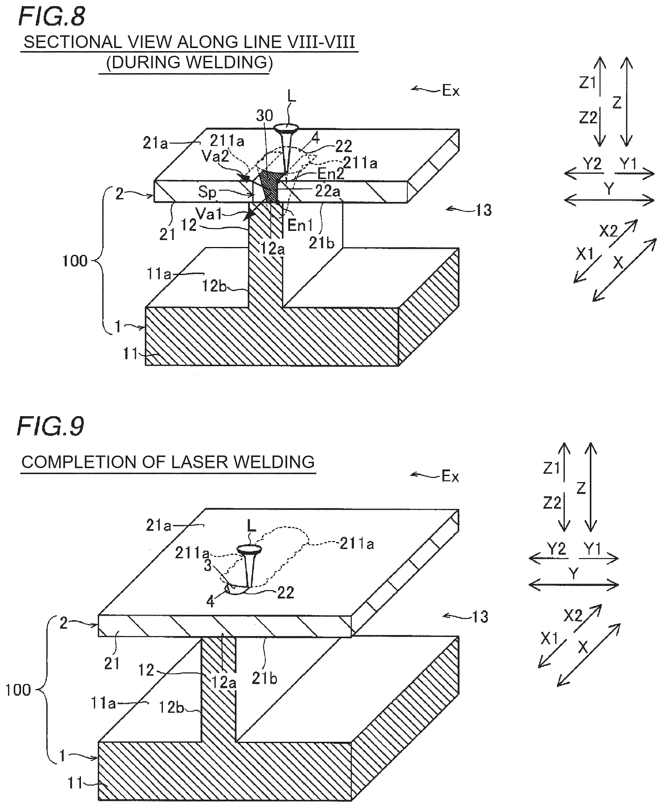

Step S3 is also a step in which the laser L melts both the exposed portion of the tip surface 12a and the end surface portion 211a corresponding to each of the pair of side surfaces 22a of the second metal member 2 and the space (slit 22) enclosed by the exposed portion of the tip surface 12a and the pair of side surfaces 22a is filled with the molten metal (see FIG. 8). In step S3, the filled molten metal is solidified at the protrusion 12 of the first metal member 1 to form the welded portion 3 on the Z1 direction side, and the portion of the welded portion 3 on the Z2 direction side is not melted by the laser L. Therefore, in step S3, the laser L does not penetrate the protrusion 12 of the first metal member 1. Step S3 is a step of continuously performing the above laser welding along the direction in which the slit 22 extends (X1 direction).

At this time, the metal vapor generated by radiating the laser L to the exposed portion of the tip surface 12a of the first metal member 1 is discharged to an external space Ex from a discharge space Sp that is not a filled portion 30 filled with the molten metal in the space within the slit 22. The discharge space Sp is a space that communicates with the external space Ex. That is, the metal vapor generated by radiating the laser L to the exposed portion of the tip surface 12a of the first metal member 1 is discharged via the discharge space Sp, for example, in a Va1 direction and a Va2 direction. The metal vapor generated by radiating the laser L to the end surface portion 211a of the second metal member 2 is directly discharged to the external space Ex.

Such a discharge space Sp is provided within the slit 22 without exception even if the proportion of the filled portion 30 in the space within the slit 22 increases along with the welding using the laser L. Therefore, the discharge space Sp is a space through which the metal vapor can be discharged to the external space Ex from the start to the end of the welding using the laser L. The discharge space Sp is a space formed by the surface of the filled portion 30 on the X1 direction side, the pair of side surfaces 22a, and the tip surface 12a.

In step S3, the welding using the laser L is started from the end of the slit 22 on the X2 direction side. Therefore, the welded portion 3 is formed at the end of the slit 22 on the X2 direction side.

In step S4, the welding using the laser L along the slit 22 is terminated when the welding using the laser L is completed up to a predetermined position on the X1 direction side within the slit 22. In step S4, the welding using the laser L is not terminated at the end of the slit 22 on the X1 direction side. Therefore, the non-welded portion 4 is formed at the end of the slit 22 on the X1 direction side. In step S4, the molten metal in the filled portion 30 is cooled and solidified, thereby forming the welded portion 3.

After step S4, the joining method for the metal member 100 is terminated.

### (Effects of First Embodiment)

The first embodiment has the following effects.

In the first embodiment, as described above, the joining method for the metal member 100 includes step S3 of joining the first metal member 1 and the second metal member 2 by welding together by radiating the laser L toward the exposed portion of the tip surface 12a of the first metal member 1 and the end surface portion 211a of the second metal member 2. Therefore, the metal vapor of the first metal member 1 and the second metal member 2 generated by the laser L radiated toward the end surface portion 211a of the second metal member 2 can be discharged to the discharge space Sp (space) that exposes the tip surface 12a of the first metal member 1. Thus, the metal vapor generated from the first metal member 1 and the second metal member 2 can easily be discharged to the external space Ex outside the metal member, thereby suppressing the entry of the metal vapor into the molten metal of the second metal member 2. Since the side surface 22a and the front surface 21a of the second metal member 2 are in contact with the external space Ex outside the metal member 100, the metal vapor generated by radiating the laser L to the end surface portion 211a of the second metal member 2 is directly discharged to the external space Ex. Therefore, the entry of the metal vapor into the molten metal of the second metal member 2 included in the metal member 100 can be suppressed, thereby suppressing the formation of blowholes in the joint portion formed by the solidification of the molten metal of the first metal member 1 and the second metal member 2 included in the metal member 100. By suppressing the formation of blowholes in the joint portion, it is possible to suppress a decrease in strength of the joint portion due to the blowholes.

In the first embodiment, as described above, the first metal member 1 has the shape that extends from the tip surface 12a in the Z2 direction (radiation direction) and has the predetermined thickness Th12. Step S3 of joining by welding includes the step of radiating the laser L toward the exposed portion of the tip surface 12a of the first metal member 1 and the end surface portion 211a of the second metal member 2. There is commonly known a method in which the laser L penetrates the first metal member 1 and the metal vapor generated from the first metal member 1 is discharged to the outside of the metal member 100 from the tip of the penetrated portion on the Z2 direction (radiation direction) side. If this method is adopted in the case where the portion of the first metal member 1 irradiated with the laser L has the shape with the predetermined thickness Th12 (relatively large thickness), the metal vapor generated from the first metal member 1 enters the molten metal of the first metal member 1 before the laser L penetrates the first metal member 1. Thus, blowholes are formed in the joint portion between the first metal member 1 and the second metal member 2. Through the step of radiating the laser L toward the exposed portion of the tip surface 12a of the first metal member 1 and the end surface portion 211a of the second metal member 2, the metal vapor generated from the first metal member 1 can easily be discharged to the external space Ex outside the metal member 100 without penetrating the first metal member 1 by the laser L, thereby further suppressing the formation of blowholes in the joint portion formed by the solidification of the molten first metal member 1 and the molten second metal member 2.

In the first embodiment, as described above, the second metal member 2 includes the slit 22 passing through the second metal member 2 in the Z2 direction (radiation direction), and the pair of side surfaces 22a facing each other in the Y direction orthogonal to both the Z2 direction (radiation direction) and the X direction in which the slit 22 extends. Step S3 of joining by welding includes the step of causing the laser L to melt both the exposed portion of the tip surface 12a and the end surface portion 211a corresponding to each of the pair of side surfaces 22a of the second metal member 2 and filling the space enclosed by the exposed portion of the tip surface 12a and the pair of side surfaces 22a with the molten metal. By causing the laser L to melt both the exposed portion of the tip surface 12a and the end surface portion 211a corresponding to each of the pair of side surfaces 22a of the second metal member 2, the first metal member 1 and the second metal member 2 can be welded more efficiently using the laser L than in a case where the laser L separately melts the exposed portion of the tip surface 12a of the first metal member 1 and the end surface portion 211a of the second metal member 2. As a result, it is possible to suppress an increase in time required to weld the first metal member 1 and the second metal member 2 using the laser L, which is caused by adopting the method for suppressing the formation of blowholes.

In the first embodiment, as described above, the second metal member 2 includes the slit 22 passing through the second metal member 2 in the Z2 direction (radiation direction), and the pair of side surfaces 22a facing each other in the Y direction orthogonal to both the Z2 direction (radiation direction) and the X direction in which the slit 22 extends. Step S3 of joining by welding includes the step of irradiating the exposed portion of the tip surface 12a of the first metal member 1 and the end surface portion 211a of the second metal member 2 with the laser L adjusted to the spot diameter smaller than the distance M between the pair of side surfaces 22a facing each other. Therefore, the laser L can be radiated with a relatively small spot diameter. Thus, the laser L can be radiated with concentrated energy. Therefore, when the exposed portion of the tip surface 12a of the first metal member 1 and the end surface portion 211a of the second metal member 2 are irradiated with the laser L, the laser L with concentrated energy can reach deep positions in the molten metal portion of the first metal member 1 and the second metal member 2, and the metal is evaporated by the laser L with concentrated energy, thereby forming a clearance (keyhole) between the laser L and the molten metal portion formed around the laser L. As a result, the metal vapor generated from the first metal member 1 can be discharged also from the keyhole to the external space Ex outside the metal member 100, thereby further suppressing the entry of the metal vapor generated from the first metal member 1 into the molten metal of the second metal member 2.

In the first embodiment, as described above, the second metal member 2 includes the slit 22 passing through the second metal member 2 in the Z2 direction (radiation direction). Therefore, the exposed portion of the tip surface 12a can be viewed through the slit 22. As a result, when the laser L is radiated in step S3 of joining by welding, the operator can easily recognize misalignment between the laser L and the tip surface 12a. Thus, the misalignment between the laser L and the tip surface 12a can be corrected early.

In the first embodiment, as described above, the metal member 100 includes the first metal member 1 including the tip surface 12a along the XY directions and having the shape with the thickness Th12 in the Z direction, and the second metal member 2 including the slit 22 passing through the second metal member 2 in the Z direction and the pair of side surfaces 22a facing each other in the X direction. The metal member 100 includes the welded portion 3 disposed so as to fill the space within the slit 22 enclosed by the tip surface 12a of the first metal member 1 and the pair of side surfaces 22a, and formed by melting and solidifying the first metal member 1 and the second metal member 2. Therefore, when the welded portion 3 is welded, the welded portion 3 is formed by directly radiating the laser L to the exposed portion of the tip surface 12a of the first metal member 1 without intermediation of the second metal member 2. Thus, the metal vapor generated by radiating the laser L to the tip surface 12a of the first metal member 1 can be discharged to the space that is not filled with the molten metal of the second metal member 2 melted by the laser L. Accordingly, the metal vapor generated from the first metal member 1 can easily be discharged to the external space Ex outside the metal member 100, thereby suppressing the entry of the metal vapor generated from the first metal member 1 into the molten metal of the second metal member 2. Since the side surface 22a and the front surface 21a of the second metal member 2 are in contact with the external space Ex outside the metal member 100, the metal vapor generated by radiating the laser L to the portion of the end tip surface 12a of the second metal member 2 is directly discharged to the external space Ex. Therefore, it is possible to provide the metal member 100 obtained by joining with the joining method for the metal member 100 in which the entry of the metal vapor into the molten metal of the second metal member 2 included in the metal member 100 can be suppressed, thereby suppressing the formation of blowholes in the joint portion formed by the solidification of the molten metal of the first metal member 1 and the second metal member 2 included in the metal member 100.

**In** the first embodiment, as described above, the non-welded portion 4 that is not filled with the welded portion 3 is further formed in the space within the slit 22. Therefore, the metal vapor generated from the first metal member 1 can be discharged to the external space Ex outside the metal member 100 via the non-welded portion 4, thereby more effectively suppressing the entry of the metal vapor generated from the first metal member 1 into the molten metal of the second metal member 2 melted by the laser L.

### [Possible Application Example]

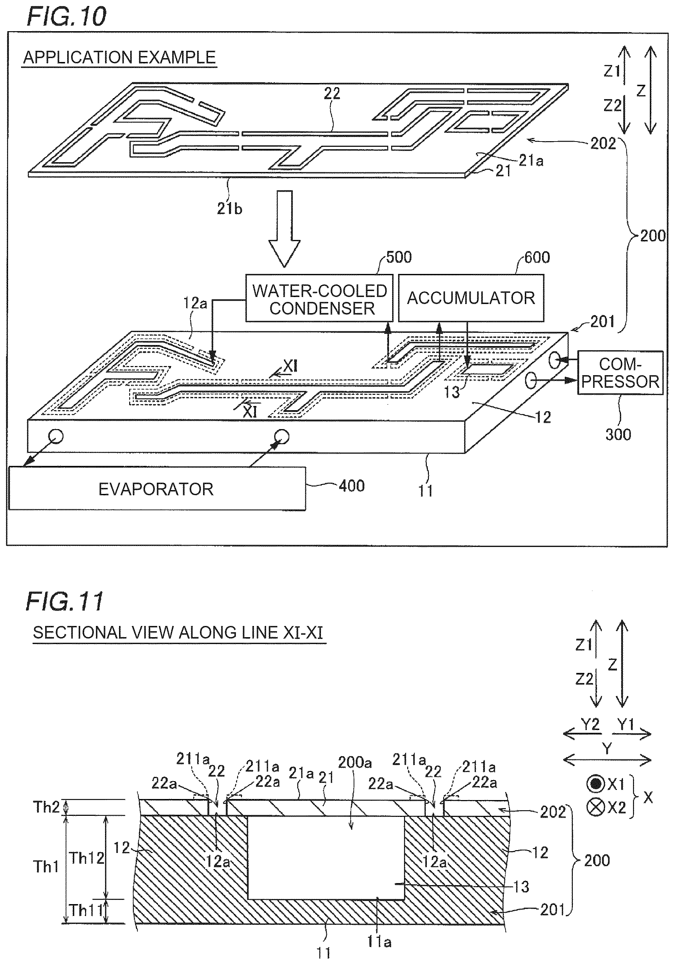

As shown in FIG. 10, it is assumed that the joining method for the metal member 100 according to the first embodiment (see FIG. 5) is applied to processing of a manifold 200 to be mounted on a vehicle such as an automobile. The manifold 200 includes a refrigerant circuit (channel 200a) that connects a compressor 300, an evaporator 400, a water-cooled condenser 500, and an accumulator 600 included in a cooling system for a vehicle. The manifold 200 is a member corresponding to the above metal member 100. Such an application example will be described with reference to FIGS. 10 to 14. In the possible application example, the same components as those in the above embodiment will be denoted by the same signs, and description thereof will be omitted.

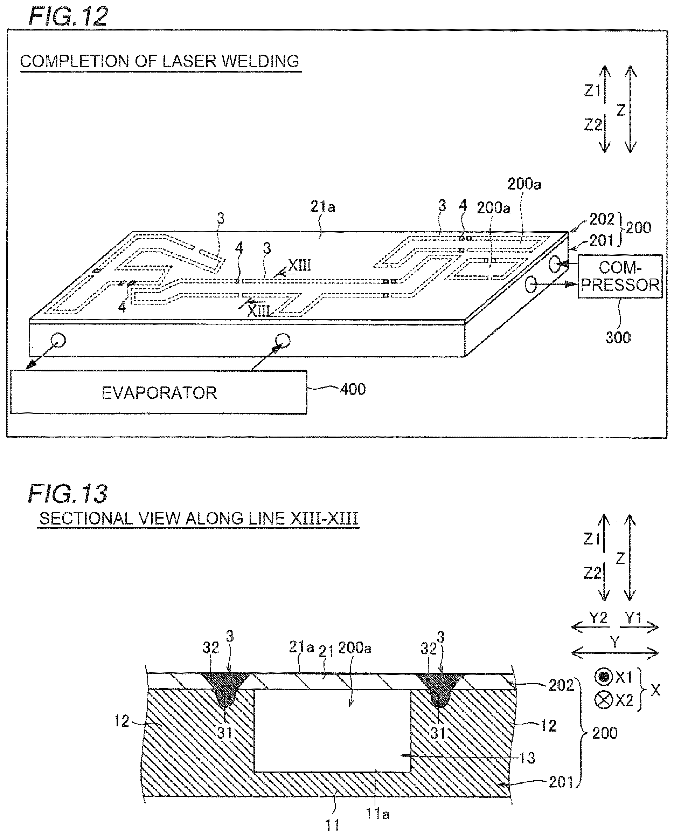

As shown in FIG. 10, the joining method for the metal member 100 is performed to join a valve body 201 and a plate 202 in the manifold 200 and to seal the channel 200a (see FIG. 13) through which a refrigerant flows within the manifold 200. The valve body 201 is a member corresponding to the above first metal member 1. The plate 202 is a member corresponding to the above second metal member 2.

The joining method for the metal member 100 is a laser welding method in which the valve body 201 and the plate 202 are laid on top of each other and welded with the laser L to process them into the manifold 200. The manifold 200 formed by the laser welding includes the valve body 201, the plate 202, the welded portion 3 (see FIG. 12), and the non-welded portion 4 (see FIG. 12). The configurations of the valve body 201, the plate 202, the welded portion 3, and the non-welded portion 4 will be described.

A direction in which the valve body 201 and the plate 202 are arranged is defined as the Z direction, the Z direction toward the plate 202 is defined as the Z1 direction, and the Z direction toward the valve body 201 is defined as the Z2 direction. A direction in which the slit 22 of the plate 202 described later extends is defined as the X direction, one direction of the X direction is defined as the X1 direction, and the other direction of the X direction is defined as the X2 direction. A direction orthogonal to both the X direction and the Z direction is defined as the Y direction, one direction of the Y direction is defined as the Y1 direction, and the other direction of the Y direction is defined as the Y2 direction. The Z2 direction is an example of the "radiation direction" in the claims.

### (Valve Body)

As shown in FIG. 10, the valve body 201 is an aluminum molded product (die-cast product). As shown in FIG. 11, the valve body 201 is a member having the thickness Th1 larger than the thickness Th2 of the plate 202 in the Z direction. The surface of the die-cast product is processed relatively roughly, and metal vapor is easily generated by the laser L. With the joining method for the metal member 100 according to the first embodiment (see FIG. 5), the metal vapor can effectively be discharged to the external space Ex (see FIG. 8). For ease of description, FIGS. 10 and 11 show a state before the valve body 201 and the plate 202 are welded.

Specifically, as shown in FIG. 11, the valve body 201 includes the bottom 11, the protrusion 12, and the recess 13. The bottom 11 and the protrusion 12 are formed integrally. The channel recess 13 (recess 13) of the valve body 201 is covered with a portion of the plate 202 other than the slit 22, thereby forming the channel 200a through which the refrigerant (fluid) flows. The channel recess 13 is an example of the "second channel recess" in the claims.

The bottom 11 is a portion of the valve body 201 on the Z2 direction side of the protrusion 12. The bottom 11 has the thickness Th11 in the Z direction. The protrusion 12 is a portion of the valve body 201 on the Z1 direction side of the bottom 11. The protrusion 12 is a portion protruding from the bottom surface 11a of the bottom 11 in the Z1 direction. That is, the protrusion 12 has the thickness Th12 in the Z direction. The protrusion 12 has the tip surface 12a at the end on the Z1 direction side. The tip surface 12a is an example of the "first surface" in the claims.

The channel recess 13 is a portion recessed in the Z2 direction from the tip surface 12a. A plurality of channel recesses 13 is provided in the valve body 201.

### (Plate)

As shown in FIG. 11, the plate 202 is an aluminum molded product. Specifically, the plate 202 includes the plate-shaped portion 21 and the slit 22.

The plate-shaped portion 21 is a portion of the plate 202 other than the slit 22. The plate-shaped portion 21 is a portion in a plate shape having the thickness Th2 in the Z direction and extending along the X direction and the Y direction. The plate-shaped portion 21 has the front surface 21a on the Z1 direction side. The front surface 21a is a flat surface extending along the X direction and the Y direction. The front surface 21a is an example of the "second surface" in the claims.

The slit 22 is an elongated hole passing through the plate 202 from the front surface 21a in the Z2 direction and extending in the X direction (or the Y direction). The slit 22 has the pair of side surfaces 22a and the pair of end surfaces 22b (see FIG. 3).

### (Welded Portion)

As shown in FIGS. 12 and 13, the welded portion 3 is formed by melting and solidifying the valve body 201 and the plate 202. That is, the welded portion 3 is formed by melting the vicinity of the tip surface 12a of the valve body 201 and the vicinity of the pair of side surfaces 22a of the plate 202 with the laser L (see FIG. 1) and then solidifying them. The welded portion 3 is a joint (weld) portion between the valve body 201 and the plate 202. The welded portion 3 is a portion where the valve body 201 and the plate 202 are joined by welding together to seal the channel 200a.

The welded portion 3 includes the first portion 31 and the second portion 32. The first portion 31 is a portion of the welded portion 3 that is provided in the valve body 201. The first portion 31 has a tapered shape in which the width decreases toward the Z2 direction side. The second portion 32 is a portion of the welded portion 3 that is provided in the plate 202. The second portion 32 has a divergent shape in which the width increases toward the Z1 direction side. The first portion 31 and the second portion 32 are provided integrally in the Z direction.

### (Non-welded Portion)

As shown in FIG. 12, the non-welded portion 4 is a portion of the space within the slit 22 that is not filled with the welded portion 3. That is, the non-welded portion 4 is a space portion where the valve body 201 and the plate 202 are not melted and solidified. The non-welded portion 4 is a portion where the valve body 201 and the plate 202 are not joined (welded). The non-welded portion 4 is a space that communicates with the space outside the manifold 200.

### (Joining Method for Manifold (Metal Member))

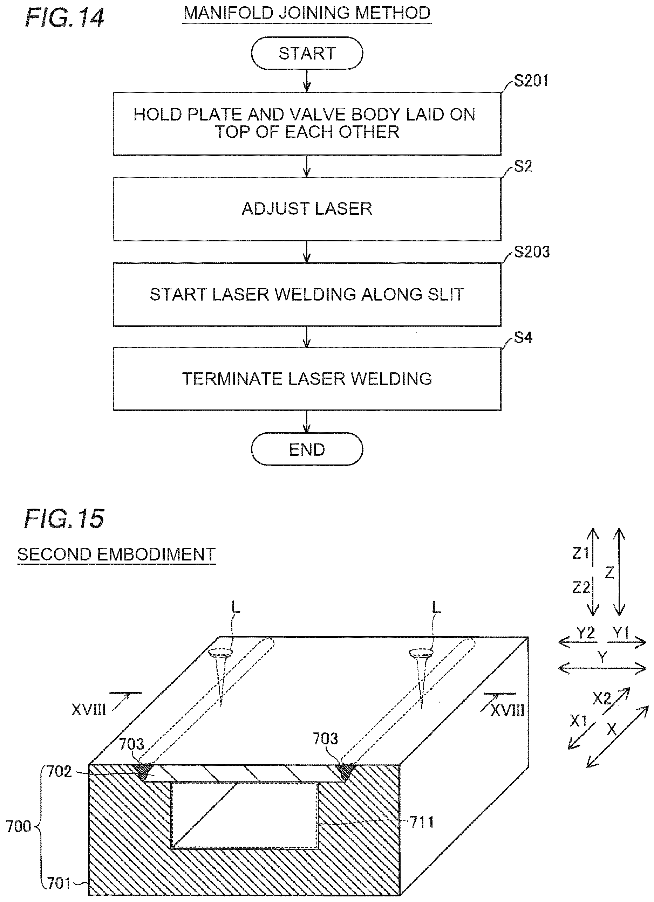

Hereinafter, the joining method for the manifold 200 according to the application example of the first embodiment will be described with reference to FIG. 14. The joining method for the manifold 200 is a joining method that can suppress, when the valve body 201 and the plate 202 are joined, entry of metal vapor generated by radiating the laser L to the plate 202 into a portion (molten metal) where the valve body 201 and the plate 202 are melted by the laser L. Steps S2 and S4 are the same as those in the above joining method for the metal member 100 according to the first embodiment, and therefore description thereof will be omitted.

In step S201, the valve body 201 and the plate 202 are held while being laid on top of each other (see FIG. 11). Step S201 is a step in which an X1-side end of the side surface 22a of the plate 202 along the X direction is brought into contact with the tip surface 12a of the valve body 201 along the X direction and the Y direction such that part of the tip surface 12a is exposed. The part of the tip surface 12a of the valve body 201 is exposed through the slit 22. That is, the part of the tip surface 12a of the valve body 201 is in contact with the space outside the manifold 200 via the slit 22 in the Z1 direction, the X1 direction, and the X2 direction. Step S201 is an example of the "step of contact" in the claims.

Step S201 is a step of covering the channel recess 13 of the valve body 201 with a portion of the plate 202 other than the slit 22, thereby forming the channel 200a through which the refrigerant (fluid) flows.

In step S203, welding using the laser L is started along the slit 22. That is, step S3 is a step in which the valve body 201 and the plate 202 are joined by welding together by radiating the laser L toward the exposed portion of the tip surface 12a of the valve body 201 and the end surface portion 211a of the plate 202. Step S203 is an example of the "step of joining by welding" in the claims.

Step S203 is a step of joining the valve body 201 and the plate 202 by welding together using the laser L to seal the channel 200a (see FIG. 13).

After step S4, the joining method for the manifold 200 is terminated.

### (Effects of Application Example of First Embodiment)

In the application example of the first embodiment, as described above, the valve body 201 includes the protrusion 12 having the shape with the thickness Th12 in the Z2 direction from the tip surface 12a, and the channel recess 13 that is provided to adjoin the protrusion 12 in a direction orthogonal to the Z2 direction and is recessed in the Z2 direction. Step S1 includes the step of covering the channel recess 13 of the valve body 201 with the portion of the plate 202 other than the slit 22 to form the channel through which the fluid flows. Step S3 includes the step of joining the valve body 201 and the plate 202 by welding together using the laser L to seal the channel. Therefore, the formation of blowholes in the joint portion where the valve body 201 and the plate 202 are joined by welding together is suppressed, thereby suppressing leakage of the fluid flowing through the channel formed by the recess 13 (channel recess) of the valve body 201 and the portion of the plate 202 other than the slit 22 to the outside of the metal member through the blowholes. Thus, the sealing of the channel can be ensured.

### [Second Embodiment]

The configuration of a joining method for a metal member 700 according to a second embodiment will be described with reference to FIGS. 15 to 22. In the second embodiment, a first metal member 701 and a second metal member 702 are welded with the second metal member 702 fitted to the first metal member 701. In the second embodiment, detailed description will be omitted for the same components as those in the first embodiment.

As shown in FIG. 15, the joining method for the metal member 700 is a laser welding method in which the first metal member 701 and the second metal member 702 are welded with the laser L (shown by a long dashed double-short dashed line in FIG. 15) with the second metal member 702 fitted to the first metal member 701 to process them into the metal member 700. The metal member 700 formed by the laser welding includes the first metal member 701, the second metal member 702, and welded portions 703. The configurations of the first metal member 701, the second metal member 702, and the welded portion 703 will be described below. The laser L is an example of an "energy beam" in the claims.

A direction in which the first metal member 701 and the second metal member 702 are arranged is defined as the Z direction, the Z direction toward the second metal member 702 is defined as the Z1 direction, and the Z direction toward the first metal member 701 is defined as the Z2 direction. A direction in which the second metal member 702 extends is defined as the X direction, one direction of the X direction is defined as the X1 direction, and the other direction of the X direction is defined as the X2 direction. A direction orthogonal to both the X direction and the Z direction is defined as the Y direction, one direction of the Y direction is defined as the Y1 direction, and the other direction of the Y direction is defined as the Y2 direction. The Z2 direction is an example of the "radiation direction" in the claims.

### (First Metal Member)

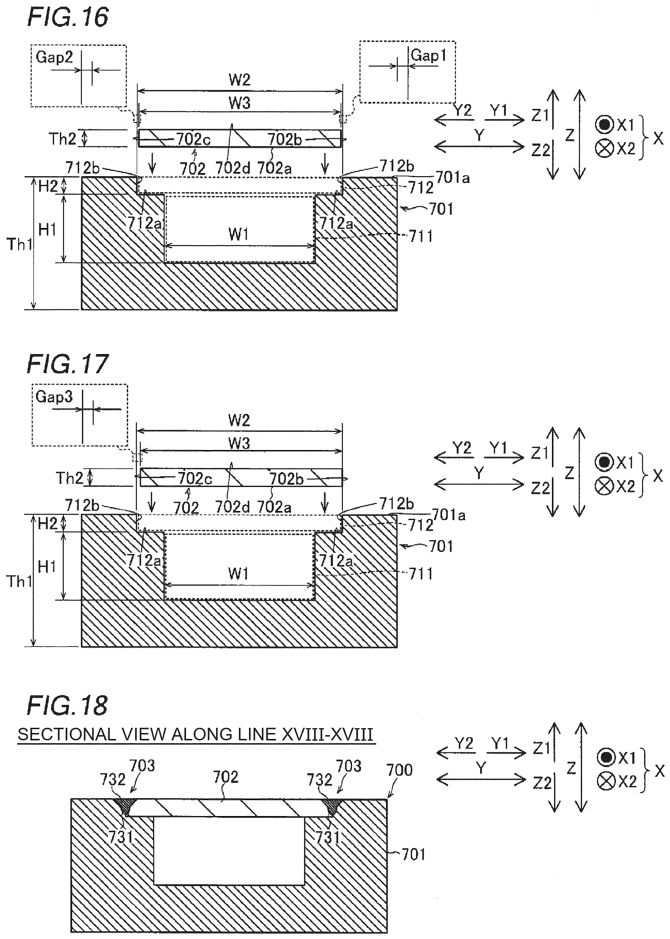

As shown in FIG. 16, the first metal member 701 is a molded product made of metal such as aluminum or iron. The thickness Th1 of the first metal member 701 in the Z direction is larger than the thickness Th2 of the second metal member 702. For ease of description, FIG. 16 shows a state before the first metal member 701 and the second metal member 702 are welded.

Specifically, the first metal member 701 includes a recess 711 and a fitting recess 712. The recess 711 is an example of a "first channel recess" in the claims.

The recess 711 is a portion that is recessed in the Z2 direction from placement surfaces 712a of the fitting recess 712 described later. The recess 711 is provided to adjoin the fitting recess 712 on the Z2 direction side. A width W1 of the recess 711 in the Y direction is smaller than a width W2 of the fitting recess 712 in the Y direction. A height H1 of the recess 711 in the Z direction is larger than a height H2 of the fitting recess 712 in the Z direction.

The fitting recess 712 is a portion that is recessed in the Z2 direction from a front surface 701a of the first metal member 701 on the Z1 direction side. The second metal member 702 inserted from the Z1 direction side is fitted to the fitting recess 712. The fitting recess 712 includes a pair of placement surfaces 712a and a pair of facing side surfaces 712b. Each of the pair of placement surfaces 712a is an example of the "first surface" and a "bottom surface of the fitting recess" in the claims.

The pair of placement surfaces 712a is bottom surfaces where a portion of a back surface 702a of the second metal member 702 on the Y1 direction side and a portion of the back surface 702a on the Y2 direction side are placed. The pair of placement surfaces 712a is provided on the Y1 direction side and the Y2 direction side. The pair of facing side surfaces 712b is surfaces that face a side surface 702b of the second metal member 702 on the Y1 direction side and a side surface 702c of the second metal member 702 on the Y2 direction side. The pair of facing side surfaces 712b is surfaces extending in the Z1 direction from the pair of placement surfaces 712a. The pair of placement surfaces 712a is provided on the Y1 direction side of the recess 711 and the Y2 direction side of the recess 711.

The fitting recess 712 is provided to adjoin the recess 711 on the Z1 direction side. The height H2 of the fitting recess 712 in the Z direction is a dimension that is substantially the same as the thickness Th2 of the second metal member 702 in the Z direction.

The width W2 of the fitting recess 712 in the Y direction is larger than a width W3 of the second metal member 702 in the Y direction. Therefore, when the second metal member 702 is fitted to the fitting recess 712, a small gap Gap1 is provided on the Y1 direction side of the second metal member 702 and a small gap Gap2 is provided on the Y2 direction side of the second metal member 702 between the second metal member 702 and the pair of facing side surfaces 712b of the fitting recess 712 of the first metal member 701 (W3 - W2 = Gap1 + Gap2). In addition to the form shown in FIG. 16, as shown in FIG. 17, there is also a portion where a small gap Gap3 is provided only on the Y1 direction side of the second metal member 702 between the second metal member 702 and the pair of facing side surfaces 712b of the fitting recess 712 of the first metal member 701 (W3 - W2 = Gap3). Although illustration is omitted, there is also a portion where a small gap is provided only on the Y2 direction side of the second metal member 702. The dimension of the small gap Gap3 (small gap on the Y2 direction side) is the sum of the small gap Gap1 and the small gap Gap2. Even if the small gap is provided only on one of the Y1 direction side and the Y2 direction side, small gaps are provided from that portion adjacently in the X1 direction and the X2 direction.

Each of the small gap Gap1 and the small gap Gap2 has a dimension of, for example, about 50 µm. The dimension of each of the small gap Gap1 and the small gap Gap2 is preferably as small as possible within a range of 50 µm or more and 1 mm or less. In this case, the small gap Gap3 has a dimension of, for example, about 100 µm. In the following description, it is assumed that both the small gap Gap1 and the small gap Gap2 are provided between the second metal member 702 and the pair of facing side surfaces 712b of the fitting recess 712 of the first metal member 701.

### (Second Metal Member)

As shown in FIG. 16, the second metal member 702 is a molded product made of metal such as aluminum or iron. The second metal member 702 is a plate-shaped member extending in the X direction and the Y direction. The second metal member 702 has a front surface 702d on the Z1 direction side. The front surface 702d is an example of the "second surface" in the claims.

The pair of side surfaces 702b and 702c is continuous with the front surface 702d at the ends of the pair of side surfaces 702b and 702c on the Z1 direction side. The pair of side surfaces 702b and 702c is continuous with the back surface 702a at the ends of the pair of side surfaces 702b and 702c on the Z2 direction side.

### (Welded Portion)

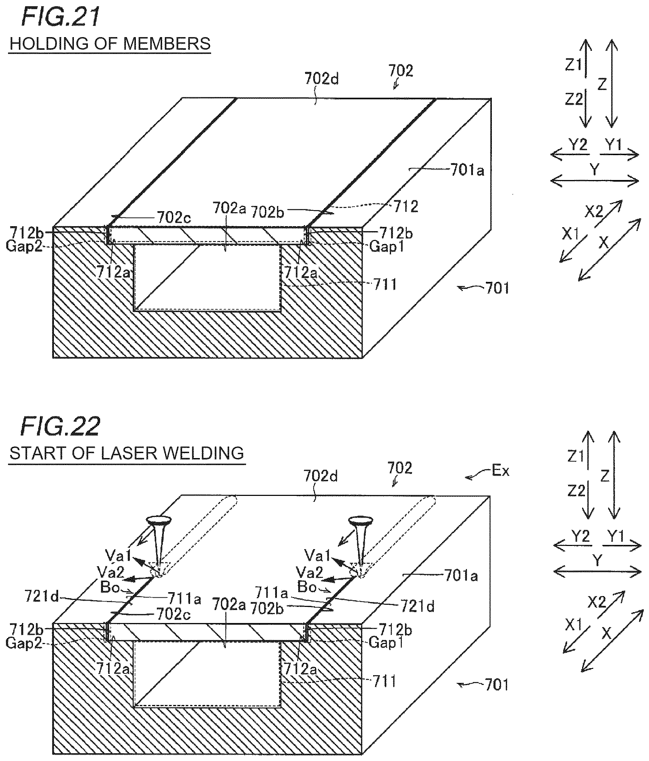

As shown in FIG. 18, the welded portions 703 are formed by melting and solidifying the first metal member 701 and the second metal member 702. That is, the welded portions 703 are formed by melting boundaries Bo (see FIG. 22) between the pair of facing side surfaces 712b of the fitting recess 712 of the first metal member 701 and the pair of side surfaces 702b and 702c of the second metal member 702 with the laser L (see FIG. 22) and then solidifying the boundaries Bo. The welded portion 703 is a joint (weld) portion between the first metal member 701 and the second metal member 702. The boundaries Bo refer to boundaries between the pair of facing side surfaces 712b and the pair of side surfaces 702b (and 702c) of the second metal member 702 in the Y direction.

The welded portion 703 includes a first portion 731 and a second portion 732. The first portion 731 and the second portion 732 are provided across the first metal member 701 and the second metal member 702 in the Y direction. The first portion 731 is provided integrally with the second portion 732 on the Z2 direction side. The first portion 731 has a tapered shape in which the width decreases toward the Z2 direction side. The second portion 732 has a divergent shape in which the width increases toward the Z1 direction side. In the Y direction, the maximum width of the second portion 732 is larger than the maximum width of the first portion 731. In the Y direction, the maximum width of the first portion 731 is substantially the same as the minimum width of the second portion 732.

The above welded portion 703 is formed at the boundary Bo between the first metal member 701 and the second metal member 702.

### (Metal Member Joining Method)

Hereinafter, the joining method for the metal member 700 according to the second embodiment will be described with reference to FIGS. 15 and 19 to 22.

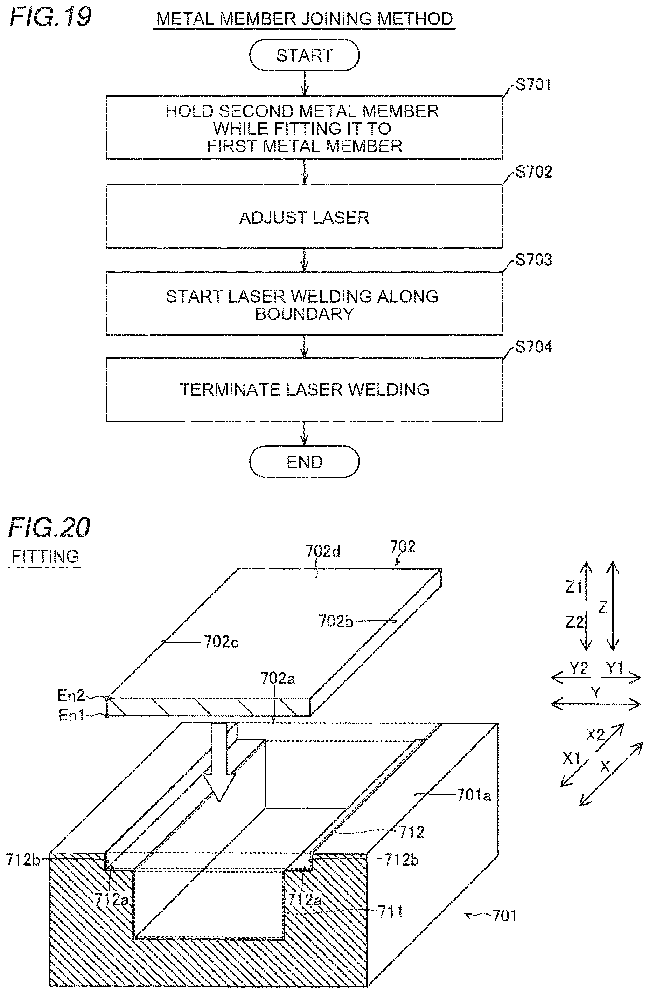

As shown in FIG. 19, in step S701, the second metal member 702 is held while being fitted to the first metal member 701. That is, as shown in FIGS. 20 and 21, in step S701, the operator fits the second metal member 702 to the fitting recess 712 of the first metal member 701, and then the second metal member 702 is held by the first metal member 701. Step S701 is an example of the "step of contact" in the claims.

Step S701 is a step in which the end En1 on the Z2 direction side for each of the side surface 702b and the side surface 702c of the second metal member 702 along the Z2 direction is brought into contact with the first metal member 701 such that part of at least one of the pair of placement surfaces 712a is exposed. The part of the pair of placement surfaces 712a of the first metal member 701 are exposed through the small gap Gap1 and the small gap Gap2. That is, the exposed portions are the end portion on the Y1 direction side for the placement surface 712a on the Y1 direction side and the end portion on the Y2 direction side for the placement surface 712a on the Y2 direction side. The part of the pair of placement surfaces 712a of the first metal member 701 are in contact with the space outside the metal member 700 via the small gap Gap1 and the small gap Gap2 in the Z1 direction, the X1 direction, and the X2 direction.

In step S702 (see FIG. 19), the laser L is adjusted. That is, in step S702, the laser L is adjusted to a spot diameter corresponding to the small gap Gap1 (or the small gap Gap2) between the facing side surface 712b and the side surface 702b (or the side surface 702c) of the second metal member 702, and the focal position, the inclination of the laser L, the output of the laser L, the processing direction, etc. are adjusted.

In step S703 (see FIG. 19), welding using the laser L is started along the boundaries Bo as shown in FIG. 22. The boundaries Bo are provided at the end on the Z1 direction side where the laser L can directly be radiated from the Z1 direction side. Step S703 is a step in which the first metal member 701 and the second metal member 702 are joined by welding together by radiating the laser L toward end surface portions 721d of the second metal member 702. At this time, the laser L is radiated also to end surface portions 711a of the front surface 701a of the first metal member 701 by radiating the laser L toward the end surface portions 721d of the second metal member 702. In this manner, step S703 is a step of joining the side surface 702b (or the side surface 702c) of the second metal member 702 and the facing side surface 712b of the fitting recess 712 by welding together using the laser L. Step S703 is an example of the "step of joining by welding" in the claims.

The end surface portion 711a is a surface near the exposed placement surface 712a in the front surface 701a of the first metal member 701. The end surface portion 711a is a surface near the facing side surface 712b of the first metal member 701 in the front surface 701a that is continuous with the end En2 of the facing side surface 712b on the Z1 direction side. The end surface portion 721d of the second metal member 702 is a surface near the exposed placement surface 712a in the front surface 702d of the second metal member 702. The end surface portion 721d of the second metal member 702 is a surface near the side surface 702b (or the side surface 702c) of the second metal member 702 in the front surface 702d that is continuous with the end En2 of the side surface 702b (or the side surface 702c) on the Z1 direction side.

Specifically, step S703 is a step in which the adjusted laser L is radiated toward the end surface portion 711a of the first metal member 701 and the end surface portion 721d of the second metal member 702 while moving the held first metal member 701 and the held second metal member 702 in the X1 direction (X2 direction, Y1 direction, or Y2 direction) relative to the laser L radiated in the Z2 direction (radiation direction) (see FIG. 22). The laser welding may be performed by the wobbling process as in the first embodiment.

At this time, as shown in FIG. 22, the metal vapor generated by radiating the laser L to the end surface portion 711a of the first metal member 701 and the end surface portion 721d of the second metal member 702 is discharged to the external space Ex from the small gap Gap1 and the small gap Gap2. Each of the small gap Gap1 and the small gap Gap2 is a space that communicates with the external space Ex. That is, the metal vapor generated by radiating the laser L to the end surface portion 711a of the first metal member 701 and the end surface portion 721d of the second metal member 702 is discharged via the small gap Gap1 and the small gap Gap2, for example, in the Va1 direction and the Va2 direction. Further, the metal vapor generated by radiating the laser L to the end surface portion 711a of the first metal member 701 and the end surface portion 721d of the second metal member 702 is directly discharged to the external space Ex.

In step S704 (see FIG. 19), the welding using the laser L along the boundaries Bo is terminated when the welding using the laser L is completed up to the ends of the boundaries Bo on the X1 direction side. In step S704, the molten metal is cooled and solidified, thereby forming the welded portions 703.

After step S704, the joining method for the metal member 700 is terminated.

### (Effects of Second Embodiment)

The second embodiment has the following effects.

In the second embodiment, as described above, the joining method for the metal member 700 includes step S703 of joining the first metal member 701 and the second metal member 702 by welding together by radiating the laser L toward the end surface portion 721d of the second metal member 702. Therefore, the metal vapor of the first metal member 701 and the second metal member 702 generated by the laser L radiated toward the end surface portion 721d of the second metal member 702 can be discharged to the small gap Gap1 (or the small gap Gap2: space) that exposes the placement surface 712a of the first metal member 701. Thus, the metal vapor generated from the first metal member 701 and the second metal member 702 can easily be discharged to the external space Ex outside the metal member, thereby suppressing the entry of the metal vapor into the molten metal of the second metal member 702. Since the placement surface 712a of the first metal member 701 and the front surface 702d of the second metal member 702 are in contact with the external space Ex outside the metal member 700, the metal vapor generated by radiating the laser L to the end surface portion 711a of the second metal member 702 is directly discharged to the external space Ex. Therefore, the entry of the metal vapor into the molten metal of the second metal member 702 included in the metal member 700 can be suppressed, thereby suppressing the formation of blowholes in the joint portion formed by the solidification of the molten metal of the first metal member 701 and the second metal member 702 included in the metal member 700. By suppressing the formation of blowholes in the joint portion, it is possible to suppress a decrease in strength of the joint portion due to the blowholes.

In the second embodiment, as described above, the first metal member 701 includes the fitting recess 712 that is recessed in the Z2 direction and to which the second metal member 702 is fitted. Step S301 includes the step of fitting the second metal member 702 to the fitting recess 712 of the first metal member 701. Step S703 includes the step of joining the side surface 702b (or the side surface 702c) of the second metal member 702 and the facing side surface 712b of the fitting recess 712 that faces the side surface 702b (or the side surface 702c) of the second metal member 702 by welding together using the laser L. Since the radiation direction of the laser L is the same as the extending direction of the boundary Bo between the side surface 702b (or the side surface 702c) of the second metal member 702 and the facing side surface 712b of the fitting recess 712, the portion joined by welding can be formed over the substantially entire boundary Bo between the side surface 702b (or the side surface 702c) of the second metal member 702 and the facing side surface 712b of the fitting recess 712. As a result, the sealing at the boundary Bo between the side surface 702b (or the side surface 702c) of the second metal member 702 and the facing side surface 712b of the fitting recess 712 can be ensured.

The other effects of the second embodiment are the same as the effects of the first embodiment, and therefore description thereof will be omitted.

### [Possible Application Example]

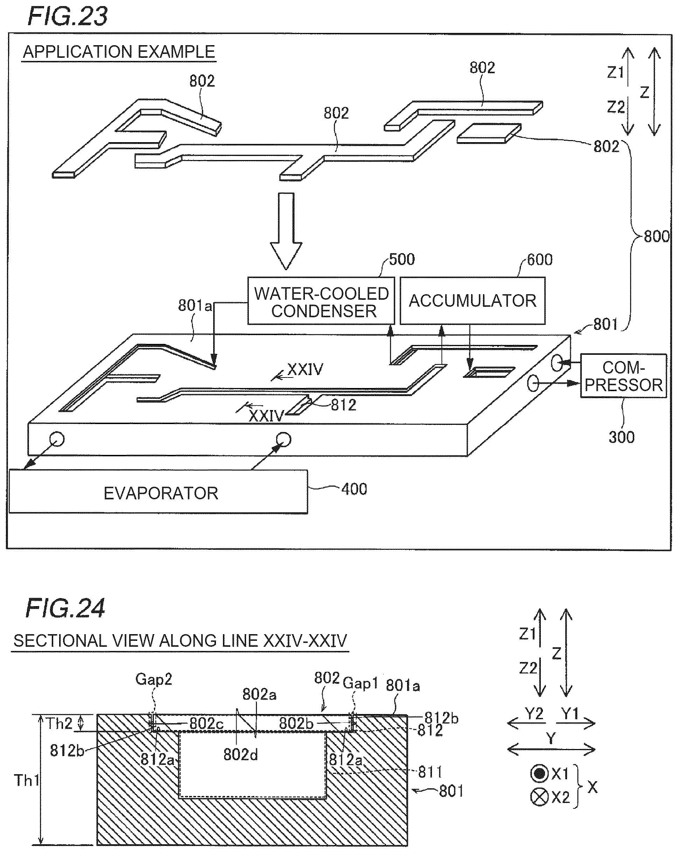

As shown in FIG. 23, it is assumed that the joining method for the metal member 700 according to the second embodiment (see FIG. 19) is applied to processing of a manifold 800 to be mounted on a vehicle such as an automobile as in the first embodiment. The manifold 800 includes a refrigerant circuit (channel 800a) that connects the compressor 300, the evaporator 400, the water-cooled condenser 500, and the accumulator 600 included in a cooling system for a vehicle. The manifold 800 is a member corresponding to the above metal member 700. Such an application example will be described with reference to FIGS. 23 to 27. In the possible application example, the same components as those in the above embodiment will be denoted by the same signs, and description thereof will be omitted.

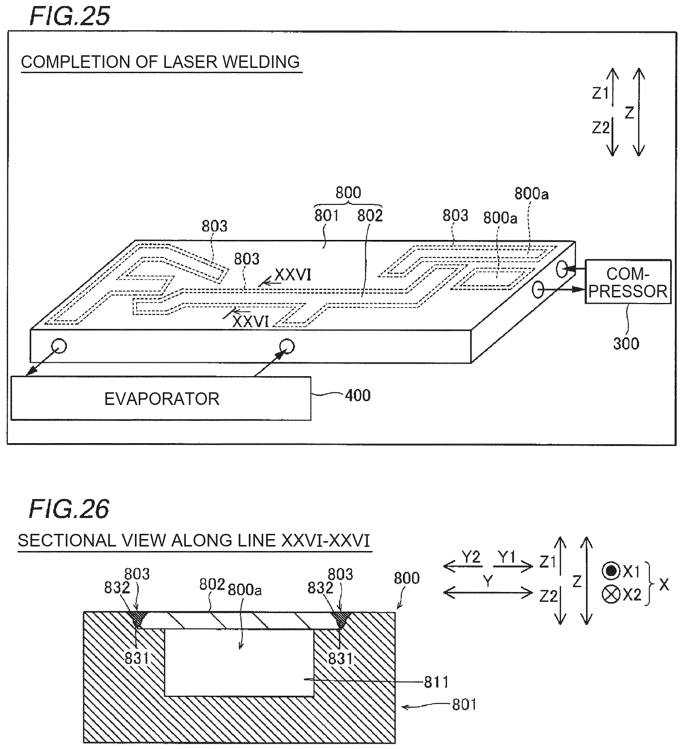

As shown in FIG. 23, the joining method for the metal member 700 is performed to join a valve body 801 and a plate 802 in the manifold 800 and to seal the channel 800a (see FIG. 26) through which a refrigerant flows within the manifold 800. The valve body 801 is a member corresponding to the above first metal member 701. The plate 802 is a member corresponding to the above second metal member 702.

The joining method for the manifold 800 is a laser welding method in which the valve body 801 and the plate 802 are welded with the laser L with the plate 802 fitted to the valve body 801 to process them into the manifold 800. The manifold 800 formed by the laser welding includes the valve body 801, the plate 802, and welded portions 803 (see FIG. 26). The configurations of the valve body 801, the plate 802, and the welded portion 803 will be described.

A direction in which the valve body 801 and the plate 802 are arranged is defined as the Z direction, the Z direction toward the plate 802 is defined as the Z1 direction, and the Z direction toward the valve body 801 is defined as the Z2 direction. One direction out of the directions orthogonal to the Z direction is defined as the X direction, one direction of the X direction is defined as the X1 direction, and the other direction of the X direction is defined as the X2 direction. A direction orthogonal to both the X direction and the Z direction is defined as the Y direction, one direction of the Y direction is defined as the Y1 direction, and the other direction of the Y direction is defined as the Y2 direction. The Z2 direction is an example of the "radiation direction" in the claims.

### (Valve Body)

As shown in FIG. 23, the valve body 801 is an aluminum molded product (die-cast product). As shown in FIG. 24, the valve body 801 is a member having the thickness Th1 larger than the thickness Th2 of the plate 802 in the Z direction. The surface of the die-cast product is processed relatively roughly, and metal vapor is easily generated by the laser L. With the joining method for the metal member 700 according to the second embodiment (see FIG. 19), the metal vapor can effectively be discharged to the external space Ex (see FIG. 22). For ease of description, FIGS. 23 and 24 show a state before the valve body 801 and the plate 802 are welded.

Specifically, as shown in FIG. 24, the valve body 801 includes a channel recess 811 and a fitting recess 812. The channel recess 811 (recess 711) of the valve body 801 is covered with the plate 802, thereby forming the channel 800a through which the refrigerant (fluid) flows. The channel recess 811 is an example of the "first channel recess" in the claims.

The channel recess 811 is a portion that is recessed in the Z2 direction from placement surfaces 812a of the fitting recess 812. A plurality of channel recesses 811 is provided in the valve body 801. The fitting recess 812 is a portion that is recessed in the Z2 direction from a front surface 801a of the valve body 801 on the Z1 direction side. The plate 802 inserted from the Z1 direction side is fitted to the fitting recess 812. That is, a plurality of fitting recesses 812 is provided in the valve body 801 in conjunction with the channel recesses 811. A matching plate 802 is fitted to each of the plurality of fitting recesses 812. By fitting the matching plate 802, the opening of the channel recess 811 in the Z1 direction is closed and the channel 800a is formed. The fitting recess 812 includes a pair of placement surfaces 812a and a pair of facing side surfaces 812b. Each of the pair of placement surfaces 812a is an example of the "first surface" and the "bottom surface of the fitting recess" in the claims.

When the plate 802 is fitted to the fitting recess 812, the small gap Gap1 is provided on the Y1 direction side of the plate 802 and the small gap Gap2 is provided on the Y2 direction side of the plate 802 between the plate 802 and the pair of facing side surfaces 812b of the fitting recess 812 of the valve body 801. Further, the small gap Gap3 is provided on one of the Y1 direction side and the Y2 direction side of the plate 802 between the plate 802 and the pair of facing side surfaces 812b of the fitting recess 812 of the valve body 801. For ease of the following description, it is assumed that the small gap Gap1 and the small gap Gap2 are provided.

### (Plate)

As shown in FIG. 24, the plate 802 is a molded product made of metal such as aluminum or iron. The plate 802 is a plate-shaped member extending in the X direction and the Y direction. The plate 802 has a back surface 802a on the Z2 direction side. The plate 802 has a pair of side surfaces 802b and 802b. The plate 802 has a front surface 802d on the Z1 direction side. The front surface 802d is an example of the "second surface" in the claims.

The pair of side surfaces 802b and 802c is continuous with the front surface 802d at the ends of the pair of side surfaces 802b and 802c on the Z1 direction side. The pair of side surfaces 802b and 802b is continuous with the back surface 802a at the ends of the pair of side surfaces 802b and 802c on the Z2 direction side.

### (Welded Portion)

As shown in FIGS. 25 and 26, the welded portions 803 are formed by melting and solidifying the valve body 801 and the plate 802. That is, the welded portions 803 are formed by melting the boundaries Bo (see FIG. 22) between the pair of facing side surfaces 812b of the fitting recess 812 of the valve body 801 and the pair of side surfaces 802b and 802c of the plate 802 with the laser L (see FIG. 22) and then solidifying the boundaries Bo. The welded portion 803 includes a first portion 831 and a second portion 832. The first portion 831 and the second portion 832 have the same shapes as the first portion 731 and the second portion 732, respectively, and therefore description thereof will be omitted.

### (Joining Method for Manifold (Metal Member))

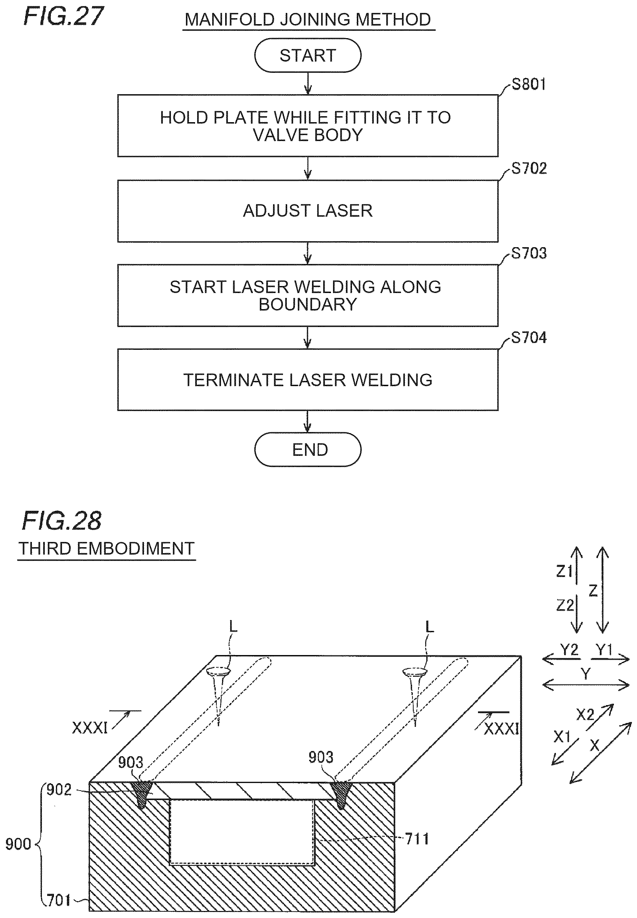

Hereinafter, the joining method for the manifold 800 according to the application example of the second embodiment will be described with reference to FIG. 27. Steps S702 to S704 are the same as those in the above joining method for the metal member 700 according to the second embodiment, and therefore description thereof will be omitted.

In step S801, the operator fits the plate 802 to the fitting recess 812 of the valve body 801, and then the plate 802 is held by the valve body 801. Step S801 is a step of fitting the plate 802 to the fitting recess 812 of the valve body 801, thereby forming the channel recess 811 as the channel 800a through which the refrigerant (fluid) flows. Step S801 is an example of the "step of contact" in the claims.

Step S801 is a step in which the end En1 on the Z2 direction side for each of the side surface 802b and the side surface 802c of the plate 802 along the Z2 direction is brought into contact with the valve body 801 such that part of at least one of the pair of placement surfaces 812a is exposed. The part of the placement surfaces 812a of the valve body 801 are exposed through the small gap Gap1 and the small gap Gap2.

Steps S702 to S704 are performed. Step S703 is a step of joining the side surface 802b and the side surface 802c of the plate 802 and the facing side surfaces 812b of the fitting recess 812 by welding together using the laser L to seal the channel 800a. After steps S702 to S704, the joining method for the manifold 800 is terminated.

### (Effects of Application Example of Second Embodiment)

In the application example of the second embodiment, as described above, the valve body 801 includes the channel recess 811 having the width W1 smaller than the width of the fitting recess 812 in the direction orthogonal to the Z2 direction and provided on the Z2 direction side of the fitting recess 812. Step S801 includes the step of fitting the plate 802 to the fitting recess 812 of the valve body 801 to form the channel recess 811 as the channel through which the fluid flows. Step S703 includes the step of joining the side surface 802b of the plate 802 and the facing side surface 812b of the fitting recess 812 by welding together using the laser L to seal the channel. Therefore, the portion joined by welding can be formed over the substantially entire boundary Bo between the side surface 802b of the plate 802 and the facing side surface 812b of the fitting recess 812, thereby further suppressing the leakage of the fluid flowing through the channel to the outside of the metal member. As a result, the sealing of the channel can be ensured.

### [Third Embodiment]

The configuration of a joining method for a metal member 900 according to a third embodiment will be described with reference to FIGS. 28 to 34. In the third embodiment, welding is performed by radiating the laser L to the placement surfaces 712a of the first metal member 701, the facing side surfaces 712b of the first metal member 701, and a side surface 902b (and a side surface 902c) of a second metal member 902 with the second metal member 902 fitted to the first metal member 701. In the third embodiment, detailed description will be omitted for the same components as those in the second embodiment.

As shown in FIG. 28, the joining method for the metal member 900 is a laser welding method in which the first metal member 701 and the second metal member 902 are welded with the laser L (shown by a long dashed double-short dashed line in FIG. 28) with the second metal member 902 fitted to the first metal member 701 to process them into the metal member 900. The metal member 900 formed by the laser welding includes the first metal member 701, the second metal member 902, and welded portions 903. The first metal member 701 has the same configuration as that of the first metal member 701 of the second embodiment, and therefore detailed description thereof will be omitted. The configurations of the second metal member 902 and the welded portion 903 will be described below. The laser L is an example of the "energy beam" in the claims.

A direction in which the first metal member 701 and the second metal member 902 are arranged is defined as the Z direction, the Z direction toward the second metal member 902 is defined as the Z1 direction, and the Z direction toward the first metal **member** 701 is defined as the Z2 direction. A direction in which the second metal member 902 extends is defined as the X direction, one direction of the X direction is defined as the X1 direction, and the other direction of the X direction is defined as the X2 direction. A direction orthogonal to both the X direction and the Z direction is defined as the Y direction, one direction of the Y direction is defined as the Y1 direction, and the other direction of the Y direction is defined as the Y2 direction. The Z2 direction is an example of the "radiation direction" in the claims.

### (Second Metal Member)

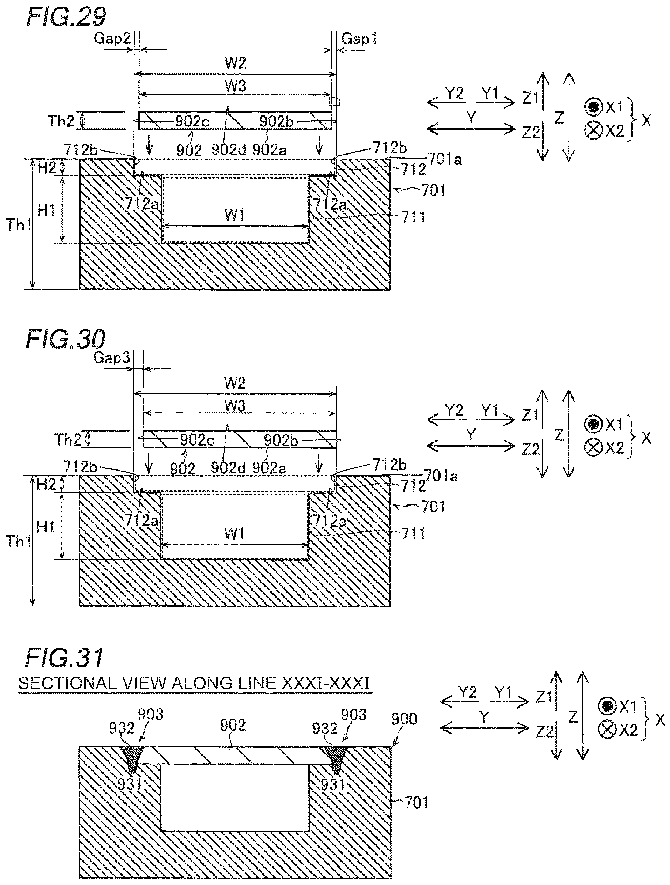

As shown in FIG. 29, the second metal member 902 is a molded product made of metal such as aluminum or iron. The second metal member 902 is a plate-shaped member extending in the X direction and the Y direction. The second metal member 902 has a front surface 902d on the Z1 direction side. The front surface 902d is an example of the "second surface" in the claims.

The pair of side surfaces 902b and 902c is continuous with the front surface 902d at the ends of the pair of side surfaces 902b and 902c on the Z1 direction side. The pair of side surfaces 902b and 902c is continuous with a back surface 902a at the ends of the pair of side surfaces 902b and 902c on the Z2 direction side.

The thickness Th2 of the second metal member 902 in the Z direction is a dimension that is substantially the same as the height H2 of the fitting recess 712 in the Z direction. The width W3 of the second metal member 902 in the Y direction is smaller than the width W2 of the fitting recess 712 in the Y direction. Therefore, when the second metal member 902 is fitted to the fitting recess 712, the small gap Gap1 is provided on the Y1 direction side of the second metal member 902 and the small gap Gap2 is provided on the Y2 direction side of the second metal member 902 between the second metal member 902 and the pair of facing side surfaces 712b of the fitting recess 712 of the first metal member 701 (W3 - W2 = Gap1 + Gap2).

In addition to the form shown in FIG. 29, as shown in FIG. 30, there is also a portion where the small gap Gap3 is provided only on the Y1 direction side of the second metal member 902 between the second metal member 902 and the pair of facing side surfaces 712b of the fitting recess 712 of the first metal member 701 (W3 - W2 = Gap3). Although illustration is omitted, there is also a portion where a small gap is provided only on the Y2 direction side of the second metal member 902. Even if the small gap is provided only on one of the Y1 direction side and the Y2 direction side, small gaps are provided from that portion adjacently in the X1 direction and the X2 direction. The dimension of the small gap Gap3 (small gap on the Y2 direction side) is the sum of the small gap Gap1 and the small gap Gap2.

Each of the small gap Gap1 and the small gap Gap2 has a dimension of, for example, about 1 mm. In this case, the small gap Gap3 has a dimension of about 2 mm. In the following description, it is assumed that both the small gap Gap1 and the small gap Gap2 are provided between the second metal member 902 and the pair of facing side surfaces 712b of the fitting recess 712 of the first metal member 701.

### (Welded Portion)

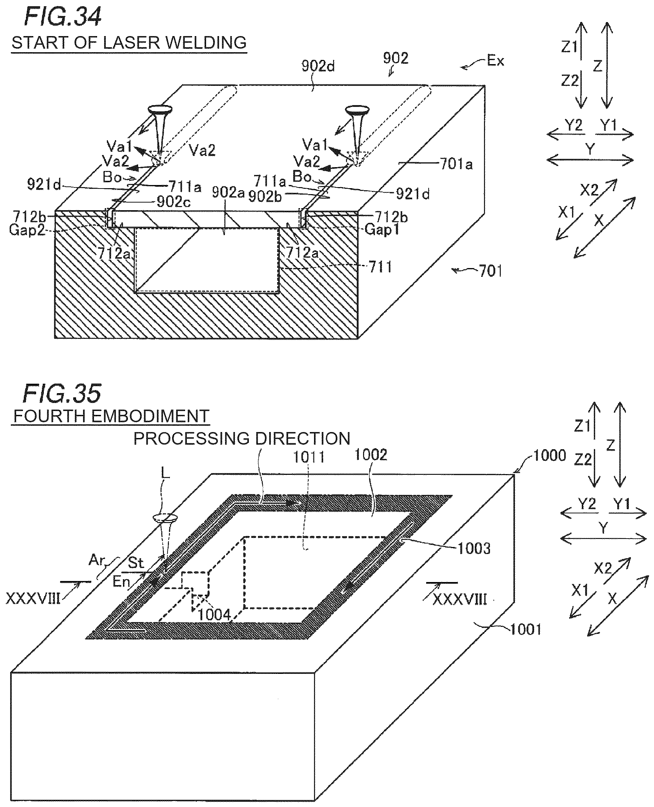

As shown in FIG. 31, the welded portions 903 are formed by melting and solidifying the first metal member 701 and the second metal member 902. That is, the welded portions 903 are formed by melting the boundaries Bo (see FIG. 34) between the pair of facing side surfaces 712b of the fitting recess 712 of the first metal member 701 and the pair of side surfaces 902b and 902c of the second metal member 902 with the laser L (see FIG. 34) and then solidifying the boundaries Bo. The welded portion 903 is a joint (weld) portion between the first metal member 701 and the second metal member 902. The boundaries Bo refer to boundaries between the pair of facing side surfaces 712b and the pair of side surfaces 902b (and 902c) of the second metal member 902 in the Y direction.

In the third embodiment, the dimensions of the small gap Gap1 and the small gap Gap2 are relatively large. Therefore, the laser L is radiated to the exposed portions of the pair of placement surfaces 712a of the fitting recess 712 of the first metal member 701, the pair of facing side surfaces 712b of the fitting recess 712 of the first metal member 701, and the pair of side surfaces 902b and 902b of the second metal member 902.

The welded portion 903 includes a first portion 931 and a second portion 932. The first portion 931 is provided across the first metal member 701 and the second metal member 902 in the Y direction. The second portion 932 is provided across the first metal member 701 and the second metal member 902 in the Z2 direction.

The first portion 931 has a tapered shape in which the width decreases toward the Z2 direction side. The second portion 932 has a divergent shape in which the width increases toward the Z1 direction side. In the Y direction, the maximum width of the second portion 932 is larger than the maximum width of the first portion 931. In the Y direction, the maximum width of the first portion 931 is substantially the same as the minimum width of the second portion 932.

The above welded portion 903 is formed at the boundary Bo (see FIG. 34) between the first metal member 701 and the second metal member 902.

### (Metal Member Joining Method)

Hereinafter, the j oining method for the metal member 900 according to the third embodiment will be described with reference to FIGS. 28 and 32 to 34. Steps S702 and S704 are the same as steps S702 and S704 in the second embodiment, respectively, and therefore description thereof will be omitted.

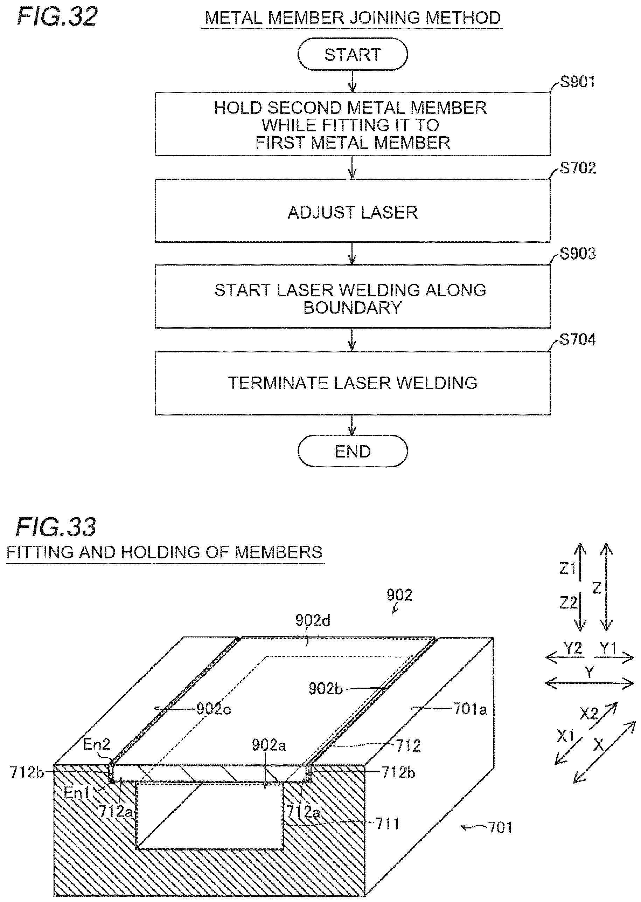

As shown in FIG. 33, in step S901, the second metal member 902 is held while being fitted to the first metal member 701. That is, as shown in FIG. 33, in step S901, the operator fits the second metal member 902 to the fitting recess 712 of the first metal member 701, and then the second metal member 902 is held by the first metal member 701. Step S901 is an example of the "step of contact" in the claims.

Step S901 is a step in which the end En1 on the Z2 direction side for the side surface 902b (or the side surface 902c) of the second metal member 902 along the Z2 direction is brought into contact with the first metal member 701 such that part of at least one of the pair of placement surfaces 712a is exposed. The part of the placement surfaces 712a of the first metal member 701 are exposed through the small gap Gap1 and the small gap Gap2. That is, the exposed portions are the end portion on the Y1 direction side for the placement surface 712a on the Y1 direction side and the end portion on the Y2 direction side for the placement surface 712a on the Y2 direction side. The part of the pair of placement surfaces 712a of the first metal member 701 are in contact with the space outside the metal member 900 via the small gap Gap1 and the small gap Gap2 in the Z1 direction, the X1 direction, and the X2 direction.

In step S903 (see FIG. 32), welding using the laser L is started along the boundaries Bo as shown in FIG. 34. That is, step S903 is a step in which the first metal member 701 and the second metal member 902 are joined by welding together by radiating the laser L toward end surface portions 721d of the second metal member 702. At this time, the laser L is radiated also to the end surface portions 711a of the front surface 701a of the first metal member 701 and the exposed portions of the placement surfaces 712a of the first metal member 701 by radiating the laser L toward the end surface portions 921d of the second metal member 902. In this manner, step S903 is a step of joining the side surface 902b and the side surface 902c of the second metal member 902, the facing side surfaces 712b of the fitting recess 712, and the exposed portions of the placement surfaces 712a of the first metal member 701 by welding together using the laser L. Step S903 is an example of the "step of joining by welding" in the claims.

The end surface portion 921d of the second metal member 902 is a surface near the exposed placement surface 712a in the front surface 902d of the second metal member 902. The end surface portion 921d of the second metal member 902 is a surface near the side surface 902b (or the side surface 902c) of the second metal member 902 in the front surface 902d that is continuous with the end En2 of the side surface 902b (or the side surface 902c) on the Z1 direction side.

Specifically, step S903 is a step in which the adjusted laser L is radiated toward the exposed portion of the placement surface 712a of the first metal member 701, the end surface portion 711a of the first metal member 701, and the end surface portion 921d of the second metal member 902 while moving the held first metal member 701 and the held second metal member 902 in the X1 direction (X2 direction, Y1 direction, or Y2 direction) relative to the laser L radiated in the Z2 direction (radiation direction) (see FIG. 34). The laser welding may be performed by the wobbling process as in the first embodiment.

At this time, as shown in FIG. 34, the metal vapor generated by radiating the laser L to the exposed portion of the placement surface 712a of the first metal member 701, the end surface portion 711a of the first metal member 701, and the end surface portion 921d of the second metal member 902 is discharged to the external space Ex from each of the small gap Gap1 and the small gap Gap2. Each of the small gap Gap1 and the small gap Gap2 is a space that communicates with the external space Ex. That is, the metal vapor generated by radiating the laser L to the exposed portion of the placement surface 712a of the first metal member 701, the end surface portion 711a of the first metal member 701, and the end surface portion 921d of the second metal member 902 is discharged via the small gap Gap1 and the small gap Gap2, for example, in the Va1 direction and the Va2 direction. Further, the metal vapor generated by radiating the laser L to the end surface portion 711a of the first metal member 701 and the end surface portion 921d of the second metal member 902 is directly discharged to the external space Ex.

After step S704, the joining method for the metal member 900 is terminated.

### (Effects of Third Embodiment)

The third embodiment has the following effects.

In the third embodiment, as described above, the joining method for the metal member 900 includes step S903 of joining the first metal member 701 and the second metal member 902 by welding together by radiating the laser L toward the end surface portion 921d of the second metal member 902. Therefore, the metal vapor of the first metal member 701 and the second metal member 902 generated by the laser L radiated toward the end surface portion 921d of the second metal member 902 can be discharged to the small gap Gap1 (or the small gap Gap2: space) that exposes the placement surface 712a of the first metal member 701. Thus, the metal vapor generated from the first metal member 701 and the second metal member 902 can easily be discharged to the external space Ex outside the metal member, thereby suppressing the entry of the metal vapor into the molten metal of the second metal member 902. Since the front surface 701a of the first metal member 701 and the front surface 902d of the second metal member 902 are in contact with the external space Ex outside the metal member 900, the metal vapor generated by radiating the laser L to the end surface portion 921d of the second metal member 902 is directly discharged to the external space Ex. Therefore, the entry of the metal vapor into the molten metal of the second metal member 902 included in the metal member 900 can be suppressed, thereby suppressing the formation of blowholes in the joint portion formed by the solidification of the molten metal of the first metal member 701 and the second metal member 902 included in the metal member 900. By suppressing the formation of blowholes in the joint portion, it is possible to suppress a decrease in strength of the joint portion due to the blowholes.

In the third embodiment, as described above, step S903 includes the step of joining the side surface 902b and the side surface 902c of the second metal member 902, the facing side surfaces 712b of the fitting recess 712, and the exposed portions of the placement surfaces 712a of the first metal member 701 by welding together using the laser L. Thus, it is possible to increase the amount of metal melted by the laser L, thereby ensuring the joining strength by welding the first metal member 701 and the second metal member 902.

The other effects of the third embodiment are the same as the effects of the first embodiment, and therefore description thereof will be omitted.

### [Possible Application Example]

It is assumed that the joining method for the metal member 900 according to the third embodiment is applied to processing of a manifold to be mounted on a vehicle such as an automobile as in the second embodiment. Since the possible application example is the same as that of the second embodiment, description thereof will be omitted.

### [Fourth Embodiment]

The configuration of a joining method for a metal member 1000 according to a fourth embodiment will be described with reference to FIGS. 35 to 44. In the fourth embodiment, a first metal member 1001 and a second metal member 1002 having a weld overlap region Ar are welded with the second metal member 1002 fitted to the first metal member 1001. In the fourth embodiment, detailed description will be omitted for the same components as those in the second embodiment.

As shown in FIG. 35, the joining method for the metal member 1000 is a laser welding method in which the first metal member 1001 and the second metal member 1002 are welded with the laser L (shown by a long dashed double-short dashed line in FIG. 35) with the second metal member 1002 fitted to the first metal member 1001 to process them into the metal member 1000. The metal member 1000 formed by the laser welding includes the first metal member 1001, the second metal member 1002, a welded portion 1003, and a cutout 1004. The configurations of the first metal member 1001, the second metal member 1002, and the welded portion 1003 will be described below. The laser L is an example of the "energy beam" in the claims. The cutout 1004 is an example of a "first release space" and a "first cutout" in the claims.

A direction in which the first metal member 1001 and the second metal member 1002 are arranged is defined as the Z direction, the Z direction toward the second metal member 1002 is defined as the Z1 direction, and the Z direction toward the first metal member 1001 is defined as the Z2 direction. A direction in which the second metal member 1002 extends is defined as the X direction, one direction of the X direction is defined as the X1 direction, and the other direction of the X direction is defined as the X2 direction. A direction orthogonal to both the X direction and the Z direction is defined as the Y direction, one direction of the Y direction is defined as the Y1 direction, and the other direction of the Y direction is defined as the Y2 direction. The Z2 direction is an example of the "radiation direction" in the claims.

### (First Metal Member)

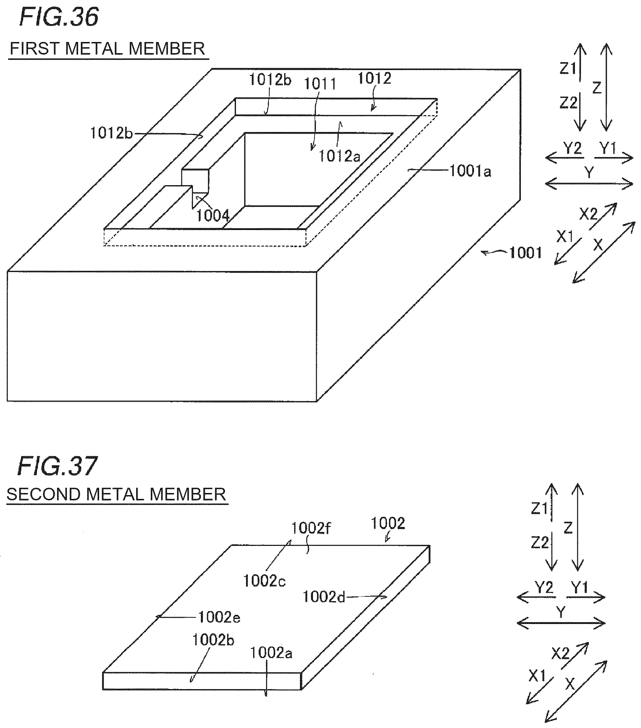

As shown in FIG. 36, the first metal member 1001 includes a recess 1011 and a fitting recess 1012. FIG. 36 shows the first metal member 1001 before the first metal member 1001 and the second metal member 1002 are welded. The recess 1011 is an example of the "first channel recess" in the claims.

The recess 1011 is a portion that is recessed in the Z2 direction from a placement surface 1012a of the fitting recess 1012 described later. The recess 1011 is provided to adjoin the fitting recess 1012 on the Z2 direction side. The placement surface 1012a is an example of the "first surface" and the "bottom surface of the fitting recess" in the claims.

The fitting recess 1012 is a portion that is recessed in the Z2 direction from a front surface 1001a of the first metal member 1001 on the Z1 direction side. The second metal member 1002 inserted from the Z1 direction side is fitted to the fitting recess 1012. The fitting recess 1012 includes the placement surface 1012a and a plurality of (four) facing side surfaces 1012b. The plurality of facing side surfaces 1012b may be two, three, five, or more facing side surfaces.

The placement surface 1012a is a looped bottom surface when viewed from the Z1 direction side. The placement surface 1012a is a bottom surface where a portion of a back surface 1002a (see FIG. 37) of the second metal member 1002 on the X1 direction side, a portion of the back surface 1002a on the X2 direction side, a portion of the back surface 1002a on the Y1 direction side, and a portion of the back surface 1002a on the Y2 direction side are placed. The placement surface 1012a is provided on the X1 direction side of the recess 1011, the X2 direction side of the recess 1011, the Y1 direction side of the recess 1011, and the Y2 direction side of the recess 1011. The plurality of facing side surfaces 1012b is surfaces that face a side surface 1002b (see FIG. 37) of the second metal member 1002 on the X1 direction side, a side surface 1002c on the X2 direction side, a side surface 1002d of the second metal member 1002 on the Y1 direction side, and a side surface 1002e on the Y2 direction side. The plurality of facing side surfaces 1012b is surfaces extending in the Z1 direction from the placement surface 1012a.

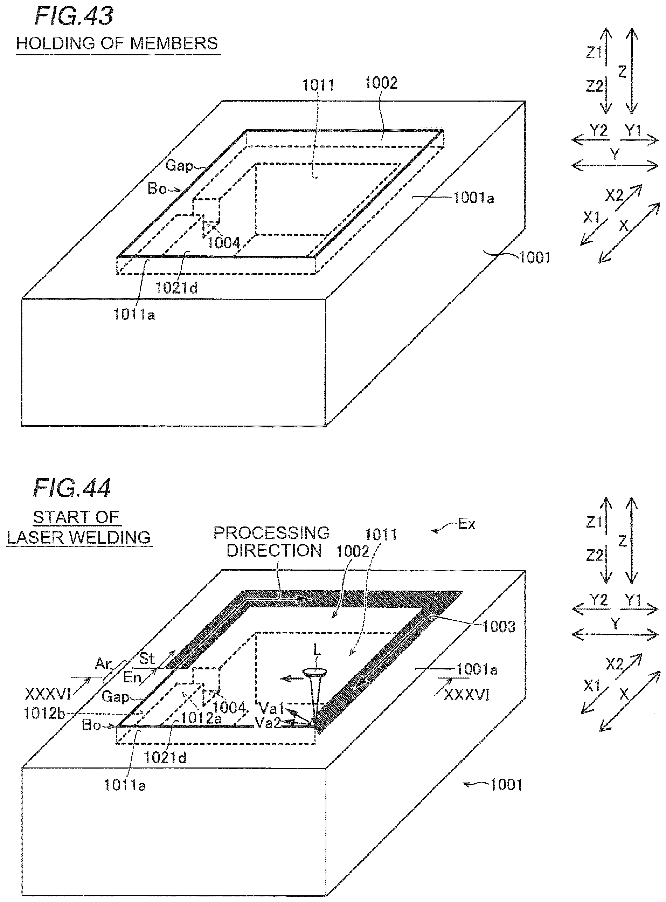

The fitting recess 1012 is provided to adjoin the recess 1011 on the Z1 direction side. When the second metal member 1002 is fitted to the fitting recess 1012, a small gap Gap is provided between the second metal member 1002 and the facing side surface 1012b of the fitting recess 1012 of the first metal member 1001 (see FIG. 43). The small gap Gap is provided around the second metal member 1002 (X1 direction side, X2 direction side, Y1 direction side, and Y2 direction side). The small gap Gap has a dimension of, for example, about 50 µm. The dimension of the small gap Gap is preferably as small as possible within a range of 50 µm or more and 1 mm or less.

### (Second Metal Member)

As shown in FIG. 37, the second metal member 1002 is a molded product made of metal such as aluminum or iron. The second metal member 1002 is a plate-shaped member extending in the X direction and the Y direction. The second metal member 1002 has a front surface 1002f on the Z1 direction side. The front surface 1002f is an example of the "second surface" in the claims.

### (Welded Portion)

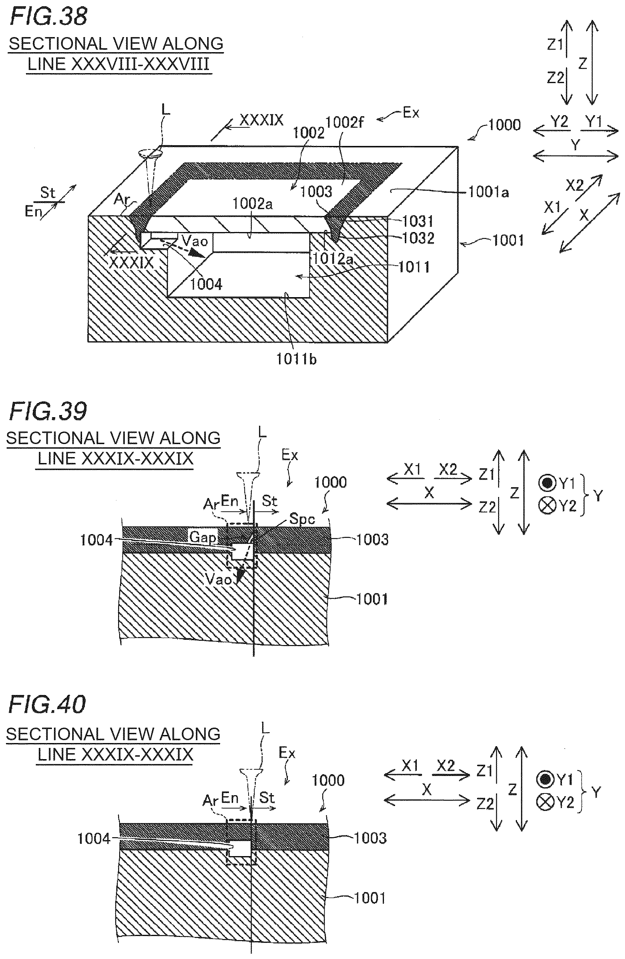

As shown in FIG. 38, the welded portion 1003 is formed by melting and solidifying the first metal member 1001 and the second metal member 1002. That is, the welded portion 1003 is formed by melting the boundaries Bo (see FIG. 43) between the plurality of facing side surfaces 1012b of the fitting recess 1012 of the first metal member 1001 and the plurality of side surfaces 1002b, 1002c, 1002d, and 1002e of the second metal member 1002 with the laser L and then solidifying the boundaries Bo. The welded portion 1003 is a joint (weld) portion between the first metal member 1001 and the second metal member 1002. The boundaries Bo refer to boundaries between the facing side surfaces 1012b and the side surfaces 1002b, 1002c, 1002d, and 1002e of the second metal member 1002 in the X direction and the Y direction.

The welded portion 1003 includes a first portion 1031 and a second portion 1032. The first portion 1031 and the second portion 1032 are provided across the first metal member 1001 and the second metal member 1002 in the Y direction. The first portion 1031 is provided integrally with the second portion 1032 on the Z2 direction side. The first portion 1031 has a tapered shape in which the width decreases toward the Z2 direction side. The second portion 1032 has a divergent shape in which the width increases toward the Z1 direction side.

The above welded portion 1003 is formed at the boundary Bo between the first metal member 1001 and the second metal member 1002.

### (Cutout)

As shown in FIG. 38, the metal member 100 of the fourth embodiment has the cutout 1004 through which metal vapor generated when the first metal member 1001 is melted is released to the recess 1011 instead of the external space Ex. The cutout 1004 is provided in the weld overlap region Ar where the welding using the laser L overlaps when the welded portion 1003 is formed, and has a space through which the metal vapor generated along with the welding using the laser L is released to the recess 1011. For example, the metal vapor is released in a Va direction and discharged toward the recess 1011 through the cutout 1004. The metal vapor contains air and gas generated when the first metal member 1001 is melted by the laser L.

The weld overlap region Ar will be described with reference to FIG. 35.

As shown in FIG. 35, when the boundaries Bo between the first metal member 1001 and the second metal member 1002 are provided on the entire circumference of the second metal member 1002, a start point St of the welding using the laser L and an end point En of the welding using the laser L agree with each other to seal the boundaries Bo. Therefore, the welded portion 3 formed at the start point St by the laser L is welded again by the laser L when the end point En is reached. In this manner, at the welded portion 3 formed at the start point St, the welding using the laser L overlaps (duplicates). The weld overlap region Ar is a region for the first metal member 1001 and the second metal member 1002 in a range including the start point St (or the end point En) and portions around the start point St (or the end point En).

The function of the cutout 1004 will be described with reference to FIGS. 39 and 40.

FIG. 39 is a diagram showing a state in which the processing using the laser L has started from the start point St and then reached a point behind the end point En. In the welding using the laser L, the heat distribution of a high-temperature portion of heat transferred from the front surface 1001a of the first metal member 1001 and the front surface 1002f of the second metal member 1002 to the placement surface 1012a is a heat distribution that shrinks in the Z2 direction. Therefore, the first metal member 1001 and the second metal member 1002 on the Z1 direction side are melted prior to the first metal member 1001 and the second metal member 1002 on the Z2 direction side.

Therefore, a space Spc closed on the Z1 direction side is formed as shown in FIG. 39. In this state, the released metal vapor is not discharged to the external space Ex, but is discharged to the recess 1011 via the cutout 1004. Therefore, the processing is not performed by the laser L at the end point En with the metal vapor confined in the space Spc. Thus, expansion of the metal vapor due to the heat of the laser L is avoided. Accordingly, the formation of blowholes in the weld overlap region Ar due to the expansion of the metal vapor is avoided, and the boundaries Bo are sealed without the formation of blowholes in the weld overlap region Ar as shown in FIG. 40.

As shown in FIG. 38, such a cutout 1004 is formed in the weld overlap region Ar on the placement surface 1012a of the fitting recess 1012 of the first metal member 1001. The cutout 1004 communicates the space Spc (part of the small gap Gap in FIG. 43) between the side surface 1002b (side surface 1002c, side surface 1002d, and side surface 1002e) of the second metal member 1002 and the facing side surface 1012b of the first metal member 1001 with the recess 1011. The cutout 1004 is formed by recessing a portion of the placement surface 1012a of the fitting recess 1012 on the recess 1011 side to the Z2 direction side. The cutout 1004 is recessed to the Z2 direction side up to a midpoint between the placement surface 1012a of the fitting recess 1012 and the bottom surface 1011b of the recess 1011.

### (Metal Member Joining Method)

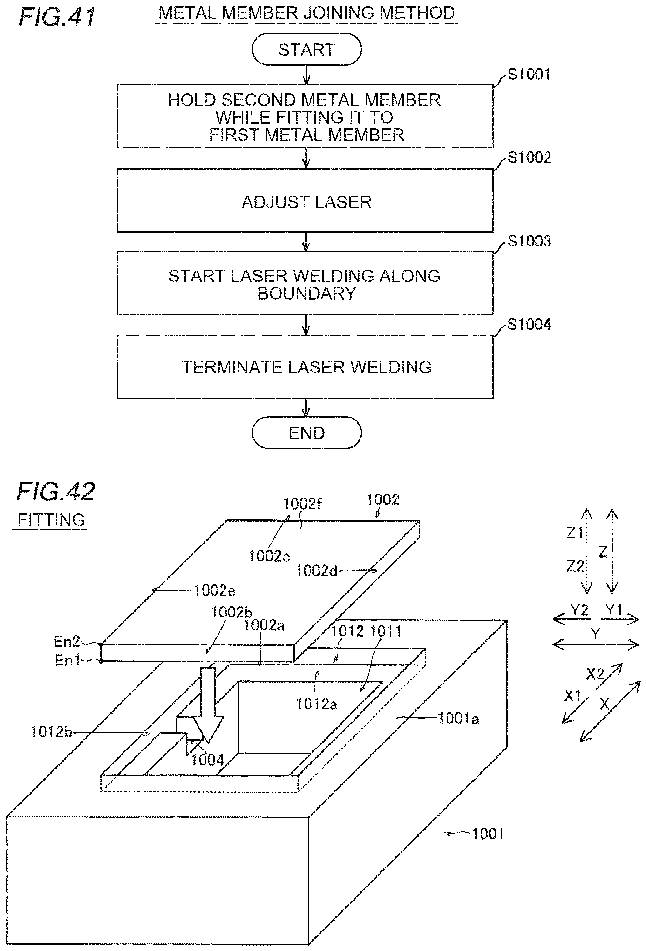

Hereinafter, the joining method for the metal member 1000 according to the fourth embodiment will be described with reference to FIGS. 41 to 45.

As shown in FIG. 41, in step S1001, the second metal member 1002 is held while being fitted to the first metal member 1001. That is, as shown in FIGS. 42 and 43, in step S1001, the operator fits the second metal member 1002 to the fitting recess 1012 of the first metal member 1001, and then the second metal member 1002 is held by the first metal member 1001. Step S1001 is an example of the "step of contact" in the claims.

Step S1001 is a step in which the end En1 on the Z2 direction side for each of the side surfaces 1002b, 1002c, 1002d, and 1002e of the second metal member 1002 along the Z2 direction is brought into contact with the first metal member 1001 such that part of the placement surface 1012a is exposed. The part of the placement surface 1012a of the first metal member 1001 is exposed through the small gap Gap. That is, the exposed portions are the end portion of the placement surface 1012a on the X1 direction side, the end portion of the placement surface 1012a on the X2 direction side, the end portion of the placement surface 1012a on the Y1 direction side, and the end portion of the placement surface 1012a on the Y2 direction side. The part of the placement surface 1012a of the first metal member 1001 is in contact with the external space Ex outside the metal member 1000 via the small gap Gap in the Z1 direction, the X1 direction, the X2 direction, the Y1 direction, and the Y2 direction.

In step S1002 (see FIG. 41), the laser L is adjusted. That is, in step S1002, the laser L is adjusted to a spot diameter corresponding to the small gap Gap between the facing side surface 1012b and the side surface 1002b (or the side surface 1002c) of the second metal member 1002, and the focal position, the inclination of the laser L, the output of the laser L, the processing direction, etc. are adjusted. The focal position of the laser L is set at the height position of the front surface 1001a of the first metal member 1001 and an end surface portion 1021d.

In step S1003 (see FIG. 41), welding using the laser L is started from the start point St along the boundaries Bo as shown in FIG. 44. The boundaries Bo are provided at the end on the Z1 direction side where the laser L can directly be radiated from the Z1 direction side. Step S1003 is a step in which the first metal member 1001 and the second metal member 1002 are joined by welding together by radiating the laser L toward the end surface portion 1021d of the second metal member 1002. At this time, the laser L is radiated also to an end surface portion 1011a of the front surface 1001a of the first metal member 1001 by radiating the laser L toward the end surface portion 1021d of the second metal member 1002. In this manner, step S1003 is a step of joining the side surface 1002b (side surface 1002c, side surface 1002d, and side surface 1002e) of the second metal member 1002 and the facing side surface 1012b of the fitting recess 1012 by welding together using the laser L. Step S1003 is an example of the "step of j oining by welding" in the claims.

The end surface portion 1011a is a surface near the exposed placement surface 1012a in the front surface 1001a of the first metal member 1001. The end surface portion 1011a is a surface near the facing side surface 1012b of the first metal member 1001 in the front surface 1001a that is continuous with the end En2 of the facing side surface 1012b on the Z1 direction side. The end surface portion 1021d of the second metal member 1002 is a surface near the exposed placement surface 1012a in the front surface 1002f of the second metal member 1002. The end surface portion 1021d of the second metal member 1002 is a surface near the side surface 1002b (side surface 1002c, side surface 1002d, and side surface 1002e) of the second metal member 1002 in the front surface 1002f that is continuous with the end En2 of the side surface 1002b (side surface 1002c, side surface 1002d, and side surface 1002e) on the Z1 direction side.

Specifically, step S1003 is a step in which the adjusted laser L is radiated toward the end surface portion 1011a of the first metal member 1001 and the end surface portion 1021d of the second metal member 1002 while moving the held first metal member 1001 and the held second metal member 1002 in the X1 direction (X2 direction, Y1 direction, or Y2 direction) relative to the laser L radiated in the Z2 direction (radiation direction). The laser welding may be performed by the wobbling process as in the second embodiment.

At this time, as shown in FIG. 44, the metal vapor generated by radiating the laser L to the end surface portion 1011a of the first metal member 1001 and the end surface portion 1021d of the second metal member 1002 is discharged to the external space Ex from the small gap Gap. The small gap Gap is a space that communicates with the external space Ex. That is, the metal vapor generated by radiating the laser L to the end surface portion 1011a of the first metal member 1001 and the end surface portion 1021d of the second metal member 1002 is discharged via the small gap Gap, for example, in the Va1 direction and the Va2 direction. Further, the metal vapor generated by radiating the laser L to the end surface portion 1011a of the first metal member 1001 and the end surface portion 1021d of the second metal member 1002 is directly discharged to the external space Ex.

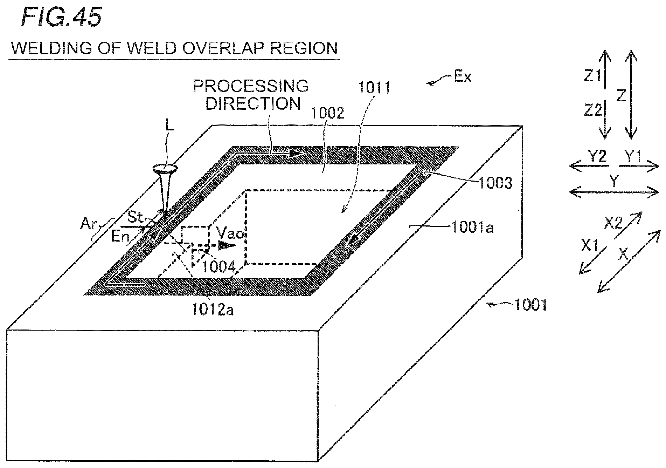

As shown in FIG. 45, step S1003 is a step of melting the side surface 1002e of the second metal member 1002 and the facing side surface 1012b of the first metal member 1001 using the laser L in the weld overlap region Ar. During step S1003, the metal vapor is released from the cutout 1004. That is, in step S1003, the metal vapor is discharged from the space Spc formed in the weld overlap region Ar where the welding using the laser L overlaps (duplicates) to the recess 1011 via the cutout 1004. Therefore, the boundaries Bo are sealed without the formation of blowholes in the weld overlap region Ar (see FIG. 40).

In step S1004 (see FIG. 41), the welding using the laser L along the boundaries Bo is terminated when the welding using the laser L is completed up to the end point En of the boundaries Bo. In step S1004, the molten metal is cooled and solidified, thereby forming the welded portion 1003.

After step S1004, the joining method for the metal member 1000 is terminated.

### (Effects of Fourth Embodiment)

The fourth embodiment has the following effects.

In the fourth embodiment, as described above, the joining method for the metal member 1000 includes step S1003 of joining the first metal member 1001 and the second metal member 1002 by welding together by radiating the laser L toward the end surface portion 1021d of the second metal member 1002. Therefore, the metal vapor of the first metal member 1001 and the second metal member 1002 generated by the laser L radiated toward the end surface portion 721d of the second metal member 1002 can be discharged to the small gap Gap that exposes the placement surface 1012a of the first metal member 1001. Thus, the metal vapor generated from the first metal member 1001 and the second metal member 1002 can easily be discharged to the external space Ex outside the metal member, thereby suppressing the entry of the metal vapor into the molten metal of the second metal member 1002. Since the placement surface 1012a of the first metal member 1001 and the front surface 1002f of the second metal member 1002 are in contact with the external space Ex outside the metal member 1000, the metal vapor generated by radiating the laser L to the end surface portion 1011a of the second metal member 1002 is directly discharged to the external space Ex. Therefore, the entry of the metal vapor into the molten metal of the second metal member 1002 included in the metal member 1000 can be suppressed, thereby suppressing the formation of blowholes in the joint portion formed by the solidification of the molten metal of the first metal member 1001 and the second metal member 1002 included in the metal member 1000. By suppressing the formation of blowholes in the joint portion, it is possible to suppress a decrease in strength of the joint portion due to the blowholes.

**In** the fourth embodiment, as described above, the first metal member 1001 includes the recess 1011 through which a fluid flows and that is provided on the Z2 direction (radiation direction) side of the fitting recess 1012. The first metal member 1001 includes the cutout 1004 (release space) that is provided in the weld overlap region Ar where the welding using the laser L overlaps and through which the metal vapor generated along with the welding using the laser L is released to the recess 1011. Step S1001 of fitting includes the step of fitting the second metal member 1002 to the fitting recess 1012 to form the recess 1011 as the channel through which the fluid flows. Step S1003 of joining by welding includes the step of melting the side surface 1002b (1002c, 1002d, and 1002e) of the second metal member 1002 and the facing side surface 1012b of the first metal member 1001 using the laser L in the weld overlap region Ar. In the welding using the laser L, the heat distribution of the high-temperature portion of the heat transferred from the front surface 1001a of the first metal member 1001 and the front surface 1002f of the second metal member 1002 is the shrinking heat distribution. Therefore, the melted area of each of the front surface 1001a of the first metal member 1001 and the front surface 1002f of the second metal member 1002 is larger than that of the deeper portions of the first metal member 1001 and the second metal member 1002. Since the front surface 1001a of the first metal member 1001 and the front surface 1002f of the second metal member 1002 are melted first in the weld overlap region Ar, the space Spc closed on the front surface side of the side surface 1002b (1002c, 1002d, and 1002e) of the second metal member 1002 and the facing side surface 1012b of the fitting recess 1012 of the first metal member 1001 is formed. In this case, the metal vapor generated when the weld overlap region Ar is welded remains in the space Spc, and blowholes are formed in the joint portion formed by the solidification of the molten first metal member 1001 and the molten second metal member 1002. By providing the cutout 1004 (release space) in the weld overlap region Ar, the closed space is not formed and the metal vapor generated during the welding using the laser L can be released to the recess 1011, thereby suppressing the formation of blowholes in the joint portion formed by the solidification of the molten first metal member 1001 and the molten second metal member 1002.

In the fourth embodiment, as described above, the release space is the cutout 1004 formed in the weld overlap region Ar on the placement surface 1012a of the fitting recess 1012 of the first metal member 1001. Step S1003 of joining by welding includes the step of melting the side surface 1002b (1002c, 1002d, and 1002e) of the second metal member 1002 and the facing side surface 1012b of the first metal member 1001 using the laser L in the weld overlap region Ar. By creating the release space using the cutout 1004, the complexity of design changes to the mold for forming the release space in the first metal member 1001 can be suppressed, and therefore the first metal member 1001 having the release space can be created relatively easily.

In the fourth embodiment, as described above, the metal member 1000 includes the first metal member 1001 having the fitting recess 1012 that is recessed in the Z2 direction from the front surface 1001a, and the recess 1011 through which the fluid flows and that is provided on the Z2 direction side of the fitting recess 1012. The metal member 1000 includes the second metal member 1002 that is fitted to the fitting recess 1012 and has the side surface 1002b (side surface 1002c, side surface 1002d, and side surface 1002e) along the Z2 direction, and the welded portion 1003 formed by melting and solidifying the side surface 1002b (side surface 1002c, side surface 1002d, and side surface 1002e) of the second metal member 1002 and the facing side surface 1012b of the fitting recess 1012 that faces the side surface 1002b (side surface 1002c, side surface 1002d, and side surface 1002e) of the second metal member 1002. The metal member 1000 includes the cutout 1004 that is provided in the weld overlap region Ar where the welding using the laser L overlaps when the welded portion 1003 is formed and through which the metal vapor generated along with the welding using the laser L is released to the recess 1011. In the welding using the laser L, the heat distribution of the high-temperature portion of the heat transferred from the front surface 1001a of the first metal member 1001 and the front surface 1001a of the second metal member 1002 is the shrinking heat distribution. Therefore, the melted area of each of the front surface 1001a of the first metal member 1001 and the front surface 1001a of the second metal member 1002 is larger than that of the deeper portions of the first metal member 1001 and the second metal member 1002. Since the front surface 1001a of the first metal member 1001 and the front surface 1001a of the second metal member 1002 are melted first in the weld overlap region Ar, the closed space that is closed on the front surface 1001a side of the side surface 1002b (side surface 1002c, side surface 1002d, and side surface 1002e) of the second metal member 1002 and the facing side surface 1012b of the fitting recess 1012 of the first metal member 1001 is formed. In this case, the metal vapor generated when the weld overlap region Ar is welded remains in the closed space, and blowholes are formed in the joint portion formed by the solidification of the molten first metal member 1001 and the molten second metal member 1002. By providing the cutout 1004 in the weld overlap region Ar, the closed space is not formed and the metal vapor generated during the welding using the laser L can be released to the recess 1011, thereby providing the metal member 1000 that can suppress the formation of blowholes in the joint portion formed by the solidification of the molten first metal member 1001 and the molten second metal member 1002.

In the fourth embodiment, as described above, the cutout 1004 is formed in the weld overlap region Ar on the bottom surface of the fitting recess 1012 of the first metal member 1001. By creating the release space using the cutout 1004, the complexity of design changes to the mold for forming the release space in the first metal member 1001 can be suppressed, and therefore the first metal member 1001 having the cutout 1004 can be created relatively easily.

The other effects of the fourth embodiment are the same as the effects of the second embodiment, and therefore description thereof will be omitted.

### [Possible Application Example]

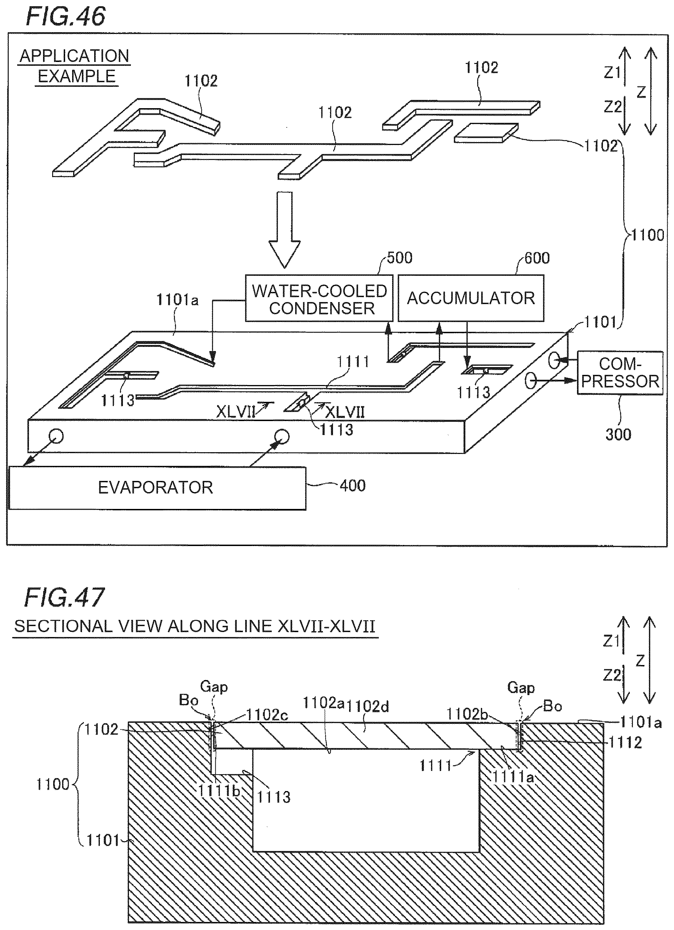

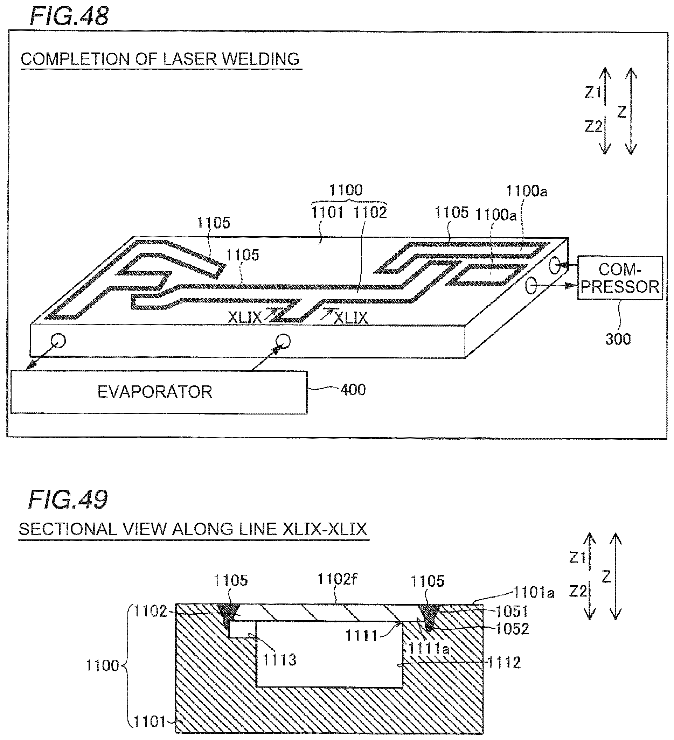

As shown in FIG. 46, it is assumed that the joining method for the metal member 1000 according to the fourth embodiment (see FIG. 41) is applied to processing of a manifold 1100 to be mounted on a vehicle such as an automobile as in the second embodiment. The manifold 1100 includes a refrigerant circuit (channel 1100a (see FIG. 48)) that connects the compressor 300, the evaporator 400, the water-cooled condenser 500, and the accumulator 600 included in a cooling system for a vehicle. The manifold 1100 is a member corresponding to the above metal member 1000. Such an application example will be described with reference to FIGS. 46 to 49. In the possible application example, the same components as those in the above embodiment will be denoted by the same signs, and description thereof will be omitted.

As shown in FIG. 46, the joining method for the metal member 1000 is performed to join a valve body 1101 and a plate 1102 in the manifold 1100 and to seal the channel 1100a (see FIG. 48) through which a refrigerant flows within the manifold 1100. The valve body 1101 is a member corresponding to the above first metal member 1001. The plate 1102 is a member corresponding to the above second metal member 1002.

The joining method for the manifold 1100 is a laser welding method in which the valve body 1101 and the plate 1102 are welded with the laser L with the plate 1102 fitted to the valve body 1101 to process them into the manifold 1100. The manifold 1100 formed by the laser welding includes the valve body 1101, the plate 1102, and welded portions 1105 (see FIG. 48). The configurations of the valve body 1101, the plate 1102, and the welded portion 1105 will be described.

A direction in which the valve body 1101 and the plate 1102 are arranged is defined as the Z direction, the Z direction toward the plate 1102 is defined as the Z1 direction, and the Z direction toward the valve body 1101 is defined as the Z2 direction. One direction out of the directions orthogonal to the Z direction is defined as the X direction, one direction of the X direction is defined as the X1 direction, and the other direction of the X direction is defined as the X2 direction. A direction orthogonal to both the X direction and the Z direction is defined as the Y direction, one direction of the Y direction is defined as the Y1 direction, and the other direction of the Y direction is defined as the Y2 direction. The Z2 direction is an example of the "radiation direction" in the claims.

### (Valve Body)

As shown in FIG. 46, the valve body 1101 is an aluminum molded product (die-cast product). The surface of the die-cast product is processed relatively roughly, and metal vapor is easily generated by the laser L. With the joining method for the metal member 1000 according to the fourth embodiment (see FIG. 41), the metal vapor can effectively be discharged to the external space Ex (see FIG. 44) and a channel recess 1112 (see FIG. 45). For ease of description, FIGS. 46 and 47 show a state before the valve body 1101 and the plate 1102 are welded.

Specifically, as shown in FIG. 46, the valve body 1101 includes a fitting recess 1111, the channel recess 1112, and a cutout 1113.

The channel recess 1112 is a portion that is recessed in the Z2 direction from a placement surface 1111a of the fitting recess 1111. A plurality of channel recesses 1112 is provided in the valve body 1101. The fitting recess 1111 is a portion that is recessed in the Z2 direction from a front surface 1101a of the valve body 1101 on the Z1 direction side. The plate 1102 inserted from the Z1 direction side is fitted to the fitting recess 1111. By fitting the matching plate 1102, the opening of the channel recess 1112 in the Z1 direction is closed and the channel 1100a is formed. The fitting recess 1111 includes the placement surface 1111a and facing side surfaces 1111b. The placement surface 1111a is an example of the "bottom surface of the fitting recess" and the "first surface" in the claims.

When the plate 1102 is fitted to the fitting recess 1111, the small gap Gap is provided between the plate 1102 and the facing side surface 1111b of the fitting recess 1111 of the valve body 1101.

### (Plate)

As shown in FIG. 47, the plate 1102 is a molded product made of metal such as aluminum or iron. The plate 1102 is a plate-shaped member extending in the X direction and the Y direction. The plate 1102 has a back surface 1102a on the Z2 direction side. The plate 1102 has a side surface 1102b and a side surface 1102c. The plate 1102 has a front surface 1102d on the Z1 direction side. The front surface 1102d is an example of the "second surface" in the claims.

The pair of side surfaces 1102b and 1102c is continuous with the front surface 1102d at the ends of the pair of side surfaces 1102b and 1102c on the Z1 direction side. The pair of side surfaces 1102b and 1102b is continuous with the back surface 1102a at the ends of the pair of side surfaces 1102b and 1102c on the Z2 direction side.

### (Welded Portion)

The welded portion 1105 (see FIG. 49) is formed by melting and solidifying the valve body 1101 and the plate 1102. That is, the welded portion 1105 is formed by melting the boundaries Bo between the facing side surfaces 1111b of the fitting recess 1111 of the valve body 1101 and the side surface 1102b and the side surface 1102c of the plate 1102 with the laser L (see FIG. 44) and then solidifying the boundaries Bo. The welded portion 1105 includes a first portion 1151 and a second portion 1152. The first portion 1151 and the second portion 1152 have the same shapes as the first portion 1031 and the second portion 1032, respectively, and therefore description thereof will be omitted.

### (Joining Method for Manifold (Metal Member))

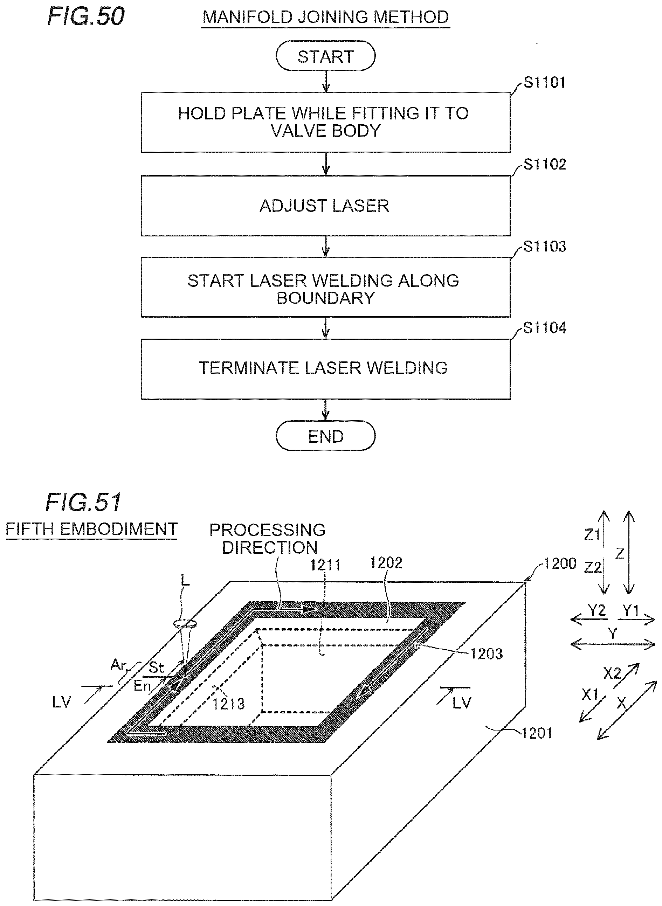

Steps S1101 to S1104 of the joining method for the manifold 1100 according to the application example of the fourth embodiment shown in FIG. 50 are the same as those in the above joining method for the metal member 1000 according to the fourth embodiment, and therefore description thereof will be omitted.

### [Fifth Embodiment]

The configuration of a joining method for a metal member 1200 according to a fifth embodiment will be described with reference to FIGS. 51 to 59. **In** the fifth embodiment, a first metal member 1201 having an inclined surface 1213 and a second metal member 1202 are welded with the second metal member 1202 fitted to the first metal member 1201. **In** the fifth embodiment, detailed description will be omitted for the same components as those in the second embodiment.

As shown in FIG. 51, the joining method for the metal member 1200 is a laser welding method in which the first metal member 1201 and the second metal member 1202 are welded with the laser L (shown by a long dashed double-short dashed line in FIG. 51) with the second metal member 1202 fitted to the first metal member 1201 to process them into the metal member 1200. The metal member 1200 formed by the laser welding includes the first metal member 1201, the second metal member 1202, and a welded portion 1203. The configurations of the first metal member 1201, the second metal member 1202, and the welded portion 1203 will be described below. The laser L is an example of the "energy beam" in the claims.

A direction in which the first metal member 1201 and the second metal member 1202 are arranged is defined as the Z direction, the Z direction toward the second metal member 1202 is defined as the Z1 direction, and the Z direction toward the first metal member 1201 is defined as the Z2 direction. A direction in which the second metal member 1202 extends is defined as the X direction, one direction of the X direction is defined as the X1 direction, and the other direction of the X direction is defined as the X2 direction. A direction orthogonal to both the X direction and the Z direction is defined as the Y direction, one direction of the Y direction is defined as the Y1 direction, and the other direction of the Y direction is defined as the Y2 direction. The Z2 direction is an example of the "radiation direction" in the claims.

### (First Metal Member)

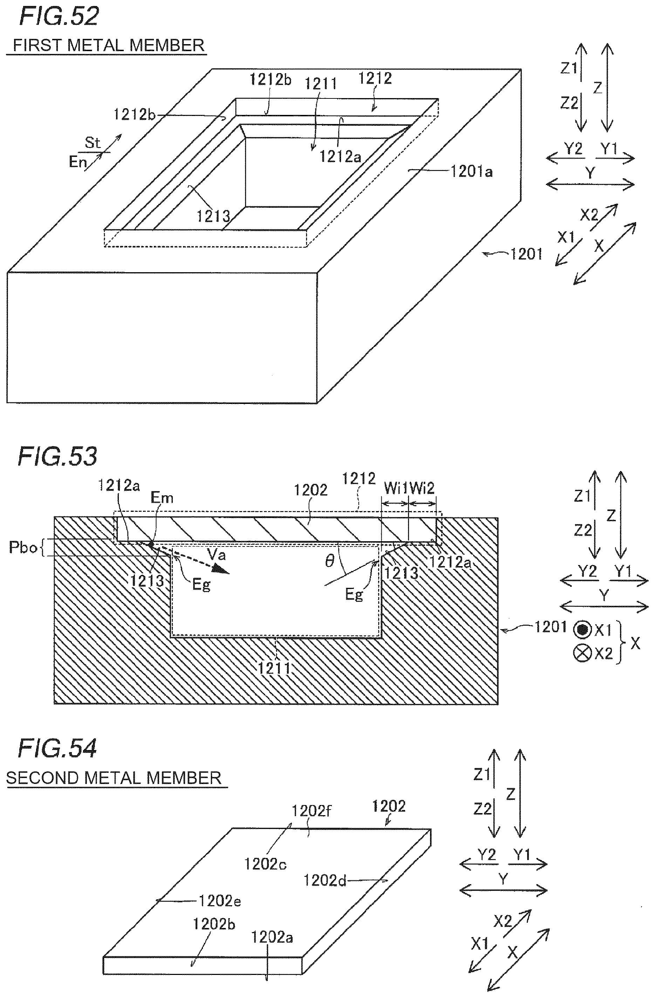

As shown in FIG. 52, the first metal member 1201 includes a recess 1211, a fitting recess 1212, and the inclined surface 1213. FIG. 52 shows the first metal member 1201 before the first metal member 1201 and the second metal member 1202 are welded. The recess 1211 is an example of the "first channel recess" in the claims. The inclined surface 1213 is an example of a "second release space" in the claims.

The recess 1211 is a portion that is recessed in the Z2 direction from a placement surface 1212a of the fitting recess 1212 described later. The recess 1211 is provided to adjoin the fitting recess 1212 on the Z2 direction side. The placement surface 1212a is an example of the "first surface" and the "bottom surface of the fitting recess" in the claims.

The fitting recess 1212 is a portion that is recessed in the Z2 direction from a front surface 1201a of the first metal member 1201 on the Z1 direction side. The second metal member 1202 inserted from the Z1 direction side is fitted to the fitting recess 1212. The fitting recess 1212 includes the placement surface 1212a and a plurality of (four) facing side surfaces 1212b. The plurality of facing side surfaces 1212b may be two, three, five, or more facing side surfaces.

The placement surface 1212a is a looped bottom surface when viewed from the Z1 direction side. The placement surface 1212a is a bottom surface where a portion of a back surface 1202a (see FIG. 54) of the second metal member 1202 on the X1 direction side, a portion of the back surface 1202a on the X2 direction side, a portion of the back surface 1202a on the Y1 direction side, and a portion of the back surface 1202a on the Y2 direction side are placed. The placement surface 1212a is provided on the X1 direction side of the recess 1211, the X2 direction side of the recess 1211, the Y1 direction side of the recess 1211, and the Y2 direction side of the recess 1211. The plurality of facing side surfaces 1212b is surfaces that face a side surface 1202b (see FIG. 54) of the second metal member 1202 on the X1 direction side, a side surface 1202c on the X2 direction side, a side surface 1202d of the second metal member 1202 on the Y1 direction side, and a side surface 1202e on the Y2 direction side. The plurality of facing side surfaces 1212b is surfaces extending in the Z1 direction from the placement surface 1212a.

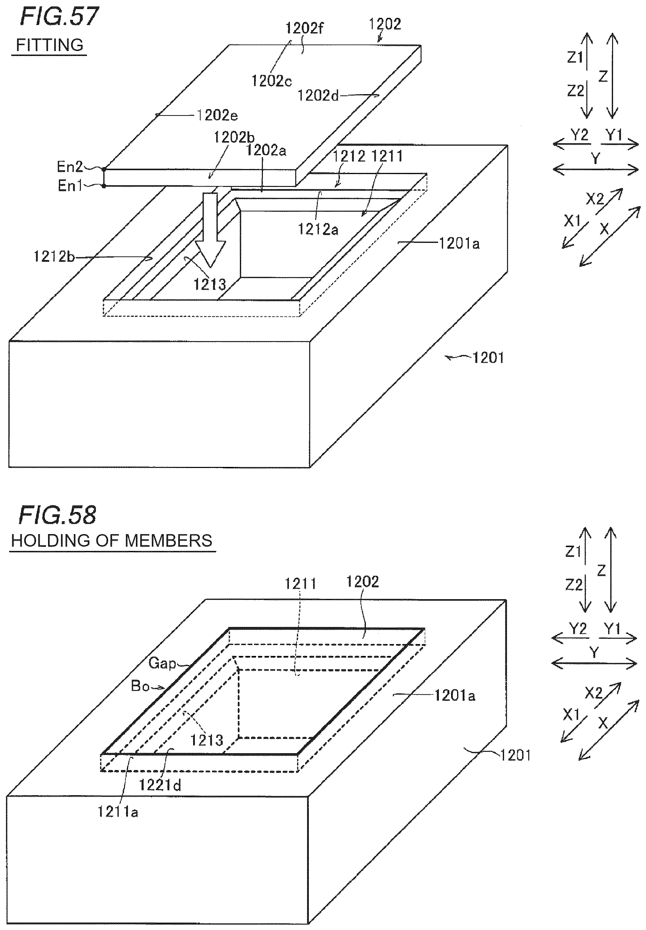

The fitting recess 1212 is provided to adjoin the recess 1211 on the Z1 direction side. When the second metal member 1202 is fitted to the fitting recess 1212, the small gap Gap is provided between the second metal member 1202 and the facing side surface 1212b of the fitting recess 1212 of the first metal member 1201 (see FIG. 58). The small gap Gap is provided around the second metal member 1202 (X1 direction side, X2 direction side, Y1 direction side, and Y2 direction side). The small gap Gap has a dimension of, for example, about 50 µm. The dimension of the small gap Gap is preferably as small as possible within a range of 50 µm or more and 1 mm or less.

### (Inclined Surface)

As shown in FIG. 53, the inclined surface 1213 of the fifth embodiment forms a space through which metal vapor Va generated along with the welding using the laser L is released to the recess 1211. The release space is a space between the inclined surface 1213 and the second metal member 1202. The inclined surface 1213 is provided on the recess 1211 side of the placement surface 1212a in a cross section along the Z2 direction.

The inclined surface 1213 extends along an edge Eg of the recess 1211 at a boundary Pbo between the fitting recess 1212 and the recess 1211. That is, as shown in FIG. 52, the inclined surface 1213 is provided from one end St to the other end En of the edge Eg of the recess 1211. The one end St is the start point St of the welding using the laser L, and the other end En is the end point En of the welding using the laser L. The inclined surface 1213 is provided in a loop on the edge Eg of the recess 1211 when viewed from the Z1 direction side. Specifically, the inclined surface 1213 is provided on the entire circumference of the edge Eg of the recess 1211 when viewed from the Z1 direction side. The sectional shape of the inclined surface 1213 along the Z2 direction is the same over the entire circumference.

As shown in FIG. 53, the inclined surface 1213 having such a configuration not only allows the metal vapor Va to be released to the recess 1211 but also prevents foreign matter Em that may be generated along with the welding using the laser L from falling toward the bottom of the recess 1211. That is, the inclined surface 1213 is a surface to which the foreign matter Em adheres by surface tension.

The inclined surface 1213 is inclined at a predetermined angle θ in the Z2 direction from the end of the placement surface 1212a on the recess 1211 side. The predetermined angle θ is a relatively gentle angle, and is preferably 45° or less, and more preferably about 30°. A width Wi1 of the inclined surface 1213 is such a dimension that the end of the inclined surface 1213 on the placement surface 1212a side extends to a portion to be welded by the laser L. That is, the end of the inclined surface 1213 on the placement surface 1212a side is the portion to be welded by the laser L. A portion of the inclined surface 1213 other than the end on the placement surface 1212a side is a welding margin that is not welded by the laser L. The width Wi1 of the inclined surface 1213 is substantially the same as a width Wi2 of the placement surface 1212a. Each of the width Wi1 of the inclined surface 1213 and the width Wi2 of the placement surface 1212a is, for example, about 1.5 mm.

### (Second Metal Member)

As shown in FIG. 54, the second metal member 1202 is a molded product made of metal such as aluminum or iron. The second metal member 1202 is a plate-shaped member extending in the X direction and the Y direction. The second metal member 1202 has a front surface 1202f on the Z1 direction side. The front surface 1202f is an example of the "second surface" in the claims.

### (Welded Portion)

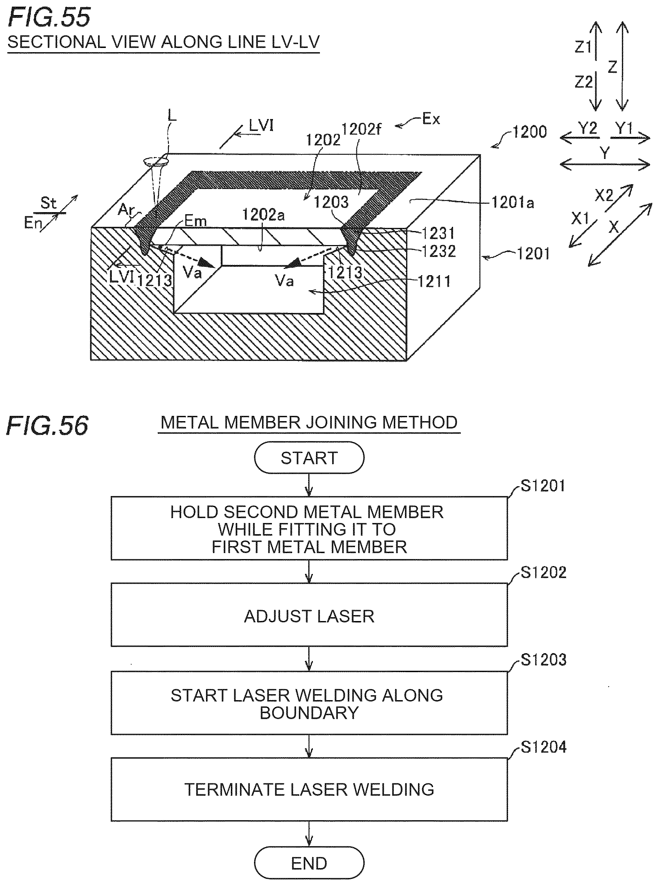

As shown in FIG. 55, the welded portion 1203 is formed by melting and solidifying the first metal member 1201 and the second metal member 1202. That is, the welded portion 1203 is formed by melting the boundaries Bo (see FIG. 58) between the plurality of facing side surfaces 1212b of the fitting recess 1212 of the first metal member 1201 and the plurality of side surfaces 1202b, 1202c, 1202d, and 1202e of the second metal member 1202 with the laser L and then solidifying the boundaries Bo. Along the inclined surface 1213, the metal vapor Va generated when the first metal member 1201 is melted is released to the recess 1211 instead of the external space Ex. The welded portion 1203 is a joint (weld) portion between the first metal member 1201 and the second metal member 1202. The boundaries Bo refer to boundaries between the facing side surfaces 1212b and the side surfaces 1202b, 1202c, 1202d, and 1202e of the second metal member 1202 in the X direction and the Y direction.

The welded portion 1203 includes a first portion 1231 and a second portion 1232. The first portion 1231 and the second portion 1232 are provided across the first metal member 1201 and the second metal member 1202 in the Y direction. The first portion 1231 is provided integrally with the second portion 1232 on the Z2 direction side. The first portion 1231 has a tapered shape in which the width decreases toward the Z2 direction side. The second portion 1232 has a divergent shape in which the width increases toward the Z1 direction side.

The above welded portion 1203 is formed at the boundary Bo between the first metal member 1201 and the second metal member 1202.

### (Metal Member Joining Method)

Hereinafter, the joining method for the metal member 1200 according to the fifth embodiment will be described with reference to FIGS. 56 to 59.

As shown in FIG. 56, in step S1201, the second metal member 1202 is held while being fitted to the first metal member 1201. That is, as shown in FIGS. 57 and 58, in step S1201, the operator fits the second metal member 1202 to the fitting recess 1212 of the first metal member 1201, and then the second metal member 1202 is held by the first metal member 1201. Step S1201 is an example of the "step of contact" in the claims.

Step S1201 is a step in which the end En1 on the Z2 direction side for each of the side surfaces 1202b, 1202c, 1202d, and 1202e of the second metal member 1202 along the Z2 direction is brought into contact with the first metal member 1201 such that part of the placement surface 1212a is exposed. The part of the placement surface 1212a of the first metal member 1201 is exposed through the small gap Gap. That is, the exposed portions are the end portion of the placement surface 1212a on the X1 direction side, the end portion of the placement surface 1212a on the X2 direction side, the end portion of the placement surface 1212a on the Y1 direction side, and the end portion of the placement surface 1212a on the Y2 direction side. The part of the placement surface 1212a of the first metal member 1201 is in contact with the external space Ex outside the metal member 1200 via the small gap Gap in the Z1 direction, the X1 direction, the X2 direction, the Y1 direction, and the Y2 direction.

In step S1202 (see FIG. 56), the laser L is adjusted. That is, in step S1202, the laser L is adjusted to a spot diameter corresponding to the small gap Gap between the facing side surface 1212b and the side surface 1202b (or the side surface 1202c) of the second metal member 1202, and the focal position, the inclination of the laser L, the output of the laser L, the processing direction, etc. are adjusted. The focal position of the laser L is set at the height position of the front surface 1201a of the first metal member 1201 and an end surface portion 1221d.

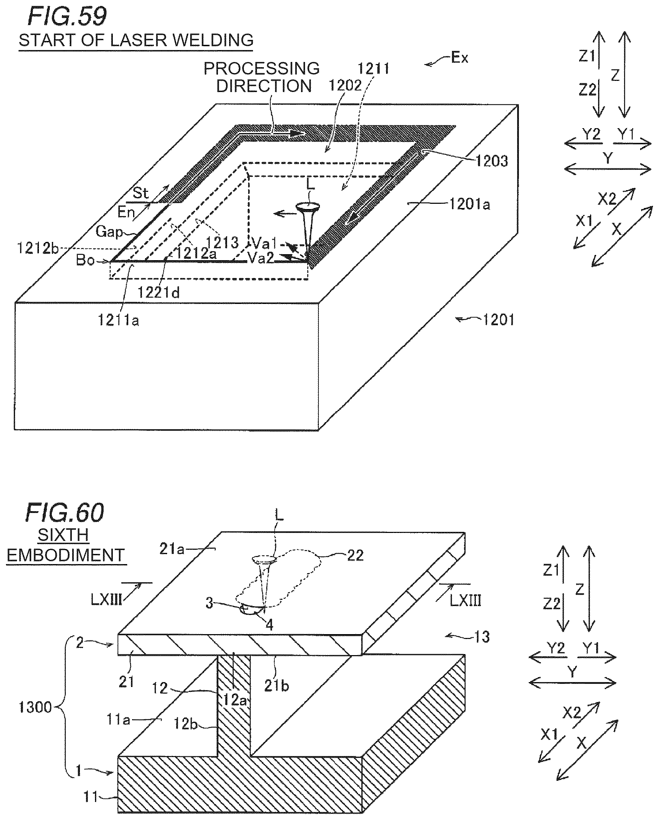

In step S1203 (see FIG. 56), welding using the laser L is started from the start point St along the boundaries Bo as shown in FIG. 59. The boundaries Bo are provided at the end on the Z1 direction side where the laser L can directly be radiated from the Z1 direction side. Step S1203 is a step in which the first metal member 1201 and the second metal member 1202 are joined by welding together by radiating the laser L toward the end surface portion 1221d of the second metal member 1202. At this time, the laser L is radiated also to an end surface portion 1211a of the front surface 1201a of the first metal member 1201 by radiating the laser L toward the end surface portion 1221d of the second metal member 1202. In this manner, step S1203 is a step of joining the side surface 1202b (side surface 1202c, side surface 1202d, and side surface 1202e) of the second metal member 1202 and the facing side surface 1212b of the fitting recess 1212 by welding together using the laser L. Step S1203 is an example of the "step of joining by welding" in the claims.

The end surface portion 1211a is a surface near the exposed placement surface 1212a in the front surface 1201a of the first metal member 1201. The end surface portion 1211a is a surface near the facing side surface 1212b of the first metal member 1201 in the front surface 1201a that is continuous with the end En2 of the facing side surface 1212b on the Z1 direction side. The end surface portion 1221d of the second metal member 1202 is a surface near the exposed placement surface 1212a in the front surface 1202f of the second metal member 1202. The end surface portion 1221d of the second metal member 1202 is a surface near the side surface 1202b (side surface 1202c, side surface 1202d, and side surface 1202e) of the second metal member 1202 in the front surface 1202f that is continuous with the end En2 of the side surface 1202b (side surface 1202c, side surface 1202d, and side surface 1202e) on the Z1 direction side.

Specifically, step S1203 is a step in which the adjusted laser L is radiated toward the end surface portion 1211a of the first metal member 1201 and the end surface portion 1221d of the second metal member 1202 while moving the held first metal member 1201 and the held second metal member 1202 in the X1 direction (X2 direction, Y1 direction, or Y2 direction) relative to the laser L radiated in the Z2 direction (radiation direction). The laser welding may be performed by the wobbling process as in the fourth embodiment.

At this time, as shown in FIG. 59, the metal vapor generated by radiating the laser L to the end surface portion 1211a of the first metal member 1201 and the end surface portion 1221d of the second metal member 1202 is discharged to the recess 1211 from the space between the inclined surface 1213 and the second metal member 1202. The metal vapor generated by irradiating the end surface portion 1221d of the second metal member 1202 is discharged to the external space Ex from the small gap Gap.

The space between the inclined surface 1213 and the second metal member 1202 is the space that communicates with the recess 1211. That is, the metal vapor generated by radiating the laser L to the end surface portion 1211a of the first metal member 1201 and the end surface portion 1221d of the second metal member 1202 is discharged via the space between the inclined surface 1213 and the second metal member 1202, for example, in the Va1 direction. The small gap Gap is the space that communicates with the external space Ex. That is, the metal vapor generated by radiating the laser L to the end surface portion 1211a of the first metal member 1201 and the end surface portion 1221d of the second metal member 1202 is discharged via the small gap Gap, for example, in the Va2 direction. Further, the metal vapor generated by radiating the laser L to the end surface portion 1211a of the first metal member 1201 and the end surface portion 1221d of the second metal member 1202 is directly discharged to the external space Ex.

**In** step S1204 (see FIG. 56), the welding using the laser L along the boundaries Bo is terminated when the welding using the laser L is completed up to the end point En of the boundaries Bo. In step S1204, the molten metal is cooled and solidified, thereby forming the welded portion 1203.

After step S1204, the joining method for the metal member 1200 is terminated.

### (Effects of Fifth Embodiment)

The fifth embodiment has the following effects.

**In** the fifth embodiment, as described above, the joining method for the metal member 1200 includes step S1203 of joining the first metal member 1201 and the second metal member 1202 by welding together by radiating the laser L toward the end surface portion 1221d of the second metal member 1202. Thus, it is possible to suppress the entry of the metal vapor into the molten metal of the second metal member 1202.

**In** the fifth embodiment, as described above, the first metal member 1201 includes the recess 1211 through which the fluid flows and that is provided on the Z2 direction side of the fitting recess 1212, and the placement surface 1212a that is provided in the fitting recess 1212 and on which the second metal member 1202 is placed. The first metal member 1201 includes the inclined surface 1213 that is provided on the recess 1211 side of the placement surface 1212a in the cross section along the Z2 direction and along which the metal vapor generated along with the welding using the laser L is released to the recess 1211. Step S1 includes the step of placing the second metal member 1202 on the placement surface 1212a of the first metal member 1201 and fitting the second metal member 1202 to the fitting recess 1212 of the first metal member 1201. Step S1203 includes step S1203 of joining the side surface 1202b (side surface 1202c, side surface 1202d, and side surface 1202e) of the second metal member 1202 and the facing side surface 1212b of the fitting recess 1212 that faces the side surface 1202b (side surface 1202c, side surface 1202d, and side surface 1202e) of the second metal member 1202 using the laser L. Therefore, the metal vapor generated along with the welding using the laser L is released to the recess 1211 by the inclined surface 1213, thereby suppressing the formation of blowholes in the joint portion formed by the solidification of the molten first metal member 1201 and the molten second metal member 1202. By providing the inclined surface 1213 between the recess 1211 and the placement surface 1212a, the foreign matter Em formed by the first metal member 1201 and the second metal member 1202 melted by the laser L can hardly reach the recess 1211 due to the presence of the placement surface 1212a, and can be solidified on the inclined surface 1213 or the placement surface 1212a, thereby suppressing the entry of the foreign matter Em into the recess 1211. Thus, it is possible to suppress the entry of the foreign matter Em into the recess 1211 and also to suppress the formation of blowholes in the joint portion.

In the fifth embodiment, as described above, the inclined surface 1213 (second release space) is provided from the one end to the other end of the edge Eg of the recess 1211 at the boundary Pbo between the fitting recess 1212 and the recess 1211. Thus, the metal vapor generated along with the welding using the laser L can be released from the one end to the other end of the edge Eg of the recess 1211, thereby suppressing the formation of blowholes in the joint portion from the one end to the other end.

In the fifth embodiment, as described above, the inclined surface 1213 is the inclined surface 1213 that is inclined and provided on the recess 1211 side of the placement surface 1212a. By creating the release space using the inclined surface 1213, the complexity of design changes to the mold for forming the release space in the first metal member 1201 can be suppressed, and therefore the first metal member 1201 having the inclined surface 1213 can be created relatively easily.

The other effects of the fifth embodiment are the same as the effects of the second embodiment, and therefore description thereof will be omitted.

### [Sixth Embodiment]

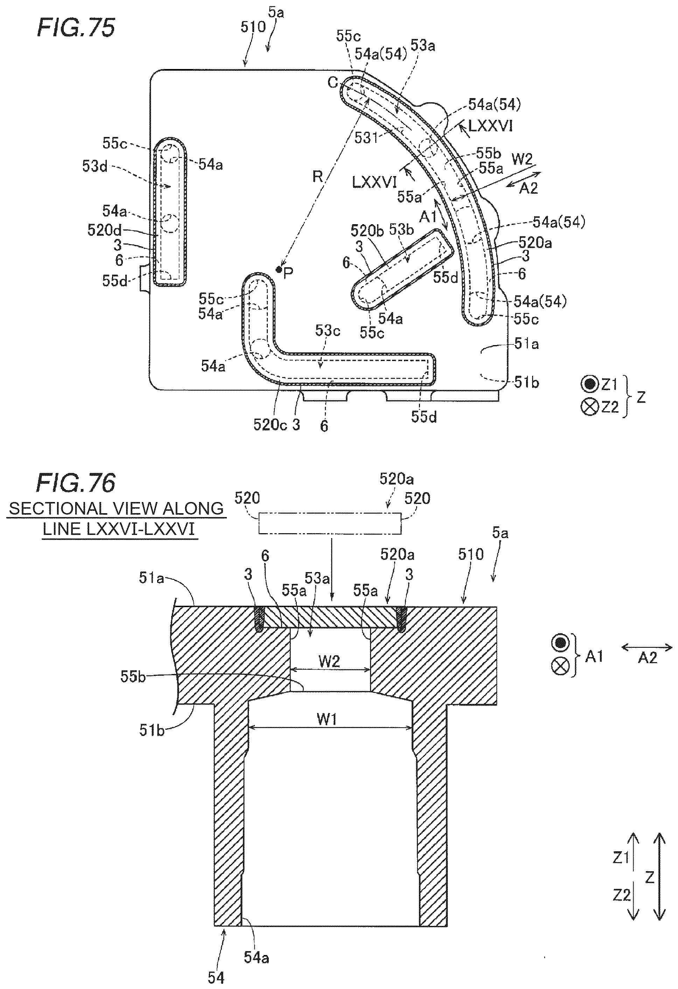

The configuration of a joining method for a metal member 1300 according to a sixth embodiment will be described with reference to FIGS. 60 to 78.

A refrigerant manifold 5 according to the sixth embodiment will be described with reference to FIGS. 60 to 78. Hereinafter, welding to be used for manufacturing the refrigerant manifold 5 (first joining method) will be described, and then the configuration of the refrigerant manifold 5 will be described.

### (Regarding Welding to Be Used for Manufacturing Refrigerant Manifold (First Joining Method))

As shown in FIG. 60, the joining method for the metal member 1300 is a laser welding method in which the first metal member 1 and the second metal member 2 are laid on top of each other and welded with the laser L (shown by a long dashed double-short dashed line in FIG. 1) to process them into the metal member 1300. The metal member 1300 formed by the laser welding includes the first metal member 1, the second metal member 2, the welded portion 3 (weld bead), and the non-welded portion 4. The configurations of the first metal member 1, the second metal member 2, the welded portion 3, and the non-welded portion 4 will be described below.

A direction in which the first metal member 1 and the second metal member 2 are arranged is defined as the Z direction, the Z direction toward the second metal member 2 is defined as the Z1 direction, and the Z direction toward the first metal member 1 is defined as the Z2 direction. A direction in which the slit 22 of the second metal member 2 described later extends is defined as the X direction, one direction of the X direction is defined as the X1 direction, and the other direction of the X direction is defined as the X2 direction. A direction orthogonal to both the X direction and the Z direction is defined as the Y direction, one direction of the Y direction is defined as the Y1 direction, and the other direction of the Y direction is defined as the Y2 direction.

### (First Metal Member)

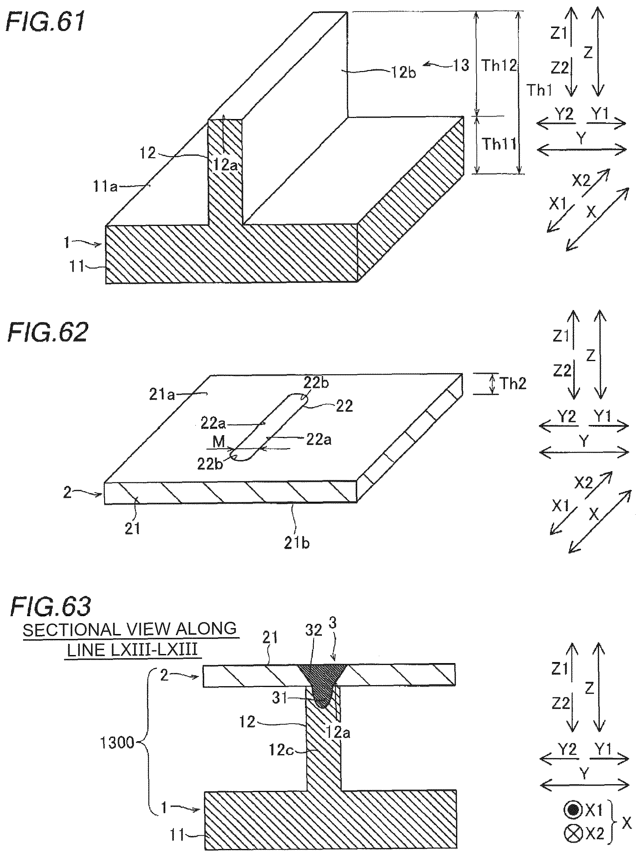

The first metal member 1 is a molded product made of metal such as aluminum or iron. As shown in FIG. 61, the first metal member 1 is a member having the thickness Th1 larger than the thickness Th2 (see FIG. 62) of the second metal member 2 in the Z direction. For ease of description, FIG. 61 shows a state before the first metal member 1 and the second metal member 2 are welded.

Specifically, the first metal member 1 includes the bottom 11, the protrusion 12, and the recess 13. The bottom 11 and the protrusion 12 are formed integrally.

The bottom 11 is a portion of the first metal member 1 on the Z2 direction side of the protrusion 12. The bottom 11 is a plate-shaped portion having the thickness Th11 in the Z direction and extending along the X direction and the Y direction. The bottom 11 has the bottom surface 11a on the Z1 direction side. The bottom surface 11a is a surface of the bottom 11 other than the protrusion 12.

The protrusion 12 is a portion of the first metal member 1 on the Z1 direction side of the bottom 11. The protrusion 12 is a portion protruding from the bottom surface 11a of the bottom 11 in the Z1 direction. That is, the protrusion 12 has the thickness Th12 in the Z direction. The protrusion 12 has the tip surface 12a at the end on the Z1 direction side. The tip surface 12a is a flat surface extending along the X direction and the Y direction. The tip surface 12a is a portion that comes into contact with the second metal member 2 in the Z direction. The protrusion 12 has the side surfaces 12b in a direction orthogonal to the Z direction. The side surface 12b extends along the X direction and the Z direction.

The recess 13 is a portion recessed in the Z2 direction from the tip surface 12a. The recess 13 adjoins the protrusion 12 in a direction orthogonal to the Z2 direction. That is, the recess 13 is formed by the bottom surface 11a of the bottom 11 and the side surface 12b of the protrusion 12. A plurality of recesses 13 is provided in the first metal member 1.

### (Second Metal Member)

As shown in FIG. 62, the second metal member 2 is a molded product made of metal such as aluminum or iron. The second metal member 2 is a plate-shaped member having the thickness Th2 smaller than the thickness Th1 (see FIG. 61) of the first metal member 1 in the Z direction. For ease of description, FIG. 62 shows a state before the first metal member 1 and the second metal member 2 are welded.

Specifically, the second metal member 2 includes the plate-shaped portion 21 and the slit 22.

The plate-shaped portion 21 is a portion of the second metal member 2 other than the slit 22. The plate-shaped portion 21 is a portion in a plate shape having the thickness Th2 in the Z direction and extending along the X direction and the Y direction. The plate-shaped portion 21 has the front surface 21a on the Z1 direction side. The front surface 21a is a flat surface extending along the X direction and the Y direction. The plate-shaped portion 21 has the back surface 21b on the Z2 direction side. The back surface 21b is a flat surface extending along the X direction and the Y direction. A portion of the back surface 21b near the slit 22 is a portion that comes into contact with the tip surface 12a of the protrusion 12 of the first metal member 1.

The slit 22 is an elongated hole passing through the second metal member 2 from the front surface 21a in the Z2 direction and extending in the X direction (or the Y direction). The slit 22 has the pair of side surfaces 22a and the pair of end surfaces 22b. The pair of side surfaces 22a faces each other in the Y direction. Each of the pair of side surfaces 22a is a flat surface extending in the Y direction and the Z direction. The pair of end surfaces 22b is a surface on one side (X1 direction side) and a surface on the other side (X2 direction side) in the direction in which the slit 22 extends. The pair of side surfaces 22a and the pair of end surfaces 22b are continuous with the front surface 21a at the ends of the pair of side surfaces 22a and the pair of end surfaces 22b on the Z1 direction side. The pair of side surfaces 22a and the pair of end surfaces 22b are continuous with the back surface 21b at the ends of the pair of side surfaces 22a and the pair of end surfaces 22b on the Z2 direction side.

### (Welded Portion)

As shown in FIG. 63, the welded portion 3 is formed by melting and solidifying the first metal member 1 and the second metal member 2. That is, the welded portion 3 is formed by melting the vicinity of the tip surface 12a of the first metal member 1 and the vicinity of the pair of side surfaces 22a of the second metal member 2 with the laser L (see FIG. 60) and then solidifying them. The welded portion 3 is a joint (weld) portion between the first metal member 1 and the second metal member 2.

The welded portion 3 includes the first portion 31 and the second portion 32. The first portion 31 is a portion of the welded portion 3 that is provided in the first metal member 1. The first portion 31 has a tapered shape in which the width decreases toward the Z2 direction side. The second portion 32 is a portion of the welded portion 3 that is provided in the second metal member 2. The second portion 32 has a divergent shape in which the width increases toward the Z1 direction side. The first portion 31 and the second portion 32 are provided integrally. In the Y direction, the maximum width of the second portion 32 is larger than the maximum width of the first portion 31. In the Y direction, the maximum width of the first portion 31 is substantially the same as the minimum width of the second portion 32.

As shown in FIG. 60, the above welded portion 3 is disposed so as to fill the space within the slit 22 enclosed by the tip surface 12a of the first metal member 1 and the pair of side surfaces 22a and the pair of end surfaces 22b of the second metal member 2.

### (Non-welded Portion)

The non-welded portion 4 is a portion of the space within the slit 22 that is not filled with the welded portion 3. That is, the non-welded portion 4 is a space portion where the first metal member 1 and the second metal member 2 are not melted and solidified. The non-welded portion 4 is a portion where the first metal member 1 and the second metal member 2 are not joined (welded). The non-welded portion 4 is provided between the welded portion 3 and the end surface 22b on the X1 direction side out of the pair of end surfaces 22b. The non-welded portion 4 is a space that communicates with the space outside the metal member 1300. The number of non-welded portions 4 need not be one, but a plurality of non-welded portions 4 may be provided in the space within the slit 22.

### (Metal Member Joining Method)

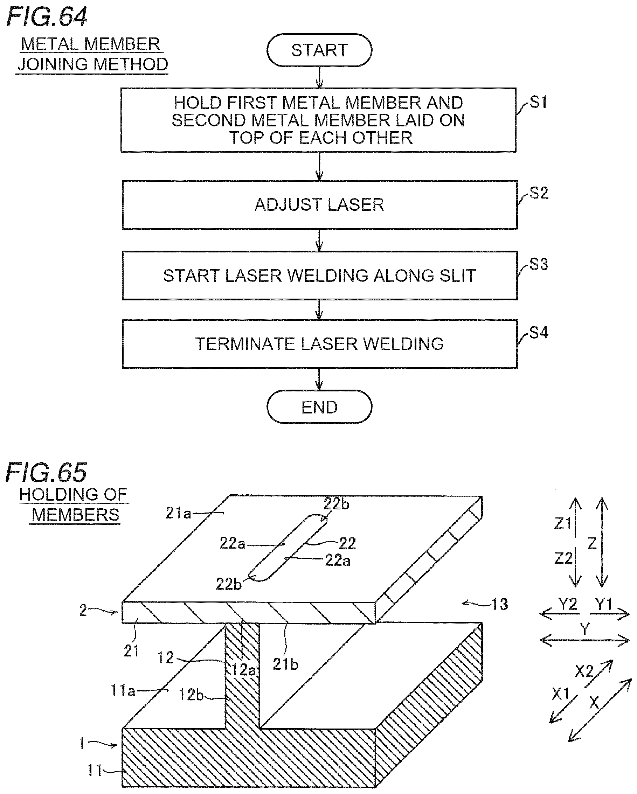

Hereinafter, the joining method for the metal member 1300 according to the sixth embodiment will be described with reference to FIGS. 64 to 68. The joining method for the metal member 1300 is a joining method that can suppress, when the first metal member 1 and the second metal member 2 are joined, entry of metal vapor generated by radiating the laser L to the first metal member 1 into a portion (molten metal) where the first metal member 1 and the second metal member 2 are melted by the laser L.

In step S1, the first metal member 1 and the second metal member 2 are held while being laid on top of each other (see FIG. 65). Step S1 is a step in which the end En1 on the Z2 direction side for the side surface 22a of the second metal member 2 along the Z2 direction is brought into contact with the tip surface 12a of the first metal member 1 along the X direction and the Y direction such that part of the tip surface 12a is exposed. The part of the tip surface 12a of the first metal member 1 is exposed through the slit 22. That is, the exposed portion is a central portion of the tip surface 12a in the Y direction. The part of the tip surface 12a of the first metal member 1 is in contact with the space outside the metal member 1300 via the slit 22 in the Z1 direction, the X1 direction, and the X2 direction.

In step S2, the laser L is adjusted. That is, in step S2, the laser L is adjusted to a spot diameter (e.g., about 0.1 mm) smaller than the distance M (e.g., about 1 mm or less) between the pair of side surfaces 22a facing each other, and the focal position, the inclination of the laser L, the output of the laser L, the processing direction, etc. are adjusted.

In step S3, welding using the laser L is started along the slit 22. That is, step S3 is a step in which the first metal member 1 and the second metal member 2 are joined by welding together by radiating the laser L toward the exposed portion of the tip surface 12a of the first metal member 1 and the end surface portion 211a of the second metal member 2.

The end surface portion 211a is a surface near the side surface 22a of the second metal member 2 in the front surface 21a that is continuous with the end En2 of the side surface 22a on the Z2 direction side. The end surface portion 211a of the second metal member 2 is provided at each of the portion continuous with the side surface 22a of the slit 22 on the Y1 direction side and the portion continuous with the side surface 22a of the slit 22 on the Y2 direction side.

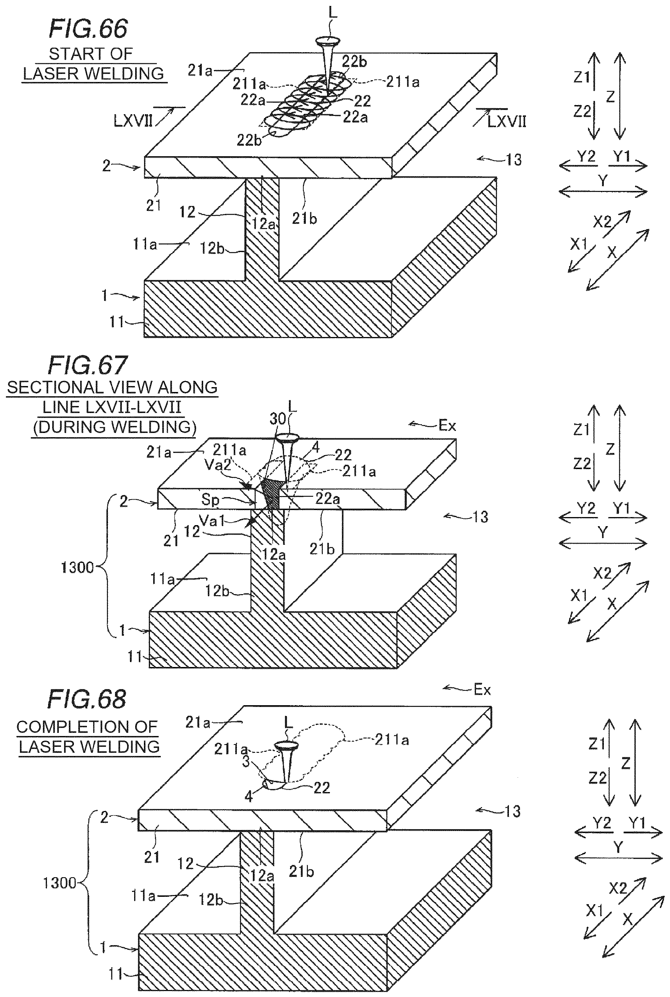

Specifically, step S3 is a step in which the adjusted laser L is radiated toward the exposed portion of the tip surface 12a of the first metal member 1 and the end surface portion 211a of the second metal member 2 while moving the held first metal member 1 and the held second metal member 2 in the X1 direction (X2 direction, Y1 direction, or Y2 direction) relative to the laser L radiated in the Z2 direction (radiation direction) (see FIG. 66).

The laser welding is performed by the wobbling process in which the processing (welding) is performed by linearly moving the held first metal member 1 and the held second metal member 2 in the X1 direction (X2 direction, Y1 direction, or Y2 direction) relative to the laser L while rotating (turning) the laser L in a circular orbit about a rotation axis parallel to the Z direction when viewed from the Z1 direction side (see FIG. 66). The diameter of the circular orbit along which the laser L rotates is adjusted to be larger (e.g., about 3 mm) than the distance M between the pair of side surfaces 22a facing each other. The area of the end surface portion 211a is set in accordance with the diameter of the rotation of the laser L. The diameter of the circular orbit along which the laser L rotates is preferably twice the distance M or more.

Thus, the laser L having the spot diameter smaller than the distance M between the pair of side surfaces 22a can melt the exposed portion of the tip surface 12a of the first metal member 1 while melting the end surface portion 211a of the second metal member 2. When the end surface portion 211a is set relatively wide, it is possible to compensate for the molten metal that decreases by the volume of the slit 22. Therefore, the thickness of the welded portion 3 in the Z direction can be ensured. Accordingly, the mechanical strength of the welded portion 3 can be ensured.

As described above, step S3 is a step of radiating the laser L toward the exposed portion of the tip surface 12a of the first metal member 1 and the end surface portion 211a of the second metal member 2.

Step S3 is also a step in which the laser L melts both the exposed portion of the tip surface 12a and the end surface portion 211a corresponding to each of the pair of side surfaces 22a of the second metal member 2 and the space (slit 22) enclosed by the exposed portion of the tip surface 12a and the pair of side surfaces 22a is filled with the molten metal (see FIG. 67). In step S3, the filled molten metal is solidified at the protrusion 12 of the first metal member 1 to form the welded portion 3 on the Z1 direction side, and the portion of the welded portion 3 on the Z2 direction side is not melted by the laser L. Therefore, in step S3, the laser L does not penetrate the protrusion 12 of the first metal member 1. Step S3 is a step of continuously performing the above laser welding along the direction in which the slit 22 extends (X1 direction).

At this time, the metal vapor generated by radiating the laser L to the exposed portion of the tip surface 12a of the first metal member 1 is discharged to the external space Ex from the discharge space Sp that is not the filled portion 30 filled with the molten metal in the space within the slit 22. The discharge space Sp is a space that communicates with the external space Ex. That is, the metal vapor generated by radiating the laser L to the exposed portion of the tip surface 12a of the first metal member 1 is discharged via the discharge space Sp, for example, in the Va1 direction and the Va2 direction. The metal vapor generated by radiating the laser L to the end surface portion 211a of the second metal member 2 is directly discharged to the external space Ex.

Such a discharge space Sp is provided within the slit 22 without exception even if the proportion of the filled portion 30 in the space within the slit 22 increases along with the welding using the laser L. Therefore, the discharge space Sp is a space through which the metal vapor can be discharged to the external space Ex from the start to the end of the welding using the laser L. The discharge space Sp is a space formed by the surface of the filled portion 30 on the X1 direction side, the pair of side surfaces 22a, and the tip surface 12a.

**In** step S3, the welding using the laser L is started from the end of the slit 22 on the X2 direction side. Therefore, the welded portion 3 is formed at the end of the slit 22 on the X2 direction side.

**In** step S4, the welding using the laser L along the slit 22 is terminated when the welding using the laser L is completed up to a predetermined position on the X1 direction side within the slit 22. In step S4, the welding using the laser L is not terminated at the end of the slit 22 on the X1 direction side. Therefore, the non-welded portion 4 is formed at the end of the slit 22 on the X1 direction side. In step S4, the molten metal in the filled portion 30 is cooled and solidified, thereby forming the welded portion 3.

After step S4, the joining method for the metal member 1300 is terminated.

### (Regarding Configuration of Refrigerant Manifold Manufactured Using First Joining Method)

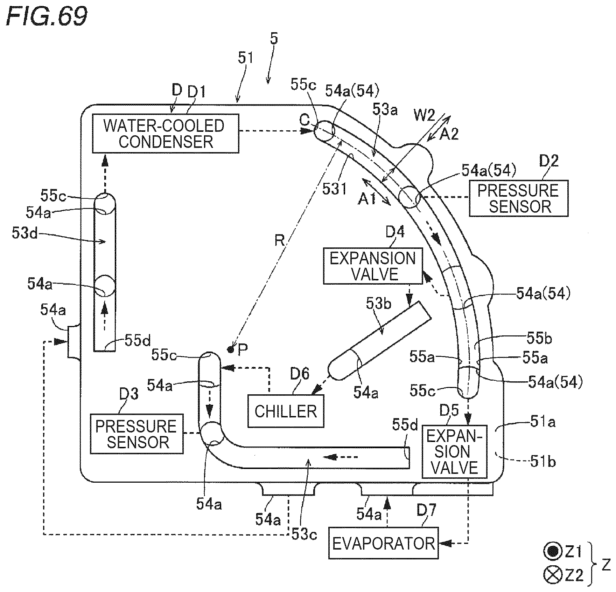

The configuration of the refrigerant manifold 5 manufactured by the welding of the above first joining method will be described with reference to FIGS. 69 to 76.

Various functional devices D to be used for cooling are connected to the refrigerant manifold 5 shown in FIG. 69. The refrigerant manifold 5 has a plurality of refrigerant paths 53a to 53d through which a refrigerant flows. That is, the refrigerant manifold 5 functions as paths for distributing the refrigerant to the various functional devices D in a cooling circuit. Examples of objects to be cooled by the refrigerant manifold 5 include an electric motor, various electrical components, and an engine to be used in a vehicle. The functional devices D include a water-cooled condenser D1, a pressure sensor D2, a pressure sensor D3, an expansion valve D4, an expansion valve D5, a chiller D6, and an evaporator D7.

The refrigerant manifold 5 includes a manifold body 51 and a plate member 52. The manifold body 51 corresponds to the above first metal member 1. The plate member 52 corresponds to the above second metal member 2.

The manifold body 51 is a member whose thickness direction is the Z direction. The manifold body 51 includes the refrigerant paths 53a to 53d through which the refrigerant flows, and a plurality of device connection portions 54 to which the various functional devices D are connected.

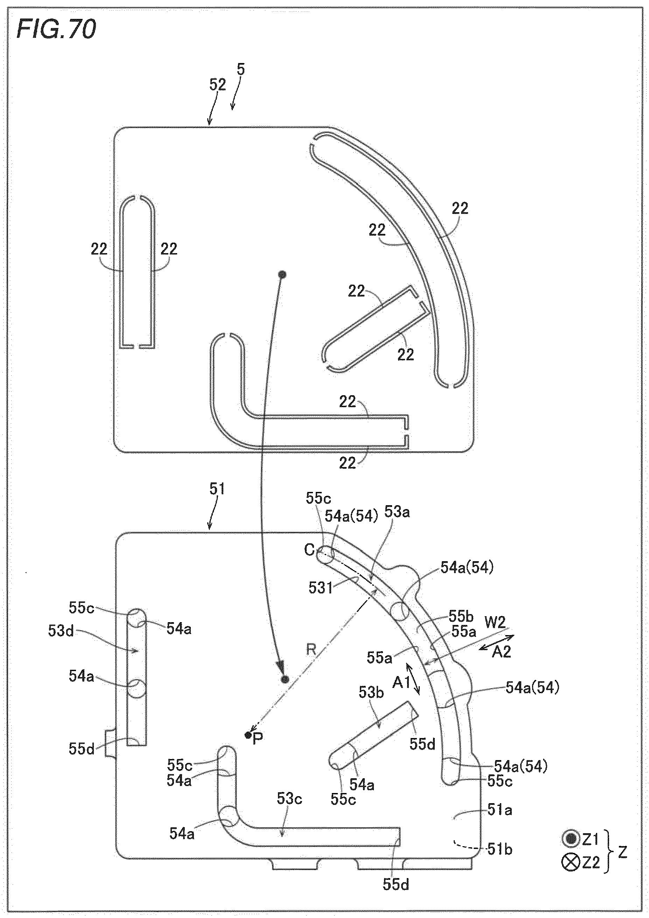

As shown in FIG. 70, the plate member 52 is configured to be attached to the manifold body 51 from one surface 51a side so as to close the recessed refrigerant paths 53a to 53d. The plate member 52 is a single plate member and is configured to close the refrigerant paths 53a to 53d by the single plate member. The plate member 52 has the slits 22 extending along outer edges 531 of the refrigerant paths 53a to 53d. The slits 22 do not overlap the refrigerant paths 53a to 53d when viewed from the one surface 51a side (Z1 direction side). A plurality of slits 22 is provided for each refrigerant path 53a (53b, 53c, 53d). When the plate member 52 is attached to the manifold body 51, the one surface 51a (surface on the Z1 direction side) of the manifold body 51 is exposed via the slits 22. The one surface 51a corresponds to the above tip surface 12a.

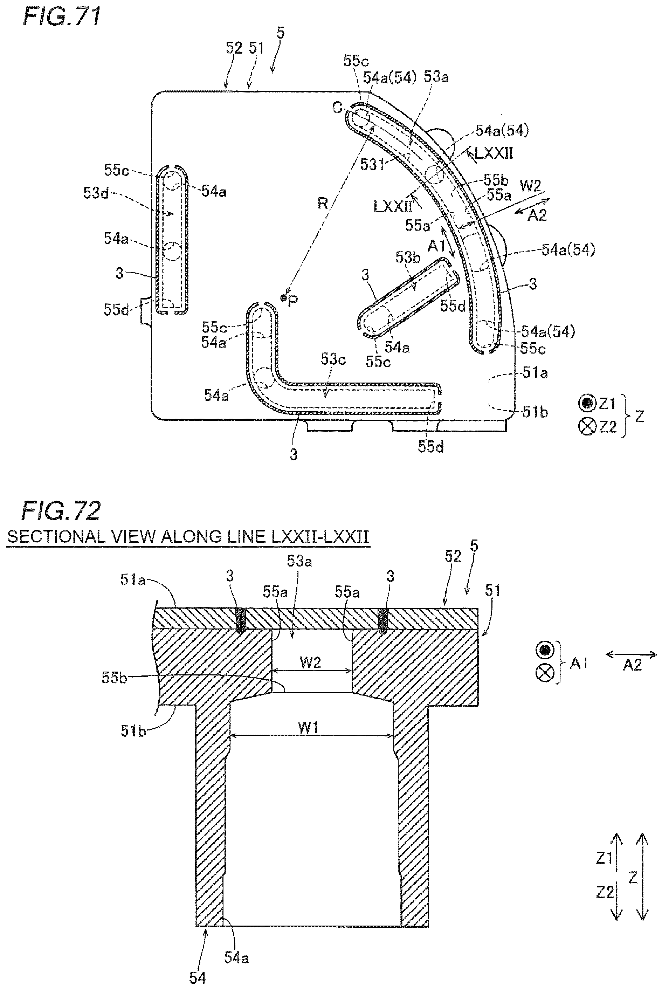

As shown in FIGS. 70 to 72, the device connection portions 54 have through holes 54a that communicate with the refrigerant paths 53a to 53d. The through holes 54a are formed by machining (such as drilling including perforating) from the other surface 51b toward the one surface 51a of the manifold body 51 up to positions where the through holes 54a communicate with the refrigerant paths 53a to 53d. Therefore, a transverse width W1 (see FIG. 72) of the through hole 54a is larger than a distance W2 between a pair of facing surfaces 55a. That is, the machining for forming the through holes 54a is started from the other surface 51b side and is not performed up to the one surface 51a, but is stopped at midpoints between the other surface 51b and the one surface 51a. The midpoints are positions where the through holes 54a communicate with the refrigerant paths 53a to 53d. For example, a drill tool having a diameter larger than the width (distance W2) of each of the refrigerant paths 53a to 53d is used for machining the through holes 54a. The through holes 54a are machined based on the refrigerant paths 53a to 53d.

The refrigerant manifold 5 has four refrigerant paths 53a to 53d. Each of the refrigerant paths 53a to 53d extends in a direction orthogonal to the thickness direction (Z direction). That is, the refrigerant flow direction of each of the refrigerant paths 53a to 53d is a direction orthogonal to the thickness direction (Z direction). The refrigerant paths 53a to 53d are formed in a recessed shape that is recessed from the one surface 51a side (surface on the Z1 direction side) of the manifold body 51.

Each of the refrigerant paths 53a to 53d has the pair of facing surfaces 55a that faces each other in a transverse direction (A2 direction) orthogonal to a longitudinal direction (A1 direction) that is the refrigerant flow direction of each of the refrigerant paths 53a to 53d when viewed from the one surface 51a side (Z1 direction side) of the manifold body 51. Each of the refrigerant paths 53a to 53d has a bottom surface 55b extending in a direction orthogonal to the Z direction and connecting the pair of facing surfaces 55a. The distance W2 between the pair of facing surfaces 55a in the transverse direction is substantially constant at each position in the longitudinal direction of each of the refrigerant paths 53a to 53d.

The refrigerant path 53a is formed in an arc or straight shape, and has three or more device connection portions 54.

Specifically, the refrigerant path 53a is formed in a circular arc shape defined by a radius R that is a distance between a predetermined center point P and each of the three or more device connection portions 54 when viewed from the one surface 51a side (Z1 direction side) of the manifold body 51. As a specific example, the refrigerant path 53a has four device connection portions 54. The refrigerant path 53a is a circular arc provided around the predetermined center point P within an angle range of 30° or more and 90° or less. The angle range of the refrigerant path is not limited to the above range. The four device connection portions 54 connected to the refrigerant path 53a are disposed away from each other at substantially equal angular intervals. The radius R is a distance from the predetermined center point P to a midpoint C between the pair of facing surfaces 55a.

When viewed from the one surface 51a side (Z1 direction side), the longitudinal end of each of the refrigerant paths 53a to 53d is formed by a circular arc surface 55c having a circular arc shape and connecting the pair of facing surfaces 55a or a flat straight surface 55d extending in a straight shape in the transverse direction and connecting the pair of facing surfaces 55a. Both the longitudinal ends of the refrigerant path 53a are formed by the circular arc surfaces 55c each having a circular arc shape and connecting the pair of facing surfaces 55a. For example, the diameter of the circular arc surface 55c is substantially the same as the distance W2 between the pair of facing surfaces 55a. The circular arc surface 55c has a central angle of about 180°.

In the sixth embodiment, the welding to be used for manufacturing the refrigerant manifold (5, 5a) is not limited to the welding to be performed by actively exposing the manifold body 51 via the slits 22 of the above plate member 52.

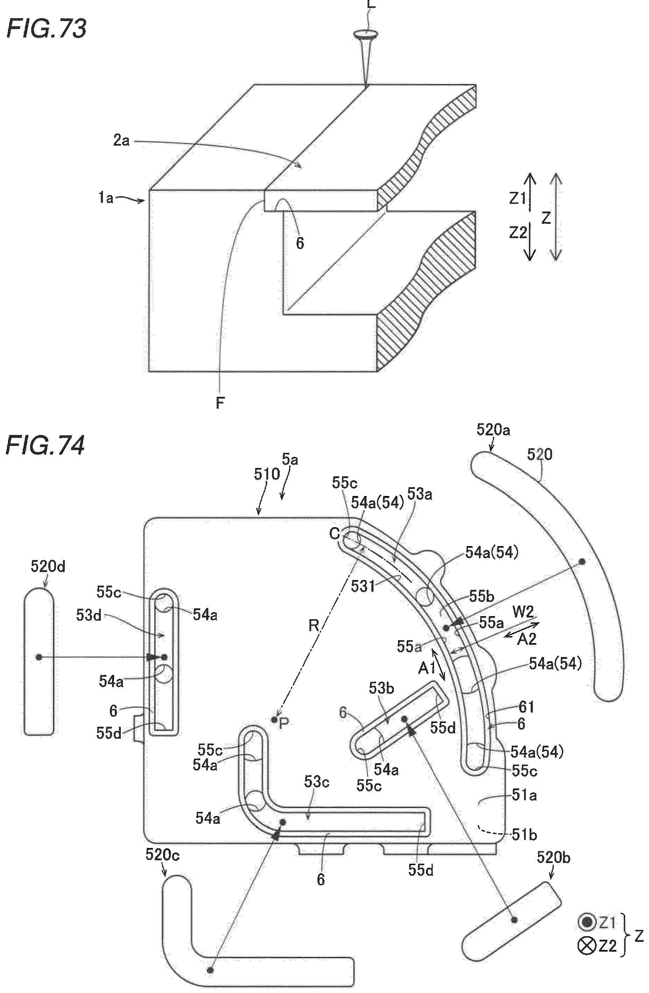

Referring to FIGS. 73 to 76, a welding method (second joining method) that is different from the above welding method (first joining method) and is to be used for manufacturing a refrigerant manifold 5a will be described below, and then the configuration of the refrigerant manifold 5a manufactured by the different welding method will be described.

### (Regarding Welding to Be Used for Manufacturing Refrigerant Manifold (Second Joining Method))

As shown in FIG. 73, in the second joining method, welding is performed by radiating the laser L to an end surface of a first metal member 1a and an end surface of a second metal member 2a with the end surface of the first metal member 1a and the end surface of the second metal member 2a abutting against each other. When the laser L is radiated, the first metal member 1a and the second metal member 2a may slightly be spaced away from each other.

The first metal member 1a and the second metal member 2a are plate-shaped members whose thickness direction is the Z direction. The second metal member 2a is thinner than the first metal member 1a. The first metal member 1a has a groove 6 to which the second metal member 2a is fitted. The size of the groove 6 in the Z direction and the size of the second metal member 2a in the Z direction are substantially the same.

The laser L to be radiated from the Z1 direction side is used for the welding. The welding is performed by moving the laser L (unillustrated laser radiation device) in a direction orthogonal to the Z direction along abutment surfaces F (adjacent surfaces that face each other) of the first metal member 1a and the second metal member 2a.

### (Regarding Configuration of Refrigerant Manifold Manufactured Using Second Joining Method)

The configuration of the refrigerant manifold 5a manufactured by the welding of the above second joining method will be described with reference to FIGS. 74 to 76.

The refrigerant manifold 5a mostly has the same configuration as the above refrigerant manifold 5. As the same configuration, the refrigerant manifold 5a has the refrigerant path 53a. The refrigerant path 53a of the refrigerant manifold 5a is formed in an arc or straight shape, and has three or more device connection portions 54. Specifically, the refrigerant path 53a is formed in a circular arc shape defined by the radius R that is a distance between the predetermined center point P and each of the three or more device connection portions 54 when viewed from the one surface 51a side (Z1 direction side) of a manifold body 510.

The refrigerant manifold 5a has the same configuration as the above refrigerant manifold 5 except that the manifold body 510 includes the groove 6 and the number and shape of plate members 52a are different. The following description is directed to the configuration of the refrigerant manifold 5a that is different from the above refrigerant manifold 5.

The refrigerant manifold 5a includes the single manifold body 510 and plate members 520a to 520d. The manifold body 510 corresponds to the above first metal member 1a. The plate members 520a to 520d each correspond to the above second metal member 2a.

The manifold body 510 includes the groove 6. The groove 6 is provided around each of the refrigerant paths 53a to 53d along the outer edge 531 of each of the refrigerant paths 53a to 53d when viewed from the one surface 51a side, and is formed in a recessed shape that is recessed from the one surface 51a. The groove 6 has a substantially constant width when viewed from the one surface 51a side (Z1 direction side). That is, the groove 6 has such a shape that the outer edge 531 is offset outward when viewed from the one surface 51a side (Z1 direction side). The width of the groove 6 is smaller than the width (distance W2) of each of the refrigerant paths 53a to 53d. **In** the Z direction, the depth of the groove 6 from the one surface 51a is smaller than the depth of each of the refrigerant paths 53a to 53d from the one surface 51a.

The plate members 520a to 520d have shapes conforming to the grooves 6 of the refrigerant paths 53a to 53d, respectively, and are attached to the manifold body 510 while being positioned relative to the manifold body 510 by being fitted to the grooves 6. The plate members 520a to 520d have such sizes that they are fitted to the refrigerant paths 53a to 53d by clearance fit instead of press fit, respectively. The plate members 520a to 520d are attached to the manifold body 510 by welding. Therefore, positioning of the plate members 520a to 520d is not required when the plate members 520a to 520d are welded to the manifold body 510. The groove 6 is structured such that at least part of the bottom surface (surface orthogonal to the Z direction) of the groove 6 is slightly exposed to the Z1 direction side when each of the plate members 520a to 520d is attached to the manifold body 510 and before the welding is performed.

A looped side surface 61 (see FIG. 74) of the groove 6 extending in the Z direction and a looped side surface 520 of each of the plate members 520a to 520d extending in the Z direction correspond to the above abutment surfaces F (see FIG. 73). Therefore, the refrigerant manifold 5a includes the looped welded portion 3 surrounding each of the refrigerant paths 53a to 53d when viewed from the one surface 51a side. Thus, the refrigerant manifold 5a can be welded on the entire circumferences of the refrigerant paths 53a to 53d. Accordingly, the plate members 520a to 520d can firmly be fixed to the manifold body 510 and high sealing performance can be ensured for the refrigerant paths 53a to 53d.

For example, a machining center that moves a flat end mill along a predetermined path set to follow each of the refrigerant paths 53a to 53d is used for machining the groove 6. The grooves 6 are machined based on the refrigerant paths 53a to 53d without consideration of the positions of the through holes 54a.

### (Effects of Sixth Embodiment)

The sixth embodiment has the following effects.

**In** the sixth embodiment, as described above, the refrigerant path 53a is formed in the arc or straight shape. Thus, it is possible to avoid such a complex shape that the refrigerant path 53a has a plurality of bent portions. Therefore, the shape of the refrigerant path 53a can be simplified. Accordingly, the processing can be performed more easily when the refrigerant path 53a is formed. The refrigerant path 53a has three or more device connection portions 54. Thus, the refrigerant that flows in from one device connection portion 54 can flow out from a plurality of device connection portions 54, or the refrigerant that flows in from a plurality of device connection portions 54 can flow out from one device connection portion 54. Therefore, various refrigerant flows can be achieved. As a result of the above, the shape of the refrigerant path 53a can be simplified and various refrigerant flows can be achieved.

**In** the sixth embodiment, as described above, the refrigerant path 53a is formed in the circular arc shape defined by the radius R that is the distance between the predetermined center point P and each of the three or more device connection portions 54 when viewed from the one surface 51a side of the manifold body 51 (510). Therefore, the refrigerant path 53a can be formed in the circular arc shape to which the three or more device connection portions 54 are connected, thereby further simplifying the shape of the refrigerant path 53a. Further, the refrigerant path 53a can be processed more easily.

**In** the sixth embodiment, as described above, the refrigerant path 53a is formed in the recessed shape that is recessed from the one surface 51a of the manifold body 51 (510), and the plate member 52 attached to the manifold body 51 (510) from the one surface 51a side so as to close the recessed refrigerant path 53a is further provided. Therefore, the recessed portion serving as the refrigerant path 53a can be closed by the plate member 52. Thus, the open portion of the refrigerant path 53a that is a closed space can be manufactured easily.

**In** the sixth embodiment, as described above, the manifold body 51 (510) includes the groove 6 provided around the refrigerant path 53a along the outer edge 531 of the refrigerant path 53a when viewed from the one surface 51a side and formed in the recessed shape that is recessed from the one surface 51a, and the plate member 52 has the shape conforming to the groove 6 and is attached to the manifold body 51 (510) while being positioned relative to the manifold body 51 (510) by being fitted to the groove 6. Therefore, the plate member 52 can easily be attached to the manifold body 51 (510) by the groove 6. The plate member 52 can be formed in conformity with the shape of the refrigerant path 53a. Therefore, it is possible to suppress an excessive increase in the size of the plate member 52 compared to the size of the refrigerant path 53a. Thus, the amount of material used for manufacturing the plate member 52 can be reduced.

**In** the sixth embodiment, as described above, the refrigerant path 53a has the pair of facing surfaces 55a that faces each other in the transverse direction (A2 direction) orthogonal to the longitudinal direction (A1 direction) that is the refrigerant flow direction of the refrigerant path 53a when viewed from the one surface 51a side of the manifold body 51 (510), and the distance W2 between the pair of facing surfaces 55a in the transverse direction is substantially constant at each position in the longitudinal direction of the refrigerant path 53a. Thus, it is possible to suppress fluctuations in channel width of the refrigerant path 53a through which the refrigerant flows, thereby suppressing the occurrence of pressure loss of the refrigerant due to the fluctuations in channel width. Since the refrigerant path 53a has the substantially constant width, the refrigerant path 53a can be processed more easily.

In the sixth embodiment, as described above, the through hole 54a of the device connection portion 54 is formed by machining from the other surface 51b toward the one surface 51a of the manifold body 51 (510) up to the position where the through hole 54a communicates with the refrigerant path 53a. Therefore, the transverse width W1 of the through hole 54a is larger than the distance W2 between the pair of facing surfaces 55a. Therefore, the machining of the through hole 54a of the device connection portion 54 can be stopped at the position where the through hole 54a communicates with the refrigerant path 53a, thereby avoiding the case where the through hole 54a of the device connection portion 54 extends through the refrigerant path 53a.

In the sixth embodiment, as described above, when viewed from the one surface 51a side, the longitudinal end of the refrigerant path 53a is formed by the circular arc surface 55c having the circular arc shape and connecting the pair of facing surfaces 55a or the flat straight surface 55d extending in the straight shape in the transverse direction and connecting the pair of facing surfaces 55a. Therefore, the shape of the refrigerant path 53a can further be simplified by the end with the circular arc surface 55c or the straight surface 55d.

### [Reference Example (Possible Application Example)]

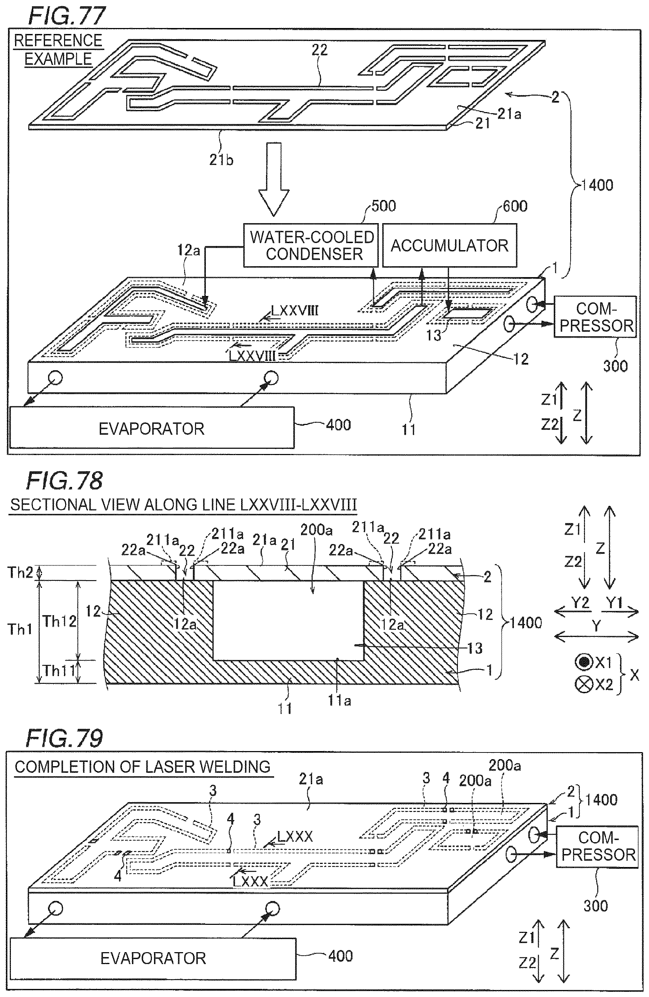

As a reference example, description will be made that, as shown in FIG. 77, the joining method for the metal member 1300 (see FIG. 64) is applied to processing of a manifold 1400 to be mounted on a vehicle such as an automobile. The manifold 1400 includes a refrigerant circuit (channel 200a) that connects the compressor 300, the evaporator 400, the water-cooled condenser 500, and the accumulator 600 included in a cooling system for a vehicle. The manifold 1400 is a member corresponding to the above metal member 1300. Such an application example that is the reference example will be described with reference to FIGS. 77 to 81. In the possible application example, the same components as those in the above embodiment will be denoted by the same signs, and description thereof will be omitted.

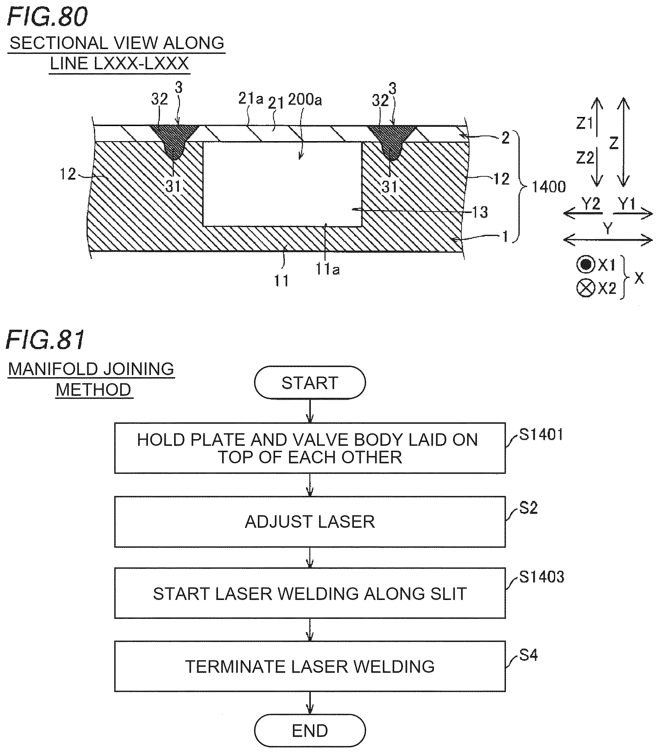

As shown in FIG. 77, the joining method for the metal member 1300 is performed to join the valve body 201 and the plate 202 in the manifold 1400 and to seal the channel 200a (see FIG. 80) through which a refrigerant flows within the manifold 1400. The valve body 201 is a member corresponding to the above first metal member 1. The plate 202 is a member corresponding to the above second metal member 2.

The joining method for the metal member 1300 is a laser welding method in which the valve body 201 and the plate 202 are laid on top of each other and welded with the laser L to process them into the manifold 1400. The manifold 1400 formed by the laser welding includes the valve body 201, the plate 202, the welded portion 3 (see FIG. 79), and the non-welded portion 4 (see FIG. 79). The configurations of the valve body 201, the plate 202, the welded portion 3, and the non-welded portion 4 will be described.

A direction in which the valve body 201 and the plate 202 are arranged is defined as the Z direction, the Z direction toward the valve body 201 is defined as the Z1 direction, and the Z direction toward the plate 202 is defined as the Z2 direction. A direction in which the slit 22 of the plate 202 described later extends is defined as the X direction, one direction of the X direction is defined as the X1 direction, and the other direction of the X direction is defined as the X2 direction. A direction orthogonal to both the X direction and the Z direction is defined as the Y direction, one direction of the Y direction is defined as the Y1 direction, and the other direction of the Y direction is defined as the Y2 direction.

### (Valve Body)

As shown in FIG. 77, the valve body 201 is an aluminum molded product (die-cast product). As shown in FIG. 78, the valve body 201 is a member having the thickness Th1 larger than the thickness Th2 of the plate 202 in the Z direction. The surface of the die-cast product is processed relatively roughly, and metal vapor is easily generated by the laser L. With the joining method for the metal member 1300 (see FIG. 64), the metal vapor can effectively be discharged to the external space Ex (see FIG. 67). For ease of description, FIGS. 77 and 78 show a state before the valve body 201 and the plate 202 are welded.

Specifically, as shown in FIG. 78, the valve body 201 includes the bottom 11, the protrusion 12, and the recess 13. The bottom 11 and the protrusion 12 are formed integrally. The recess 13 of the valve body 201 is covered with a portion of the plate 202 other than the slit 22, thereby forming the channel 200a through which the refrigerant (fluid) flows.

The bottom 11 is a portion of the valve body 201 on the Z2 direction side of the protrusion 12. The bottom 11 has the thickness Th11 in the Z direction. The protrusion 12 is a portion of the valve body 201 on the Z1 direction side of the bottom 11. The protrusion 12 is a portion protruding from the bottom surface 11a of the bottom 11 in the Z1 direction. That is, the protrusion 12 has the thickness Th12 in the Z direction. The protrusion 12 has the tip surface 12a at the end on the Z1 direction side.

The recess 13 is a portion recessed in the Z2 direction from the tip surface 12a. A plurality of recesses 13 is provided in the valve body 201.

### (Plate)

As shown in FIG. 78, the plate 202 is an aluminum molded product. Specifically, the plate 202 includes the plate-shaped portion 21 and the slit 22.

The plate-shaped portion 21 is a portion of the plate 202 other than the slit 22. The plate-shaped portion 21 is a portion in a plate shape having the thickness Th2 in the Z direction and extending along the X direction and the Y direction. The plate-shaped portion 21 has the front surface 21a on the Z1 direction side. The front surface 21a is a flat surface extending along the X direction and the Y direction.

The slit 22 is an elongated hole passing through the plate 202 from the front surface 21a in the Z2 direction and extending in the X direction (or the Y direction). The slit 22 has the pair of side surfaces 22a and the pair of end surfaces 22b (see FIG. 62).

### (Welded Portion)

As shown in FIGS. 79 and 80, the welded portion 3 is formed by melting and solidifying the valve body 201 and the plate 202. That is, the welded portion 3 is formed by melting the vicinity of the tip surface 12a of the valve body 201 and the vicinity of the pair of side surfaces 22a of the plate 202 with the laser L (see FIG. 60) and then solidifying them. The welded portion 3 is a joint (weld) portion between the valve body 201 and the plate 202. The welded portion 3 is a portion where the valve body 201 and the plate 202 are joined by welding together to seal the channel 200a.

The welded portion 3 includes the first portion 31 and the second portion 32. The first portion 31 is a portion of the welded portion 3 that is provided in the valve body 201. The first portion 31 has a tapered shape in which the width decreases toward the Z2 direction side. The second portion 32 is a portion of the welded portion 3 that is provided in the plate 202. The second portion 32 has a divergent shape in which the width increases toward the Z1 direction side. The first portion 31 and the second portion 32 are provided integrally in the Z direction.

### (Non-welded Portion)

As shown in FIG. 79, the non-welded portion 4 is a portion of the space within the slit 22 that is not filled with the welded portion 3. That is, the non-welded portion 4 is a space portion where the valve body 201 and the plate 202 are not melted and solidified. The non-welded portion 4 is a portion where the valve body 201 and the plate 202 are not joined (welded). The non-welded portion 4 is a space that communicates with the space outside the manifold 1400.

### (Joining Method for Manifold (Metal Member))

Hereinafter, the joining method for the manifold 1400 according to the application example will be described with reference to FIG. 81. The joining method for the manifold 1400 is a joining method that can suppress, when the valve body 201 and the plate 202 are joined, entry of metal vapor generated by radiating the laser L to the plate 202 into a portion (molten metal) where the valve body 201 and the plate 202 are melted by the laser L. Steps S2 and S4 are the same as those in the above joining method for the metal member 1300, and therefore description thereof will be omitted.

**In** step S201, the valve body 201 and the plate 202 are held while being laid on top of each other (see FIG. 78). Step S201 is a step in which the X1-side end of the side surface 22a of the plate 202 along the X direction is brought into contact with the tip surface 12a of the valve body 201 along the X direction and the Y direction such that part of the tip surface 12a is exposed. The part of the tip surface 12a of the valve body 201 is exposed through the slit 22. That is, the part of the tip surface 12a of the valve body 201 is in contact with the space outside the manifold 1400 via the slit 22 in the Z1 direction, the X1 direction, and the X2 direction.

Step S201 is a step of covering the recess 13 of the valve body 201 with a portion of the plate 202 other than the slit 22, thereby forming the channel 200a through which the refrigerant (fluid) flows.

**In** step S203, welding using the laser L is started along the slit 22. That is, step S3 is a step in which the valve body 201 and the plate 202 are j oined by welding together by radiating the laser L toward the exposed portion of the tip surface 12a of the valve body 201 and the end surface portion 211a of the plate 202.

Step S203 is a step of joining the valve body 201 and the plate 202 by welding together using the laser L to seal the channel 200a (see FIG. 80).

After step S4, the joining method for the manifold 1400 is terminated.

### [Modifications]

The above embodiments disclosed herein should be construed as illustrative in all respects and not restrictive. The scope of the present invention is shown by the claims rather than by the description of the above embodiments, and includes all changes (modifications) that fall within the meaning and scope equivalent to the claims.

For example, the first to fourth embodiments illustrate the example in which the joining method for the metal member 100 (700, 900, 1000, 1200, 1300) is assumed to be applied to the processing of the manifold 200 (800, 1100). However, the present invention is not limited to this. In the present invention, the metal member joining method may be applied to joining for a metal member other than the manifold in the vehicle, joining for a metal member in a generator, or joining for a metal member in a product other than the vehicle.

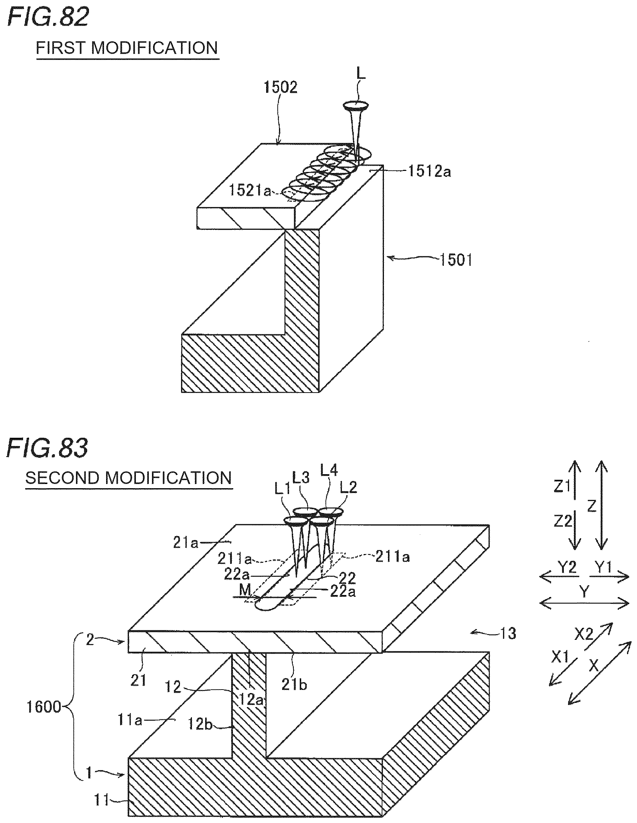

The first embodiment illustrates the example in which step S3 is the step in which the first metal member 1 and the second metal member 2 are joined by welding together by radiating the laser L toward the exposed portion of the tip surface 12a of the first metal member 1 and the end surface portion 211a around the slit 22 of the second metal member 2. However, the present invention is not limited to this. As in a first modification shown in FIG. 82, the step of joining by welding may be a step in which a first metal member 1501 and a second metal member 1502 are joined by welding together by radiating the laser L toward an exposed portion of a tip surface 1512a of the first metal member 1501 and an end surface portion 1521a around the end of the second metal member 1502.

The first embodiment illustrates the example in which the laser welding is performed by the wobbling process in which the processing (welding) is performed by relatively moving the held first metal member 1 and the held second metal member 2 in the X1 direction (X2 direction, Y1 direction, or Y2 direction) while rotating (turning) the laser L in the circular orbit about the rotation axis parallel to the Z direction. However, the present invention is not limited to this.

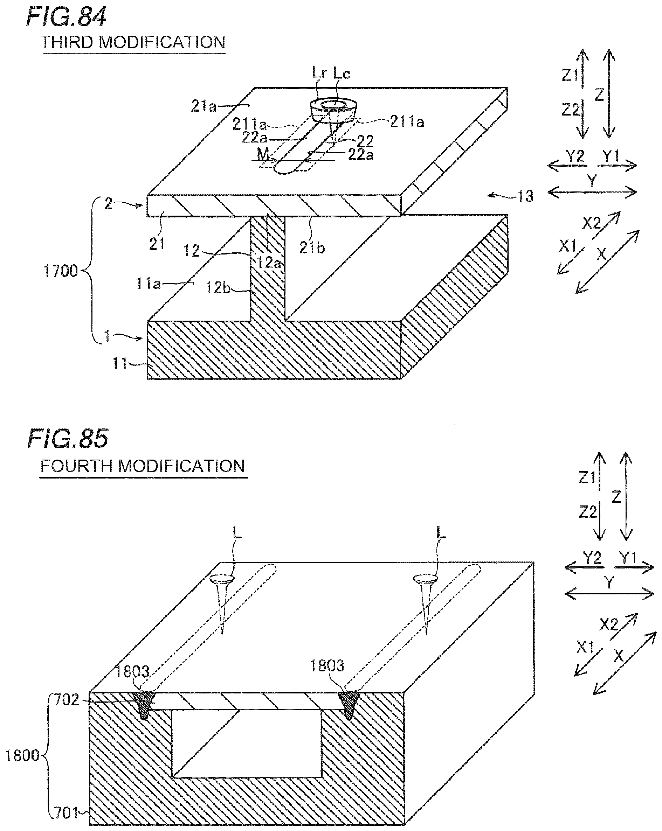

In the present invention, as in a second modification shown in FIG. 83, the laser welding may be such that, in order that the laser radiation range be larger than the distance M between the pair of side surfaces 22a facing each other, a laser L1 and a laser L2 are arranged in the Y direction and a laser L3 and a laser L4 are arranged on the X2 direction side of the laser L1 and the laser L2 to weld a metal member 1600. In this case, the laser welding is performed by linearly moving the laser L1, the laser L2, the laser L3, and the laser L4 along the direction in which the slit 22 extends, thereby melting the exposed portion of the tip surface 12a of the first metal member 1 while melting the end surface portion 211a of the second metal member 2. As in a third modification shown in FIG. 84, the laser welding may be such that, in order that the laser radiation range be larger than the distance M between the pair of side surfaces 22a facing each other, a metal member 1700 is welded using a linear laser Lc disposed at the center position of the slit 22 in the Y direction and a ring-shaped laser Lr that is coaxial with the laser Lc and has a wider radiation range than the laser Lc. In this case, the laser welding is performed by linearly moving the laser Lc and the laser Lr along the direction in which the slit 22 extends, thereby melting the exposed portion of the tip surface 12a of the first metal member 1 while melting the end surface portion 211a of the second metal member 2. The laser welding according to the second modification and the third modification may be applied to the joining method for the metal member 700 according to the second embodiment, the joining method U for the metal member 900 according to the third embodiment, the joining method for the metal member 1000 according to the fourth embodiment, the joining method for the metal member 1200 according to the fifth embodiment, and the joining method for the metal member 1300 according to the sixth embodiment.

The first embodiment illustrates the example in which each of the pair of side surfaces 22a is the flat surface extending in the Y direction and the Z direction. However, the present invention is not limited to this. In the present invention, each of the pair of side surfaces may be chamfered at the end on the Z1 direction side. Therefore, the thickness of the second metal member is reduced and the amount of the second metal member melted onto the first metal member is reduced, thereby preventing the case where the metal vapor generated from the first metal member by the laser radiation is hardly discharged due to the molten second metal member.

The first embodiment illustrates the example in which the second metal member 2 includes the slit 22. However, the present invention is not limited to this. In the present invention, the second metal member may be divided into two members, and a groove exposing the first surface of the first metal member may be formed between one member and the other member. The second metal member may have a through hole formed in alignment with the radiation position of the intermittently radiated laser. In this case, the laser is radiated to the first surface exposed via the through hole.

The first embodiment illustrates the example of the joining method for the metal member 100 in which the first metal member 1 and the second metal member 2 are laid on top of each other and welded with the laser L. However, the present invention is not limited to this. In the present invention, the metal member joining method may be such that the first metal member and the second metal member are laid on top of each other and welded with an electron beam (example of the energy beam).

The second to fifth embodiments illustrate the example of the joining method for the metal member 700 (900, 1200) in which the welding is performed using the laser L with the second metal member 702 (902, 1202) fitted to the first metal member 701. However, the present invention is not limited to this. In the present invention, the metal member joining method may be such that the welding is performed using an electron beam (example of the energy beam) with the first metal member fitted to the second metal member.

The second embodiment illustrates the example in which step S703 (step of joining by welding) is the step of joining the side surface 702b (or the side surface 702c) of the second metal member 702 and the facing side surface 712b of the fitting recess 712 by welding together using the laser L (energy beam). However, the present invention is not limited to this. **In** the present invention, the step of joining by welding may be a step of joining the side surface of the second metal member, the facing side surface of the fitting recess, and the placement surface of the fitting recess by welding together using the energy beam. **In** this case, as in a fourth modification shown in FIG. 85, in a metal member 1800, a welded portion 1803 is provided across the first metal member 701 and the second metal member 702 in the Y direction and also across the second metal member 702 and the first metal member 701 in the Z2 direction.

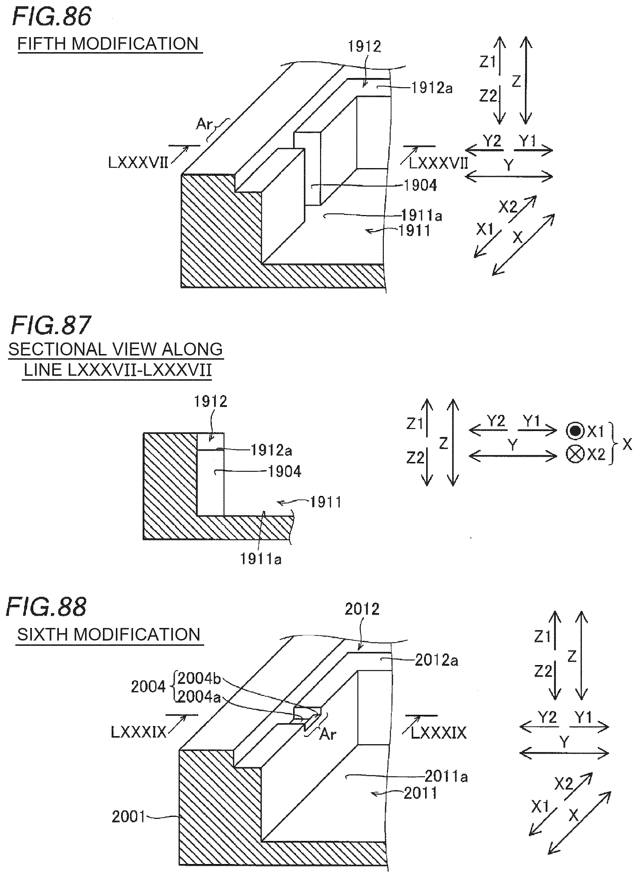

The fourth embodiment illustrates the example in which the cutout 1004 is recessed to the Z2 direction side up to the midpoint between the placement surface 1012a of the fitting recess 1012 and the bottom surface 1011b of the recess 1011. However, the present invention is not limited to this. **In** the present invention, as in a fifth modification shown in FIGS. 86 and 87, a cutout 1904 may be recessed to the Z2 direction side up to a bottom surface 1911a of a recess 1911 from a bottom surface 1912a of a fitting recess 1912.

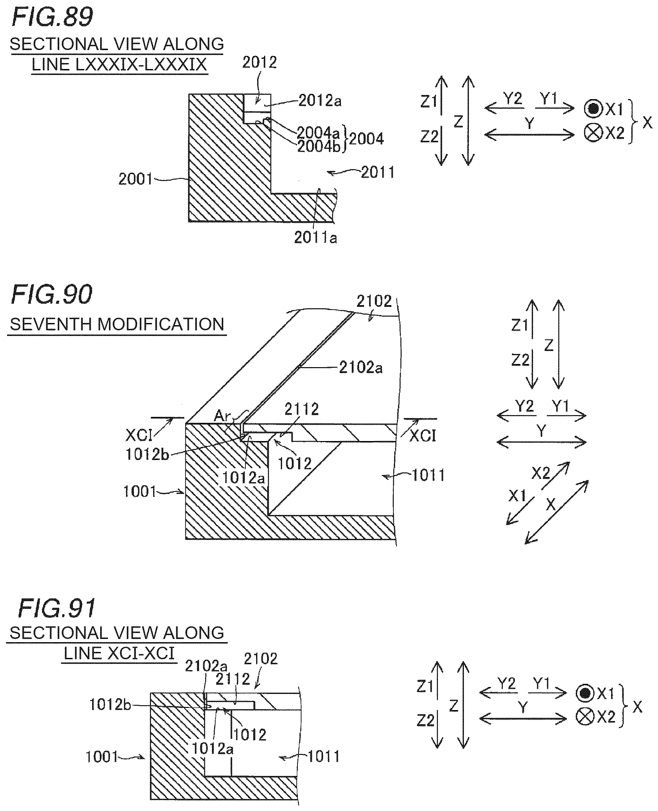

The fourth embodiment illustrates the example in which the cutout 1004 is formed in the weld overlap region Ar on the placement surface 1012a of the fitting recess 1012 of the first metal member 1001. However, the present invention is not limited to this. **In** the present invention, as in a sixth modification shown in FIGS. 88 and 89, a step portion 2004 may be formed in the weld overlap region Ar on a placement surface 2012a of a fitting recess 2012. The step portion 2004 has a step surface 2004a and a bottom surface 2004b. The bottom surface 2004b is disposed on the Z2 direction side of the step surface 2004a, and is disposed on the Z2 direction side of the placement surface 2012a. Therefore, a gap is formed between the placement surface 2012a and the step surface 2004a, and metal vapor is discharged to a recess 2011 via the space of the step portion 2004. The bottom surface 2004b is disposed on the Z2 direction side of the step surface 2004a, and is disposed on the Y2 direction side of the step surface 2004a. Therefore, a metal piece melted during welding of a first metal member 2001 and a second metal member (not shown) is received by the bottom surface 2004b, and the side surface between the step surface 2004a and the bottom surface 2004b restricts entry of the metal piece into the recess 2011. The step portion 2004 is an example of the "first release space" in the claims.

**In** the present invention, as in a seventh modification shown in FIGS. 90 and 91, a cutout 2112 may be formed in the weld overlap region Ar on a side surface 2102a of a second metal member 2102. Therefore, the step of joining by welding includes a step of melting the side surface 2102a of the second metal member 2102 and the facing side surface 1012b of the first metal member 1001 using the laser L in the weld overlap region Ar. The cutout 2112 is an example of the "first release space" and a "second cutout" in the claims.

By providing the cutout 2112 in the second metal member 2102 to create the release space, the portion in the weld overlap region Ar where the side surface 2102a of the second metal member 2102 and the facing side surface 1012b of the first metal member 1001 are melted can be reduced by the amount corresponding to the cutout 2112, thereby reducing the amount of metal vapor generated during the welding using the laser L and releasing the generated metal vapor to the recess 1011 via the cutout 2112. As a result, the formation of blowholes in the joint portion formed by the solidification of the molten first metal member 1001 and the molten second metal member 2102 can further be suppressed.

**In** the present invention, in the weld overlap region on the bottom surface of the fitting recess of the first metal member, a communication path may be formed, instead of the cutout, by a through hole that communicates the recess and the gap between the side surface of the second metal member and the facing side surface of the first metal member.

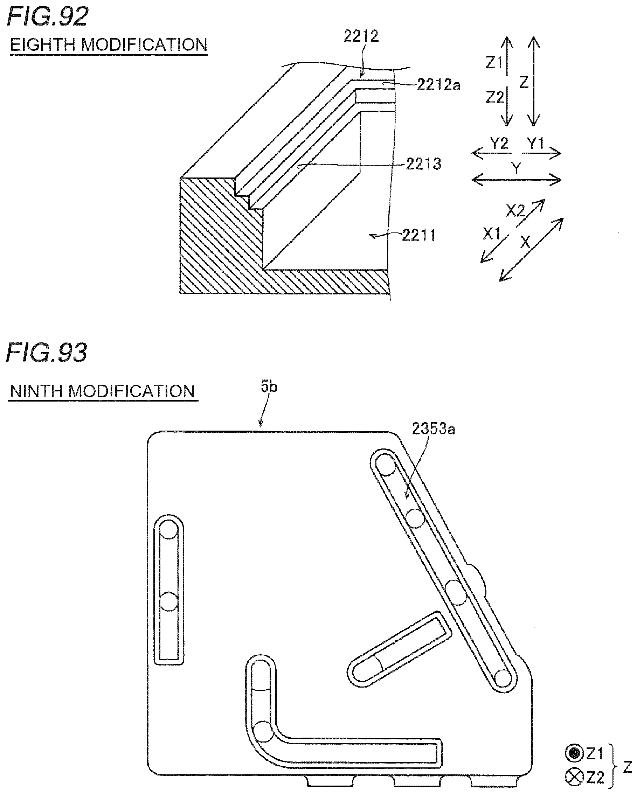

The fifth embodiment illustrates the example in which the "second release space" in the claims is the inclined surface 1213. However, the present invention is not limited to this. In the present invention, the second release space may be a cutout 2213 as in an eighth modification shown in FIG. 92. That is, the second release space is the cutout 2213 provided on a first channel recess 2211 side of a placement surface 2212a. By creating the release space using the cutout 2213, the release space can be created with a simple structure. The cutout 2213 is an example of a "third cutout" in the claims.

The sixth embodiment illustrates the example in which the refrigerant path 53a having the three or more device connection portions 54 of the refrigerant manifold 5 is formed in the circular arc shape. However, the present invention is not limited to this. In the present invention, a refrigerant path 2353a having three or more device connection portions 54 of a refrigerant manifold 5b according to a ninth modification shown in FIG. 93 may be formed in a straight shape. The refrigerant path having the three or more device connection portions need not have the circular arc shape as long as it has an arc shape.

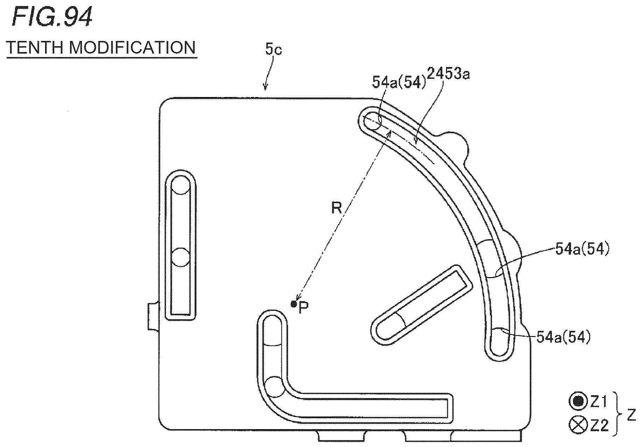

The sixth embodiment illustrates the example in which the four device connection portions 54 are provided in the circular arc-shaped refrigerant path 53a of the refrigerant manifold 5. However, the present invention is not limited to this. In the present invention, as in a refrigerant manifold 5c according to a tenth modification shown in FIG. 94, three device connection portions 54 may be provided in a circular arc-shaped refrigerant path 2453a of the refrigerant manifold 5c. Although illustration is omitted, five or more device connection portions may be provided in a refrigerant path having an arc or straight shape.

### [Summary of Embodiments]

The first to fifth embodiments include at least the following configurations.

The joining method for the metal member (100, 700, 900, 1000, 1200) is a joining method for a metal member (100, 700, 900, 1000, 1200) that involves welding a first metal member (1, 701, 901, 1001, 1201) and a second metal member (2, 702, 902, 1002, 1202) using an energy beam (L). The joining method includes: a step (S1, S701, S901, S1001, S1201) of bringing an end (En1) on a radiation direction (Z2) side for a side surface (12b, 702b, 702c, 902b, 902c, 1002b, 1002c, 1002d, 1002e, 1202b, 1202c, 1202d, 1202e) of the second metal member (2, 702, 902, 1002, 1202) along a radiation direction (Z2) of the energy beam (L) into contact with a first surface (12a, 701a, 801a, 1001a, 1201a) of the first metal member (1, 701, 901, 1001, 1201) along a direction orthogonal to the radiation direction (Z2) such that part of the first surface (12a, 701a, 801a, 1001a, 1201a) is exposed; and a step (S3, S703, S903, S1003, S1203) of joining the first metal member (1, 701, 901, 1001, 1201) and the second metal member (2, 702, 902, 1002, 1202) by welding together by radiating the energy beam (L) toward an end surface portion (211a, 711a, 721d, 921d, 1021d, 1221d) on **an exposed** first surface (12a, 701a, 801a, 1001a, 1201a) side in a second surface (21a, 702d, 902d, 1002f, 1202f) that extends along a direction orthogonal to the radiation direction (Z2) and is continuous with an end (En2) opposite to the radiation direction (Z2) side for the side surface (12b, 702b, 702c, 902b, 902c, 1002b, 1002c, 1002d, 1002e, 1202b, 1202c, 1202d, 1202e) of the second metal member (2, 702, 902, 1002, 1202). With this configuration, metal vapor of the first metal member (1, 701, 901, 1001, 1201) and the second metal member (2, 702, 902, 1002, 1202) generated by the energy beam (L) radiated toward the end surface portion (211a, 711a, 721d, 921d, 1021d, 1221d) of the second metal member (2, 702, 902, 1002, 1202) can be discharged to the discharge space Sp (space) that exposes the first surface (12a, 701a, 801a, 1001a, 1201a) of the first metal member (1, 701, 901, 1001, 1201). Thus, the metal vapor generated from the first metal member (1, 701, 901, 1001, 1201) and the second metal member (2, 702, 902, 1002, 1202) can easily be discharged to the external space Ex outside the metal member (100, 700, 900, 1000, 1200), thereby suppressing the entry of the metal vapor into the molten metal of the second metal member (2, 702, 902, 1002, 1202). As a result, the entry of the metal vapor into the molten metal of the second metal member (2, 702, 902, 1002, 1202) included in the metal member (100, 700, 900, 1000, 1200) can be suppressed, thereby suppressing the formation of blowholes in the joint portion formed by the solidification of the molten metal of the first metal member (1, 701, 901, 1001, 1201) and the second metal member (2, 702, 902, 1002, 1202) included in the metal member (100, 700, 900, 1000, 1200).

The first metal member (1) has a shape that extends from the first surface (12a) in the radiation direction (Z2) and has a predetermined thickness (Th12). The step (S3) of joining by welding includes a step of radiating the energy beam (L) toward an exposed portion of the first surface (12a) of the first metal member (1) and the end surface portion (211a) of the second metal member (2). There is commonly known a method in which the energy beam (L) penetrates the first metal member (1) and the metal vapor generated from the first metal member (1) is discharged to the outside of the metal member (100) from the tip of the penetrated portion on the radiation direction (Z2) side. If this method is adopted in the case where the portion of the first metal member (1) irradiated with the energy beam (L) has the shape with the predetermined thickness (Th12: relatively large thickness), the metal vapor generated from the first metal member (1) enters the molten metal of the first metal member (1) before the energy beam (L) penetrates the first metal member (1). Thus, blowholes are formed in the joint portion between the first metal member (1) and the second metal member (2). Through the step of radiating the energy beam (L) toward the exposed portion of the first surface (12a) of the first metal member (1) and the end surface portion (211a) of the second metal member (2), the metal vapor generated from the first metal member (1) can easily be discharged to the external space Ex outside the metal member (100) without penetrating the first metal member (1) by the energy beam (L), thereby further suppressing the formation of blowholes in the joint portion formed by the solidification of the molten first metal member (1) and the molten second metal member (2).

The second metal member (2) includes a slit (22) passing through the second metal member (2) in the radiation direction (Z2), and a pair of side surfaces (12b) facing each other in a direction (Y) orthogonal to both the radiation direction (Z2) and a direction (X) in which the slit (22) extends. The step (S3) of joining by welding includes a step of causing the energy beam (L) to melt both an exposed portion of the first surface (12a) and the end surface portion (211a) corresponding to each of the pair of side surfaces (12b) of the second metal member (2) and filling a space enclosed by the exposed portion of the first surface (12a) and the pair of side surfaces (12b) with molten metal. With this configuration, by causing the energy beam (L) to melt both the exposed portion of the first surface (12a) and the end surface portion (211a) corresponding to each of the pair of side surfaces (12b) of the second metal member (2), the first metal member (1) and the second metal member (2) can be welded more efficiently using the energy beam (L) than in a case where the energy beam (L) separately melts the exposed portion of the first surface (12a) of the first metal member (1) and the end surface portion (211a) of the second metal member (2). As a result, it is possible to suppress an increase in time required to weld the first metal member (1, 701, 901, 1001, 1201) and the second metal member (2, 702, 902, 1002, 1202) using the energy beam (L), which is caused by adopting the method for suppressing the formation of blowholes.

The second metal member (2) includes a slit (22) passing through the second metal member (2) in the radiation direction (Z2), and a pair of side surfaces (12b) facing each other in a direction (Y) orthogonal to both the radiation direction (Z2) and a direction (X) in which the slit (22) extends. The step (S3) of joining by welding includes a step of irradiating an exposed portion of the first surface (12a) of the first metal member (1) and the end surface portion (211a) of the second metal member (2) with the energy beam (L) adjusted to a spot diameter smaller than a distance between the pair of side surfaces (12b) facing each other. With this configuration, the energy beam (L) can be radiated with a relatively small spot diameter. Thus, the energy beam (L) can be radiated with concentrated energy. Therefore, when the exposed portion of the first surface (12a) of the first metal member (1) and the end surface portion (211a) of the second metal member (2) are irradiated with the energy beam (L), the energy beam (L) with concentrated energy can reach deep positions in the molten metal portion of the first metal member (1) and the second metal member (2), and the metal is evaporated by the energy beam (L) with concentrated energy, thereby forming a clearance (keyhole) between the energy beam (L) and the molten metal portion formed around the energy beam (L). As a result, the metal vapor generated from the first metal member (1) can be discharged also from the keyhole to the space outside the metal member (100), thereby further suppressing the entry of the metal vapor generated from the first metal member (1) into the molten metal of the second metal member (2).

The first metal member (701, 901, 1001, 1201) includes a fitting recess (712, 1012, 1212) that is recessed in the radiation direction (Z2) and to which the second metal member (702, 902, 1002, 1202) is fitted. The step (S701, S901, S1001, S1201) of contact includes a step of fitting the second metal member (702, 902, 1002, 1202) to the fitting recess (712, 1012, 1212) of the first metal member (701, 901, 1001, 1201). The step (S703, S903, S1003, S1203) of joining by welding includes a step (S3, S703, S903, S1003, S1203) of joining the side surface (702b, 702c, 902b, 902c, 1002b, 1002c, 1002d, 1002e, 1202b, 1202c, 1202d, 1202e) of the second metal member (702, 902, 1002, 1202) and a facing side surface (712b, 1012b, 1212b) of the fitting recess (712, 1012, 1212) that faces the side surface (702b, 702c, 902b, 902c, 1002b, 1002c, 1002d, 1002e, 1202b, 1202c, 1202d, 1202e) of the second metal member (702, 902, 1002, 1202) by welding together using the energy beam (L). With this configuration, since the radiation direction (Z2) of the energy beam (L) is the same as the extending direction of a boundary (Bo) between the side surface (12b, 702b, 702c, 902b, 902c, 1002b, 1002c, 1002d, 1002e, 1202b, 1202c, 1202d, 1202e) of the second metal member (2, 702, 902, 1002, 1202) and the facing side surface (712b, 1012b, 1212b) of the fitting recess (712, 1012, 1212), the portion joined by welding can be formed over the substantially entire boundary (Bo) between the side surface (12b, 702b, 702c, 902b, 902c, 1002b, 1002c, 1002d, 1002e, 1202b, 1202c, 1202d, 1202e) of the second metal member (2, 702, 902, 1002, 1202) and the facing side surface (712b, 1012b, 1212b) of the fitting recess (712, 812, 1012, 1212, 2212). As a result, the sealing at the boundary (Bo) between the side surface (12b, 702b, 702c, 902b, 902c, 1002b, 1002c, 1002d, 1002e, 1202b, 1202c, 1202d, 1202e) of the second metal member (2, 702, 902, 1002, 1202) and the facing side surface (712b, 1012b, 1212b) of the fitting recess (712, 812, 1012, 1212, 2212) can be ensured.

The step (S703, S903, S1003, S1203) of joining by welding includes a step (S703, S903, S1003, S1203) of joining the side surface (702b, 702c, 902b, 902c, 1002b, 1002c, 1002d, 1002e, 1202b, 1202c, 1202d, 1202e) of the second metal member (702, 902, 1002, 1202), the facing side surface (712b, 1012b, 1212b) of the fitting recess (712, 1012, 1212), and an exposed portion of the first surface (701a, 801a, 1001a, 1201a) of the first metal member (701, 901, 1001, 1201) by welding together using the energy beam (L). With this configuration, it is possible to increase the amount of metal melted by the energy beam (L), thereby ensuring the joining strength by welding the first metal member (701, 901, 1001, 1201) and the second metal member (702, 902, 1002, 1202).

The first metal member (701, 901, 1001, 1201) includes a first channel recess (711, 1011, 1211, 2211) through which a fluid flows and that is provided on the radiation direction (Z2) side of the fitting recess (712, 1012, 1212). A first release space (1004, 1904, 2004, 2112) is further provided in a weld overlap region (Ar) where the welding using the energy beam (L) overlaps, and metal vapor generated along with the welding using the energy beam (L) is released to the first channel recess (711, 1011, 1211, 2211) through the first release space (1004, 1904, 2004, 2112). The step (S701, S901, S1001, S1201) of fitting includes a step of fitting the second metal member (702, 902, 1002, 1202) to the fitting recess (712, 812, 1012, 1212, 2212) to form the first channel recess (711, 1011, 1211, 2211) as a channel through which the fluid flows. The step (S703, S903, S1003, S1203) of joining by welding includes a step of melting the side surface (702b, 702c, 902b, 902c, 1002b, 1002c, 1002d, 1002e, 1202b, 1202c, 1202d, 1202e) of the second metal member (702, 902, 1002, 1202) and the facing side surface (712b, 1012b, 1212b) of the first metal member (701, 901, 1001, 1201) using the energy beam (L) in the weld overlap region (Ar). In the welding using the energy beam (L), the heat distribution of a high-temperature portion of heat transferred from the front surface of the first metal member (701, 901, 1001, 1201) and the front surface of the second metal member (702, 902, 1002, 1202) is a shrinking heat distribution. Therefore, the melted area of each of the front surface of the first metal member (701, 901, 1001, 1201) and the front surface of the second metal member (702, 902, 1002, 1202) is larger than that of the deeper portions of the first metal member (701, 901, 1001, 1201) and the second metal member (702, 902, 1002, 1202). Since the front surface of the first metal member (701, 901, 1001, 1201) and the front surface of the second metal member (702, 902, 1002, 1202) are melted first in the weld overlap region (Ar), a closed space that is closed on the front surface side of the side surface (702b, 702c, 902b, 902c, 1002b, 1002c, 1002d, 1002e, 1202b, 1202c, 1202d, 1202e) of the second metal member (702, 902, 1002, 1202) and the facing side surface (712b, 1012b, 1212b) of the fitting recess (712, 812, 1012, 1212, 2212) of the first metal member (701, 901, 1001, 1201) is formed. In this case, the metal vapor generated when the weld overlap region (Ar) is welded remains in the closed space, and blowholes are formed in the joint portion formed by the solidification of the molten first metal member (701, 901, 1001, 1201) and the molten second metal member (702, 902, 1002, 1202). By providing the first release space (1004, 1904, 2004, 2112) in the weld overlap region (Ar), the closed space is not formed and the metal vapor generated during the welding using the energy beam (L) can be released to the first channel recess (711, 1011, 1211, 2211), thereby suppressing the formation of blowholes in the joint portion formed by the solidification of the molten first metal member (701, 901, 1001, 1201) and the molten second metal member (702, 902, 1002, 1202).

The first release space (1004, 1904, 2004, 2112) is a first cutout (1004, 1904) formed in the weld overlap region (Ar) on a bottom surface of the fitting recess (712, 812, 1012, 1212, 2212) of the first metal member (701, 901, 1001, 1201). The step (S703, S903, S1003, S1203) of joining by welding includes a step of melting the side surface (702b, 702c, 902b, 902c, 1002b, 1002c, 1002d, 1002e, 1202b, 1202c, 1202d, 1202e) of the second metal member (702, 902, 1002, 1202) and the facing side surface (712b, 1012b, 1212b) of the first metal member (701, 901, 1001, 1201) using the energy beam (L) in the weld overlap region (Ar). With this configuration, by creating the first release space (1004, 1904, 2004, 2112) using the first cutout (1004, 1904), the complexity of design changes to the mold for forming the first release space (1004, 1904, 2004, 2112) in the first metal member (701, 901, 1001, 1201) can be suppressed, and therefore the first metal member (701, 901, 1001, 1201) having the first cutout (1004, 1904) can be created relatively easily.

The first release space (1004, 1904, 2004, 2112) is a second cutout (2112) formed in the weld overlap region (Ar) on the side surface (702b, 702c, 902b, 902c, 1002b, 1002c, 1002d, 1002e, 1202b, 1202c, 1202d, 1202e) of the second metal member (702, 902, 1002, 1202). The step (S703, S903, S1003, S1203) of joining by welding includes a step of melting the side surface (702b, 702c, 902b, 902c, 1002b, 1002c, 1002d, 1002e, 1202b, 1202c, 1202d, 1202e) of the second metal member (2, 702, 902, 1002, 1202) and the facing side surface (712b, 1012b, 1212b) of the first metal member (701, 901, 1001, 1201) using the energy beam (L) in the weld overlap region (Ar). With this configuration, by providing the second cutout (2112) in the second metal member (702, 902, 1002, 1202) to create the first release space (1004, 1904, 2004, 2112), the portion in the weld overlap region (Ar) where the side surface (702b, 702c, 902b, 902c, 1002b, 1002c, 1002d, 1002e, 1202b, 1202c, 1202d, 1202e) of the second metal member (702, 902, 1002, 1202) and the facing side surface (712b, 1012b, 1212b) of the first metal member (701, 901, 1001, 1201) are melted can be reduced by the amount corresponding to the second cutout (2112), thereby reducing the amount of metal vapor generated during the welding using the energy beam (L) and releasing the generated metal vapor to the first channel recess (711, 1011, 1211, 2211) via the second cutout (2112). As a result, the formation of blowholes in the joint portion formed by the solidification of the molten first metal member (1, 701, 901, 1001, 1201) and the molten second metal member (2, 702, 902, 1002, 1202) can further be suppressed.

The first metal member (1201) includes a first channel recess (1211, 2211) through which a fluid flows and that is provided on the radiation direction (Z2) side of the fitting recess (1212, 2212), a placement surface (1212a, 2212a) that is provided in the fitting recess (1212, 2212) and on which the second metal member (1202) is placed, and a second release space (1213, 2213) that is provided on a first channel recess (1211, 2211) side of the placement surface (1212a, 2212a) in a cross section along the radiation direction (Z2) and through which metal vapor generated along with the welding using the energy beam (L) is released to the first channel recess (1211, 2211). The step (S1201) of contact includes a step of placing the second metal member (1202) on the placement surface (1212a, 2212a) of the first metal member (1201) and fitting the second metal member (1202) to the fitting recess (1212, 2212) of the first metal member (1201). The step (S1203) of joining by welding includes a step (S1203) of joining the side surface (1202b, 1202c, 1202d, 1202e) of the second metal member (1202) and the facing side surface (1202b, 1202c, 1202d, 1202e) of the fitting recess (1212, 2212) that faces the side surface (1202b, 1202c, 1202d, 1202e) of the second metal member (1202) by welding together using the energy beam (L). With this configuration, the metal vapor generated along with the welding using the laser (L) is released to the first channel recess (1211, 2211) by the second release space (1213, 2213), thereby suppressing the formation of blowholes in the joint portion formed by the solidification of the molten first metal member (1201) and the molten second metal member

(1202). By providing the second release space (1213, 2213) between the first channel recess (1211, 2211) and the placement surface (1212a, 2212a), foreign matter (Em) formed by the first metal member (1201) and the second metal member (1202) melted by the laser (L) can hardly reach the first channel recess (1211, 2211) due to the presence of the placement surface (1212a, 2212a), and can be solidified on the second release space (1213, 2213) or the placement surface (1212a, 2212a), thereby suppressing the entry of the foreign matter (Em) into the first channel recess (1211, 2211). Thus, it is possible to suppress the entry of the foreign matter (Em) into the first channel recess (1211, 2211) and also to suppress the formation of blowholes in the joint portion.

The second release space (1213, 2213) is provided from one end to the other end of an edge (Eg) of the first channel recess (1211, 2211) at a boundary (Pbo) between the fitting recess (2212) and the first channel recess (1211, 2211). Thus, the metal vapor generated along with the welding using the laser L can be released from the one end to the other end of the edge of the first channel recess (1211, 2211), thereby suppressing the formation of blowholes in the joint portion from the one end to the other end.

The second release space (2213) is a third cutout (2213) provided on the first channel recess (2211) side of the placement surface (2212a). With this configuration, by creating the release space using the cutout (221), the release space can be created with a simple structure.

The second release space (1213) is an inclined surface (1213) that is inclined and provided on the first channel recess (1211) side of the placement surface (1212a). With this configuration, by creating the release space using the inclined surface (1213), the complexity of design changes to the mold for forming the release space in the first metal member (1201) can be suppressed, and therefore the first metal member (1201) having the inclined surface (1213) can be created relatively easily.

The first metal member (701, 901, 1001, 1201) further includes a first channel recess (711, 1011, 1211, 2211) having a width (W2) smaller than a width of the fitting recess (712, 812, 1012, 1212, 2212) in a direction (XY) orthogonal to the radiation direction (Z2) and provided on the radiation direction (Z2) side of the fitting recess (712, 812, 1012, 1212, 2212). The step (S701, S901, S1001, S1201) of contact includes a step of fitting the second metal member (702, 902, 1002, 1202) to the fitting recess (712, 812, 1012, 1212, 2212) of the first metal member (701, 901, 1001, 1201) to form the first channel recess (711, 1011, 1211, 2211) as a channel through which a fluid flows. The step (S703, S903, S1003, S1203) of joining by welding includes a step of joining the side surface (702b, 702c, 902b, 902c, 1002b, 1002c, 1002d, 1002e, 1202b, 1202c, 1202d, 1202e) of the second metal member (702, 902, 1002, 1202) and the facing side surface (712b, 1012b, 1212b) of the fitting recess (712, 812, 1012, 1212, 2212) by welding together using the energy beam (L) to seal the channel. With this configuration, the portion joined by welding can be formed over the substantially entire boundary between the side surface (702b, 702c, 902b, 902c, 1002b, 1002c, 1002d, 1002e, 1202b, 1202c, 1202d, 1202e) of the second metal member (702, 902, 1002, 1202) and the facing side surface (712b, 1012b, 1212b) of the fitting recess (712, 812, 1012, 1212, 2212), thereby further suppressing the leakage of the fluid flowing through the channel to the outside of the metal member (700, 900, 1000, 1200). As a result, the sealing of the channel can be ensured.

The first metal member (1) further includes a protrusion having a shape with a predetermined thickness (Th12) in the radiation direction (Z2) from the first surface (12a), and a second channel recess (13) that is provided to adjoin the protrusion in a direction orthogonal to the radiation direction (Z2) and is recessed in the radiation direction (Z2). The step (S1) of contact includes a step of covering the second channel recess (13) of the first metal member (1) with a portion of the second metal member (2) other than the slit (22) to form a channel through which a fluid flows. The step (S3) of joining by welding includes a step of joining the first metal member (1) and the second metal member (2) by welding together using the energy beam (L) to seal the channel. With this configuration, the formation of blowholes in the joint portion where the first metal member (1) and the second metal member (2) are joined by welding together is suppressed, thereby suppressing leakage of the fluid flowing through the channel formed by the second channel recess (13) of the first metal member (1) and the portion of the second metal member (2) other than the slit (22) to the outside of the metal member (100) through the blowholes. Thus, the sealing of the channel can be ensured.

A metal member (100) includes: a first metal member (1) including a first surface (12a) along one direction (XY) and having a shape with a predetermined thickness (Th12) in another direction (Z) orthogonal to the one direction (XY); a second metal member (2) including a slit (22) passing through the second metal member (2) in the other direction (Z) and a pair of side surfaces (12b) facing each other in a direction (Y) orthogonal to both the other direction (Z) and a direction (X) in which the slit (22) extends; and a welded portion (3) disposed so as to fill a space within the slit (22) enclosed by the first surface (12a) of the first metal member (1) and the pair of side surfaces (12b), and formed by melting and solidifying the first metal member (1) and the second metal member (2). With this configuration, when the welded portion (3) is welded, the welded portion (3) is formed by directly radiating the energy beam (L) to an exposed portion of the first surface (12a) of the first metal member (1, 701, 901, 1001, 1201) without intermediation of the second metal member (2, 702, 902, 1002, 1202). Thus, metal vapor generated by radiating the energy beam (L) to the first surface (12a) of the first metal member (1) can be discharged to a space that is not filled with molten metal of the second metal member (2) melted by the energy beam (L). Accordingly, the metal vapor generated from the first metal member (1) can easily be discharged to the external space (Ex) outside the metal member (100), thereby suppressing the entry of the metal vapor generated from the first metal member (1) into the molten metal of the second metal member (2). Since the side surface (12b) and the second surface (21a) of the second metal member (2) are in contact with the external space (Ex) outside the metal member (100), the metal vapor generated by radiating the energy beam (L) to the end surface portion (211a) of the second metal member (2) is directly discharged to the external space (Ex). Therefore, it is possible to provide the metal member (100) obtained by joining with the joining method for the metal member (100) in which the entry of the metal vapor into the molten metal of the second metal member (2) included in the metal member (100) can be suppressed, thereby suppressing the formation of blowholes in the joint portion formed by the solidification of the molten metal of the first metal member (1) and the second metal member (2) included in the metal member (100).

A non-welded portion (4) that is not filled with the welded portion (3) is further formed in the space within the slit (22). With this configuration, the metal vapor generated from the first metal member (1) can be discharged to the external space Ex outside the metal member (100) via the non-welded portion, thereby more effectively suppressing the entry of the metal vapor generated from the first metal member (1) into the molten metal of the second metal member (2) melted by the energy beam (L).

A metal member (1000) includes: a first metal member (1001) having a fitting recess (1012) that is recessed in one direction (Z2) from a surface (1001a), and a first channel recess (1011) through which a fluid flows and that is provided on a one direction (Z2) side of the fitting recess (1012); a second metal member (1002) that is fitted to the fitting recess (1012) and has a side surface (1002b, 1002c, 1002d, 1002e) along the one direction; a welded portion (1003) formed by melting and solidifying the side surface (1002b, 1002c, 1002d, 1002e) of the second metal member (1002) and a facing side surface (1012b) of the fitting recess (1012) that faces the side surface (1002b, 1002c, 1002d, 1002e) of the second metal member (1002); and a first release space (1004, 1904, 2004, 2112) that is provided in a weld overlap region (Ar) where welding using an energy beam (L) overlaps when the welded portion (1003) is formed and through which metal vapor generated along with the welding using the energy beam (L) is released to the first channel recess (1011). In the welding using the energy beam (L), the heat distribution of a high-temperature portion of heat transferred from the surface of the first metal member (1001) and the surface of the second metal member (1002) is a shrinking heat distribution. Therefore, the melted area of each of the surface of the first metal member (1001) and the surface of the second metal member (1002) is larger than that of the deeper portions of the first metal member (1001) and the second metal member (1002). Since the surface of the first metal member (1001) and the surface of the second metal member (1002) are melted first in the weld overlap region (Ar), a closed space that is closed on the surface side of the side surface (1002b, 1002c, 1002d, 1002e) of the second metal member (1002) and the facing side surface (1012b) of the fitting recess (712, 812, 1012) of the first metal member (1001) is formed. In this case, the metal vapor generated when the weld overlap region (Ar) is welded remains in the closed space, and blowholes are formed in the joint portion formed by the solidification of the molten first metal member (1001) and the molten second metal member (1002). By providing the first release space (1004, 1904, 2004, 2112) in the weld overlap region (Ar), the closed space is not formed and the metal vapor generated during the welding using the energy beam (L) can be released to the first channel recess (1011), thereby providing the metal member (1000) that can suppress the formation of blowholes in the joint portion formed by the solidification of the molten first metal member (1001) and the molten second metal member (1002).

The first release space (1004, 1904, 2004) is a first cutout (1004, 1904, 2004) formed in the weld overlap region (Ar) on a bottom surface of the fitting recess (1012) of the first metal member (1001). With this configuration, by creating the release space using the first cutout (1004, 1904, 2004), the complexity of design changes to the mold for forming the release space in the first metal member (1001) can be suppressed, and therefore the first metal member (1001) having the first cutout can be created relatively easily.

The first release space (2112) is a second cutout (2112) formed in the weld overlap region (Ar) on the side surface (1002b, 1002c, 1002d, 1002e) of the second metal member (1002). With this configuration, by providing the second cutout (2112) in the second metal member (2, 702, 902, 1002, 1202) to create the release space, the portion in the weld overlap region where the side surface (1002b, 1002c, 1002d, 1002e) of the second metal member (1002) and the facing side surface (1012b) of the first metal member (1001) are melted can be reduced by the amount corresponding to the second cutout (2112), thereby reducing the amount of metal vapor generated during the welding using the energy beam (L) and releasing the generated metal vapor to the first channel recess (1011) via the second cutout (2112). As a result, the formation of blowholes in the joint portion formed by the solidification of the molten first metal member (1001) and the molten second metal member (1002) can further be suppressed.

The sixth embodiment includes at least the following configurations.

A refrigerant manifold (5, 5a, 5b, 5c) includes a manifold body (51, 510) including a refrigerant path (53a, 2353a, 2453a) through which a refrigerant flows, and a plurality of device connection portions (54) that has through holes (54a) communicating with the refrigerant path (53a, 2353a, 2453a) and to which various functional devices (D) are connected. The refrigerant path (53a, 2353a, 2453a) is formed in an arc or straight shape and has three or more device connection portions (54). With this configuration, it is possible to avoid such a complex shape that the refrigerant path (53a, 2353a, 2453a) has a plurality of bent portions. Therefore, the shape of the refrigerant path (53a, 2353a, 2453a) can be simplified. Accordingly, the processing can be performed more easily when the refrigerant path (53a, 2353a, 2453a) is formed. The refrigerant path (53a, 2353a, 2453a) has three or more device connection portions (54). Thus, the refrigerant that flows in from one device connection portion (54) can flow out from a plurality of device connection portions (54), or the refrigerant that flows in from a plurality of device connection portions (54) can flow out from one device connection portion (54). Therefore, various refrigerant flows can be achieved. As a result of the above, the shape of the refrigerant path (53a, 2353a, 2453a) can be simplified and various refrigerant flows can be achieved.

The refrigerant path (53a, 2353a, 2453a) is formed in a circular arc shape defined by a radius (R) that is a distance between a predetermined center point (P) and each of the three or more device connection portions (54) when viewed from one surface (51a) side of the manifold body (51, 510). With this configuration, the refrigerant path (53a, 2353a, 2453a) can be formed in the circular arc shape to which the three or more device connection portions (54) are connected, thereby further simplifying the shape of the refrigerant path (53a, 2353a, 2453a). Further, the refrigerant path (53a, 2353a, 2453a) can be processed more easily.

The refrigerant path (53a, 2353a, 2453a) is formed in a recessed shape that is recessed from the one surface (51a) of the manifold body (51, 510). A plate member (52a, 520a) attached to the manifold body (51, 510) from the one surface (51a) side so as to close the recessed refrigerant path (53a, 2353a, 2453a) is further provided. With this configuration, the recessed portion serving as the refrigerant path (53a, 2353a, 2453a) can be closed by the plate member (52a, 520a). Thus, the open portion of the refrigerant path (53a, 2353a, 2453a) that is a closed space can be manufactured easily.

The manifold body (51, 510) includes a groove (6) provided around the refrigerant path (53a, 2353a, 2453a) along an outer edge (531) of the refrigerant path (53a, 2353a, 2453a) when viewed from the one surface (51a) side and formed in a recessed shape that is recessed from the one surface (51a). The plate member (52a, 520a) has a shape conforming to the groove (6) and is attached to the manifold body (51, 510) while being positioned relative to the manifold body (51, 510) by being fitted to the groove (6). With this configuration, the plate member (52a, 520a) can easily be attached to the manifold body (51, 510) by the groove (6). The plate member (52a, 520a) can be formed in conformity with the shape of the refrigerant path (53a, 2353a, 2453a). Therefore, it is possible to suppress an excessive increase in the size of the plate member (52a, 520a) compared to the size of the refrigerant path (53a, 2353a, 2453a). Thus, the amount of material used for manufacturing the plate member (52a, 520a) can be reduced.

**In** the refrigerant manifold (5, 5a, 5b, 5c), the refrigerant path (53a, 2353a, 2453a) has a pair of facing surfaces that faces each other in a transverse direction orthogonal to a longitudinal direction that is a refrigerant flow direction of the refrigerant path (53a, 2353a, 2453a) when viewed from the one surface (51a) side of the manifold body (51, 510). A distance between the pair of facing surfaces in the transverse direction is substantially constant at each position in the longitudinal direction of the refrigerant path (53a, 2353a, 2453a). With this configuration, it is possible to suppress fluctuations in channel width of the refrigerant path (53a, 2353a, 2453a) through which the refrigerant flows, thereby suppressing the occurrence of pressure loss of the refrigerant due to the fluctuations in channel width. Since the refrigerant path (53a, 2353a, 2453a) has the substantially constant width, the refrigerant path (53a, 2353a, 2453a) can be processed more easily.

The through hole (54a) of the device connection portion (54) is formed by machining from the other surface toward the one surface (51a) of the manifold body (51, 510) up to a position where the through hole (54a) communicates with the refrigerant path (53a, 2353a, 2453a). Therefore, the transverse width of the through hole (54a) is larger than the distance between the pair of facing surfaces. With this configuration, the machining of the through hole (54a) of the device connection portion (54) can be stopped at the position where the through hole (54a) communicates with the refrigerant path (53a, 2353a, 2453a), thereby avoiding the case where the through hole (54a) of the device connection portion (54) extends through the refrigerant path (53a, 2353a, 2453a).

When viewed from the one surface (51a) side, the longitudinal end of the refrigerant path (53a, 2353a, 2453a) is formed by a circular arc surface having a circular arc shape and connecting the pair of facing surfaces or a flat straight surface extending in a straight shape in the transverse direction and connecting the pair of facing surfaces. With this configuration, the shape of the refrigerant path (53a, 2353a, 2453a) can further be simplified by the end with the circular arc surface or the straight surface.

### Description of the Reference Numerals

1, 701, 1001, 1201, 1501, 2001 first metal member, 2, 702, 902, 1002, 1202, 1502 second metal member, 12b, 702b, 702c, 802b, 802c, 902b, 902c, 1002b, 1002c, 1002d, 1002e, 1102b, 1102c, 1202b, 1202c, 1202d, 1202e, 2102a side surface (of second metal member), 13 recess (second channel recess), 711, 1011, 1211, 1911, 2011 recess (first channel recess), 21a, 702d, 802d, 902d, 1002f, 1102d, 1202f front surface (of second metal member), 22 slit, 22a side surface (of slit), 100, 700, 900, 1000, 1200, 1600, 1700, 1800 metal member, 200, 800, 1100 manifold (metal member), 201, 801, 1101 valve body (first metal member), 202, 802, 1102 plate (second metal member), 211a, 711a, 721d, 921d, 1021d, 1221d, 1521a end surface portion, 701a, 801a, 1001a, 1201a front surface (of first metal member), 712, 812, 1012, 1111, 1211, 1912, 2012, 2212 fitting recess, 712a, 812a, 1012a, 1111a, 1212a, 2212a placement surface (bottom surface of fitting recess, first surface), 712b, 812b, 1012b, 1111b, 1212b facing side surface, 1004, 1113, 1604, 1812 cutout (first release space, first cutout), 1213 inclined surface (second release space), 2004 step portion (first release space), 2213 cutout (second release space), Ar weld overlap region, En1, En2 end, L, L1, L2, L3, L4, Lc, Lr laser (energy beam), Th12thickness (predetermined thickness)

## Claims

1. A metal member joining method for welding a first metal member and a second metal member using an energy beam, the metal member joining method comprising:
a step of bringing an end on the radiation direction side for a side surface of the second metal member along a radiation direction of the energy beam into contact with a first surface of the first metal member along a direction orthogonal to the radiation direction such that part of the first surface is exposed; and
a step of joining the first metal member and the second metal member by welding together by radiating the energy beam toward an end surface portion on the exposed first surface side in a second surface that extends along a direction orthogonal to the radiation direction and is continuous with an end opposite to the radiation direction side for the side surface of the second metal member.

2. The metal member joining method according to claim 1, wherein
the first metal member has a shape that extends from the first surface in the radiation direction and has a predetermined thickness, and
the step of joining by welding includes a step of radiating the energy beam toward an exposed portion of the first surface of the first metal member and the end surface portion of the second metal member.

3. The metal member joining method according to claim 1, wherein
the second metal member includes a slit passing through the second metal member in the radiation direction, and a pair of the side surfaces facing each other in a direction orthogonal to both the radiation direction and a direction in which the slit extends, and
the step of joining by welding includes a step of causing the energy beam to melt both an exposed portion of the first surface and the end surface portion corresponding to each of the pair of the side surfaces of the second metal member and filling a space enclosed by the exposed portion of the first surface and the pair of the side surfaces with molten metal.

4. The metal member joining method according to claim 1, wherein
the second metal member includes a slit passing through the second metal member in the radiation direction, and a pair of the side surfaces facing each other in a direction orthogonal to both the radiation direction and a direction in which the slit extends, and
the step of joining by welding includes a step of irradiating an exposed portion of the first surface of the first metal member and the end surface portion of the second metal member with the energy beam adjusted to a spot diameter smaller than a distance between the pair of the side surfaces facing each other.

5. The metal member joining method according to claim 1, wherein
the first metal member includes a fitting recess that is recessed in the radiation direction and to which the second metal member is fitted,
the step of contact includes a step of fitting the second metal member to the fitting recess of the first metal member, and
the step of joining by welding includes a step of joining the side surface of the second metal member and a facing side surface of the fitting recess that faces the side surface of the second metal member by welding together using the energy beam.

6. The metal member joining method according to claim 5, wherein the step of joining by welding includes a step of joining the side surface of the second metal member, the facing side surface of the fitting recess, and an exposed portion of the first surface of the first metal member by welding together using the energy beam.

7. The metal member joining method according to claim 5, wherein
the first metal member includes a first channel recess through which a fluid flows and that is provided on the radiation direction side of the fitting recess,
a first release space is further provided in a weld overlap region where the welding using the energy beam overlaps, and metal vapor generated along with the welding using the energy beam is released to the first channel recess through the first release space,
the step of fitting includes a step of fitting the second metal member to the fitting recess to form the first channel recess as a channel through which the fluid flows, and
the step of joining by welding includes a step of melting the side surface of the second metal member and the facing side surface of the first metal member using the energy beam in the weld overlap region.

8. The metal member joining method according to claim 7, wherein
the first release space is a first cutout formed in the weld overlap region on a bottom surface of the fitting recess of the first metal member, and
the step of joining by welding includes a step of melting the side surface of the second metal member and the facing side surface of the first metal member using the energy beam in the weld overlap region.

9. The metal member joining method according to claim 7, wherein
the first release space is a second cutout formed in the weld overlap region on the side surface of the second metal member, and
the step of joining by welding includes a step of melting the side surface of the second metal member and the facing side surface of the first metal member using the energy beam in the weld overlap region.

10. The metal member joining method according to claim 5, wherein
the first metal member includes
a first channel recess through which a fluid flows and that is provided on the radiation direction side of the fitting recess,
a placement surface that is provided in the fitting recess and on which the second metal member is placed, and
a second release space that is provided on the first channel recess side of the placement surface in a cross section along the radiation direction and through which metal vapor generated along with the welding using the energy beam is released to the first channel recess,
the step of contact includes a step of placing the second metal member on the placement surface of the first metal member and fitting the second metal member to the fitting recess of the first metal member, and
the step of joining by welding includes a step of joining the side surface of the second metal member and the facing side surface of the fitting recess that faces the side surface of the second metal member by welding together using the energy beam.

11. The metal member joining method according to claim 10, wherein the second release space is provided from one end to the other end of an edge of the first channel recess at a boundary between the fitting recess and the first channel recess.

12. The metal member joining method according to claim 10, wherein the second release space is a third cutout provided on the first channel recess side of the placement surface.

13. The metal member joining method according to claim 10, wherein the second release space is an inclined surface that is inclined and provided on the first channel recess side of the placement surface.

14. The metal member joining method according to claim 5, wherein
the first metal member further includes a first channel recess having a width smaller than a width of the fitting recess in a direction orthogonal to the radiation direction and provided on the radiation direction side of the fitting recess,
the step of contact includes a step of fitting the second metal member to the fitting recess of the first metal member to form the first channel recess as a channel through which a fluid flows, and
the step of joining by welding includes a step of joining the side surface of the second metal member and the facing side surface of the fitting recess by welding together using the energy beam to seal the channel.

15. The metal member joining method according to claim 3, wherein
the first metal member further includes
a protrusion extending in the radiation direction from the first surface and having a shape with a predetermined thickness, and
a second channel recess that is provided to adjoin the protrusion in a direction orthogonal to the radiation direction and is recessed in the radiation direction,
the step of contact includes a step of covering the second channel recess of the first metal member with a portion of the second metal member other than the slit to form a channel through which a fluid flows, and
the step of joining by welding includes a step of joining the first metal member and the second metal member by welding together using the energy beam to seal the channel.

16. A metal member comprising:
a first metal member including a surface along one direction and having a shape with a predetermined thickness in another direction orthogonal to the one direction;
a second metal member including a slit passing through the second metal member in the other direction and a pair of side surfaces facing each other in a direction orthogonal to both the other direction and a direction in which the slit extends; and
a welded portion disposed so as to fill a space within the slit enclosed by the surface of the first metal member and the pair of side surfaces, and formed by melting and solidifying the first metal member and the second metal member.

17. The metal member according to claim 16, wherein a non-welded portion that is not filled with the welded portion is further formed in the space within the slit.

18. A metal member comprising:
a first metal member having a fitting recess that is recessed in one direction from a surface, and a first channel recess through which a fluid flows and that is provided on the one direction side of the fitting recess;
a second metal member that is fitted to the fitting recess and has a side surface along the one direction;
a welded portion formed by melting and solidifying the side surface of the second metal member and a facing side surface of the fitting recess that faces the side surface of the second metal member; and
a first release space that is provided in a weld overlap region where welding using an energy beam overlaps when the welded portion is formed and through which metal vapor generated along with the welding using the energy beam is released to the first channel recess.

19. The metal member according to claim 18, wherein the first release space is a first cutout formed in the weld overlap region on a bottom surface of the fitting recess of the first metal member.

20. The metal member according to claim 18, wherein the first release space is a second cutout formed in the weld overlap region on the side surface of the second metal member.
